# EUROPÄISCHE PATENTANMELDUNG

(11) **EP 3 409 716 A1**
(43) Veröffentlichungstag der Anmeldung: **05.12.2018**
(21) Anmeldenummer: 18179333.2
(22) Anmeldetag: 14.08.2014
(51) Int. Cl.: C08K 5/3435, C08L 33/26

(54) **ACRYLAMID-POLYMERE UND VERFAHREN ZUR TERTIÄREN ERDÖLFÖRDERUNG UNTER VERWENDUNG DIESER POLYMERE**

(30) Priorität: 22.08.2013 EP 13181338; 15.04.2014 EP 14164734
(62) Teilanmeldung aus: 14752319.5
(71) Anmelder: BASF SE, 67056 Ludwigshafen am Rhein (DE)
(72) Erfinder: Reichenbach-Klinke, Roland, 83278 Traunstein (DE); Schöning, Kai-Uwe, 4104 Oberwil (CH); Rotzinger, Bruno, 2800 Delémont (CH); Langlotz, Björn, 68549 Ilvesheim (DE)
(74) Vertreter: Büchel, Edwin

(57) **Zusammenfassung**

Die vorliegende Anmeldung betrifft ein Acrylamid-Polymer. Zudem betrifft die vorliegende Erfindung dessen Verwendung bei der Erdölförderung. Darüber hinaus betrifft die vorliegende Erfindung ein Verfahren zur Erdölförderung, insbesondere zur tertiären Erdölförderung, wobei eine wässrige Zusammensetzung enthaltend mindestens ein Acrylamid-Polymer P durch mindestens eine Injektionsbohrung in eine unterirdische Formation einpresst und der unterirdische Formation durch mindestens eine Produktionsbohrung Rohöl entnommen wird.

## Beschreibung

Die vorliegende Anmeldung betrifft ein Acrylamid-Polymer. Zudem betrifft die vorliegende Erfindung dessen Verwendung bei der Erdölförderung.

Darüber hinaus betrifft die vorliegende Erfindung ein Verfahren zur Erdölförderung, insbesondere zur tertiären Erdölförderung, wobei eine wässrige Zusammensetzung enthaltend mindestens ein Acrylamid-Polymer P durch mindestens eine Injektionsbohrung in eine unterirdische Formation einpresst und der unterirdische Formation durch mindestens eine Produktionsbohrung Rohöl entnommen wird.

Es ist bekannt, verdickende wasserlösliche Polymere zur tertiären Erdölförderung, insbesondere beim so genannten Polymerfluten, zu verwenden. Weit verbreitet ist der Einsatz von hochmolekularen Acrylamid-Polymeren, bei denen es sich typischerweise um Poly(meth)acrylamid oder um Poly(meth)acrylamid-Copolymere handelt. Beispielsweise können Copolymere von (Meth)acrylamid, Acrylsäure und/oder Sulfonsäuregruppen-umfassenden Monomeren wie AMPS (2-Acrylamido-2-methylpropan-1-sulfonsäure, H₂C=CH-CO-NH-C(CH₃)₂-CH₂-SO₃H) eingesetzt werden. Darüber hinaus ist bekannt, so genannte hydrophob assoziierende Copolymere im Bereich der Erdölförderung, insbesondere zur tertiären Erdölförderung (Enhanced Oil Recovery, EOR) einzusetzen. Diese hydrophob assoziierenden Copolymere sind beispielsweise in WO 2010/133527 beschrieben. Einzelheiten zur Verwendung hydrophob assoziierender Copolymere zur tertiären Erdölförderung sind beispielsweise im Übersichtsartikel von Taylor, K.C. und Nasr-EI-Din, H.A. in J. Petr. Sci. Eng. 1998, 19, 265-280 beschrieben.

Beim Polymerfluten werden verdünnte wässrige Polymerlösungen durch eine Injektionsbohrung in eine erdölführende unterirdische Formation gepresst. Diese Polymerlösungen fließen in den Formationen in Richtung der Produktionsbohrung. Hierbei drücken diese das Erdöl oder Erdgas und gegebenenfalls das Formationswasser in Richtung Produktionsbohrung, so dass ein Gemisch aus Erdöl oder Erdgas und Formationswasser durch die Produktionsbohrung gefördert wird. Verfahren zum Polymerfluten sind beispielsweise in WO 2010/13327 oder WO 2012/069478 beschrieben.

Üblicherweise weisen die beim Polymerfluten verwendeten Acrylamid-Polymere ein hohes Molekulargewicht auf, welches zum Erreichen der gewünschten Verdickungswirkung erforderlich ist. Typischerweise liegt das Molekulargewicht (M_{w}) bei mindestens 10⁶ (1 Mio) g/mol, beispielsweise im Bereich von 1 bis 30 Mio g/mol. Schon ein geringer Polymerabbau verringert bei solch hochmolekularen Polymeren das Molekulargewicht deutlich. Dadurch sinkt in der Regel die Viskosität der Polymerlösung signifikant, was für den Einsatz bei der tertiären Erdölförderung (EOR) äußerst unerwünscht ist.

Der Einsatz von Acrylamid-Polymeren beim Polymerfluten stellt hohe Anforderung an die Stabilität der Polymere. Beim Polymerfluten werden typischerweise wässrige Polymerlösungen über einen Zeitraum von bis zu mehreren Jahren durch die unterirdische Gesteinsformation gepumpt. Die Temperatur in diesen unterirdischen Öllagerstätten deckt einen weiten Bereich ab und ist charakteristisch für die spezifische Lagerstätte, wobei sie in der Regel deutlich höher ist als die Temperatur auf der Erdoberfläche. Um die Stabilität der Acrylamid-Polymere bei der erhöhten Temperatur und über den langen Zeitraum zu gewährleisten, ist normalerweise der Zusatz von verschiedenen Stabilisatoren gegen den schädlichen Einfluss von Licht, Sauerstoff und Hitze notwendig. Insbesondere kommen Sauerstofffänger, Radikalfänger (beispielsweise Thioharnstoff, Mercaptobenzothiazol (MBT) oder Natriumthiocyanat (NaSCN)), Opferreagenzien (z.B. Alkohole wie 2-Propanol, Isopropanol), Fällungsmittel und Komplexierungsmittel zum Einsatz. Die verschiedenen gebräuchlichen Stabilisatoren bei der tertiären Erdölförderung sind z.B. in WO 2010/133258 beschrieben.

Radikalfänger werden häufig in Kombination mit Opferreagenzien verwendet. Zusätzlich zur Verwendung von Radikalfängern und Opferreagenzien ist oftmals zusätzlich der weitgehende Ausschluss von Sauerstoff notwendig, der beispielsweise durch das aufwendige Spülen der Polymerlösung mit Inertgas (wie N₂) und/oder den Zusatz eines Sauerstofffängers (wie beispielsweise Natriumbisulfit oder Hydrazin) erreicht wird.

Es wurde nun überraschend gefunden, dass bei Verwendung von ausgewählten sterisch gehinderten Aminen (HALS-Stabilisatoren), insbesondere der Substanz 1,2,2,6,6-Pentamethyl-4-piperidinol (PMP), als Stabilisator die aufwendige Inertisierung mit Stickstoff und der Zusatz eines Sauerstofffängers nicht nötig sind. Es kann eine vorteilhafte Stabilisierung von Acrylamid-Polymer-Lösungen, z.B. beim Polymerfluten, erreicht werden, d.h. die für das Polymerfluten notwendige hohe Viskosität der Acrylamid-Polymer-Lösungen kann bei erhöhter Temperatur (etwa 80 °C) und über einen langen Zeitraum (insbesondere über mehrere Wochen) aufrechterhalten werden.

Sterisch gehinderte Piperidin-Derivate, wie 2,2,6,6-Tetramethyl-1-piperidin-Derivate und auch die Verbindung 1,2,2,6,6-Pentamethyl-4-piperidinol (PMP) sind als sogenannte HALS-Stabilisatoren (Hindered Amine Light Stabilisator) bekannt und können als UV- bzw. LichtStabilisator verwendet werden. 1,2,2,6,6-Pentamethyl-4-piperidinol (PMP) und Derivate davon sind beispielsweise in Xie et al., Macromolecular Chemistry and Physics (2012), 213(14), 1441-1447 und You et al., Colloids and Surfaces, A: Physicochemical and Engineering Aspects (2011), 392(1), 365-370) beschrieben. Häufig wird PMP als Ausgangsmaterial für die Synthese von UV-Stabilisatoren verwendet, z.B. WO 2005/070987.

WO 2012/157776 A1 offenbart die Verwendung von 2,2,6,6,-Tetramethylpiperidin-1-oxid in Kombination mit Manganionen zur Stabilisierung von wässrigen Acrylamidlösungen, wobei die Polymerisation des Acrylamid verhindert werden soll. CN 102382327 A offenbart die Verwendung von Cyclodextrin modifizierten, sterisch gehinderten Phenolderivaten zur Stabilisierung von Polyacrylamid in Ölfeldanwendungen.

Die vorliegende Erfindung betrifft Zusammensetzung enthaltend mindestens ein Acrylamid-Polymer P und mindestens einen Stabilisator S der Formel (I) 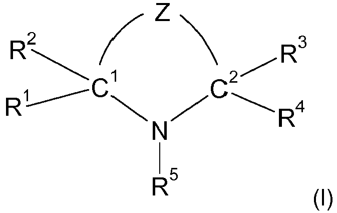 wobei die Reste die folgenden Bedeutungen haben:
- Z: ist ein bivalente Gruppe umfassend 2 bis 5 Atome und/oder Gruppen ausgewählt aus C(R⁶)₂, O, S, N-R' und C=O, wobei die Gruppe Z mit den Kohlenstoffatomen C¹, C² sowie dem Stickstoffatom N einen 5 bis 8-gliedrigen Ring bildet, wobei R' ausgewählt ist aus H, C₁₋₂₀-Alkyl, C₂₋₂₀-Alkenyl, C₆₋₂₀-Aryl, C₇₋₃₂-Arylalkyl, C₁₋₂₀-Hydroxyalkyl, C₁₋₂₀-Aminoalkyl, C₁₋₂₀-Cyanoalkyl, C₁₋₂₀-Haloalkyl, C₁₋₂₀-Sulfoalkyl und C₁₋₂₀-Phosphonoalkyl;
wobei R⁶ unabhängig voneinander ausgewählt ist aus H; OH; CN; C₁₋₂₀-Alkyl; C₂₋₂₀-Alkenyl; C₂₋₂₀-Alkinyl; C₆₋₂₀-Aryl; C₇₋₃₂-Arylalkyl; C₁₋₂₀-Alkoxy; C₁₋₂₀-Hydroxyalkyl; C₁₋₂₀-Aminoalkyl; C₁₋₂₀-Cyanoalkyl; C₁₋₂₀-Haloalkyl; Halogen; C₁₋₂₀-Sulfoalkyl; C₁₋₂₀-Phosphonoalkyl; -(CH₂-CH(R^{a})-O)_{q}-H mit q=1-20 und R^{a}=H oder C₁₋₆-Alkyl; -O-C(=O)R^{b} mit R^{b}= H, C₁₋₂₀-Alkyl, C₂₋₂₀-Alkenyl, C₂₋₂₀-Alkinyl, C₆₋₂₀-Aryl oder C₇₋₃₂-Arylalkyl; -O-C(=O)-(CH₂)ₘ-C(=O)-O-R^{c}; -O-C(=O)-Y-C(=O)-O-R^{c}, wobei m=1-10, R^{c}= H, C₁₋₂₀-Alkyl, C₂₋₂₀-Alkenyl, C₂₋₂₀-Alkinyl, C₆₋₂₀-Aryl, C₇₋₃₂-Arylalkyl oder 1,2,2,6,6-Pentamethyl-piperidin-4-yl und Y eine C₂₋₁₀-Alkenylengruppe ist; -O-R^{d} mit R^{d} = C₂₋₂₀-Alkenyl, C₂₋₂₀-Alkinyl, C₆₋₂₀-Aryl, C₇₋₃₂-Arylalkyl oder 1,2,2,6,6-Pentamethyl-piperidin-4-yl; -NR^{x}R^{y}, -N(R^{x})-C(=O)R^{y}; -N(R^{x})-C(=O)-Y-C(=O)-O-R^{y}; -N(R^{x})-(CH₂)ᵣ-NR^{y}R^{z}, wobei R^{x}, R^{y} und R^{z} unabhängig voneinander H, C₁₋₂₀-Alkyl, C₂₋₂₀-Alkenyl, C₂₋₂₀-Alkinyl, C₆₋₂₀-Aryl, C₇₋₃₂-Arylalkyl, C₁₋₂₀-Hydroxyalkyl, C₁₋₂₀-Aminoalkyl oder 1,2,2,6,6-Pentamethyl-piperidin-4-yl sind, r=1-10 und Y eine C₂₋₁₀-Alkenylengruppe ist; -(O-CH₂-CH(R^{e})-(CH₂)ᵢ)ₚ-O-R^{e'} mit p=1-20, i=0 oder 1, R^{e}=H, OH oder C₁₋₆-Alkyl und R^{e'}=H oder C₁₋₈-Alkyl; -S-R^{f}; -S-S-R^{f} mit R^{f}= H, C₁₋₂₀-Alkyl, C₂₋₂₀-Alkenyl, C₆₋₂₀-Aryl oder C₇₋₃₂-Arylalkyl; oder wobei zwei Reste R⁶ zusammen mit dem Kohlenstoffatom, an das sie gebunden sind, einen Ring -C-(O-CH₂-CH₂-O)-, -C-(O-CH₂-CH₂-CH₂-O)-, -C-(O-C(CH₃)₂-C(CH₃)₂-O)- oder -C-(NH-C(=O)-NH-C(=O))- bilden;
- R¹, R², R³ und R⁴: sind unabhängig voneinander ausgewählt aus C₁₋₂₀-Alkyl, C₂₋₂₀-Alkenyl, C₆₋₂₀-Aryl, C₇₋₃₂-Arylalkyl, C₁₋₂₀-Alkoxy, C₁₋₂₀-Hydroxyalkyl, C₁₋₂₀-Aminoalkyl oder C₁₋₂₀-Haloalkyl;
oder die Reste R¹ und R² zusammen mit C¹ oder die Reste R³ und R⁴ zusammen mit C² bilden einen Ring, der 5 bis 7 Kohlenstoffatome umfasst und der optional durch eine oder mehrere Gruppen R⁶ substituiert sein kann;
- R⁵: ist H; C₁₋₂₀-Alkyl; C₂₋₂₀-Alkenyl; C₂₋₂₀-Alkinyl; C₆₋₂₀-Aryl; C₇₋₃₂-Arylalkyl; C₁₋₂₀-Alkoxy; C₄₋₈-Cycloalkoxy; C₁₋₂₀-Hydroxyalkyl; C₁₋₂₀-Aminoalkyl; C₁₋₂₀-Cyanoalkyl; C₁₋₂₀-Haloalkyl; C₁₋₂₀-Sulfoalkyl; C₁₋₂₀-Phosphonoalkyl; -(CH₂-CH(R^{a})-O)_{q}-H mit q=1-20 und R^{a}=H oder C₁₋₆-Alkyl; -O-C(=O)R^{b} mit R^{b}= H, C₁₋₂₀-Alkyl, C₂₋₂₀-Alkenyl, C₂₋₂₀-Alkinyl, C₆₋₂₀-Aryl oder C₇₋₃₂-Arylalkyl; -O-C(=O)-(CH₂)ₘ-C(=O)-O-R^{c}; -O-C(=O)-Y-C(=O)-O-R^{c}, wobei m=1-10, R^{c}= H, C₁₋₂₀-Alkyl, C₂₋₂₀-Alkenyl, C₂₋₂₀-Alkinyl, C₆₋₂₀-Aryl, C₇₋₃₂-Arylalkyl oder 1,2,2,6,6-Pentamethyl-piperidin-4-yl und Y eine C₂₋₁₀-Alkenylengruppe ist; -O-R^{d} mit R^{d} = C₂₋₂₀-Alkenyl, C₂₋₂₀-Alkinyl, C₆₋₂₀-Aryl, C₇₋₃₂-Arylalkyl oder 1,2,2,6,6-Pentamethyl-piperidin-4-yl; -(O-CH₂-CH(R^{e})-(CH₂)ᵢ)ₚ-O-R^{e'} mit p=1-20, i=0 oder 1, R^{e}=H, OH oder C₁₋₆-Alkyl und R^{e'}=H oder C₁₋₈-Alkyl;-C(=O)-R^{h} mit R^{h}= H, C₁₋₂₀-Alkyl, C₂₋₂₀-Alkenyl, C₆₋₂₀-Aryl oder C₇₋₂₀-Arylalkyl; 2,2,6,6-Tetramethyl-4-piperidinol-1-yl-alkyl oder 4-(2,2,6,6-Tetramethyl-4-piperidinol-1-yl-alkyl)benzyl.

Im Sinne der vorliegenden Erfindung sind die genannten Reste wie folgt definiert:
Alkyl bezeichnet einen univalenten Rest bestehend aus einer linearen, verzweigten oder cyclischen Kohlenwasserstoffgruppe, bevorzugt aus einer linearen oder verzweigten Kohlenwasserstoffkette, insbesondere umfassend 1 bis 20 Kohlenstoffatome, bevorzugt 1 bis 18 Kohlenstoffatome, besonders bevorzugt 1 bis 12 Kohlenstoffatome. Beispielsweise kann es sich bei dem Alkylrest um Methyl, Ethyl, n-Propyl oder iso-Propyl handeln.

Alkenyl bezeichnet einen univalenten Rest bestehend aus einer linearen oder verzweigten Kohlenwasserstoffkette, insbesondere umfassend 2 bis 20 Kohlenstoffatome, bevorzugt 2 bis 18 Kohlenstoffatome, besonders bevorzugt 2 bis 12 Kohlenstoffatome, welche eine oder mehrere C-C Doppelbindungen umfasst, wobei die C-C-Doppelbindungen innerhalb der Kohlenwasserstoffkette oder am Ende der Kohlenwasserstoffkette (endständig C=C-Doppelbindung) auftreten können. Beispielsweise kann es sich bei einem Alkenyl-Rest um einen Allyl-Rest handeln.

Alkinyl bezeichnet einen univalenten Rest bestehend aus einer linearen oder verzweigten Kohlenwasserstoffkette, insbesondere umfassend 2 bis 20 Kohlenstoffatome, bevorzugt 2 bis 18 Kohlenstoffatome, besonders bevorzugt 2 bis 12 Kohlenstoffatome, welche eine oder mehrere C-C-Dreifachbindungen umfasst, wobei die C-C-Dreifachbindungen innerhalb der Kohlenwasserstoffkette oder am Ende der Kohlenwasserstoffkette (endständig C-C-Dreifachbindung) auftreten können. Beispielsweise kann es sich bei einem Alkinyl-Rest um einen Ethinyl-Rest handeln.

Aryl bezeichnet eine substituierte oder unsubstituierte aromatische Kohlenwasserstoff-Gruppe, insbesondere umfassend 6 bis 20 Kohlenstoffatome. Beispielsweise kann es sich bei dem Arylrest um eine Phenylgruppe handeln.

Arylalkyl bezeichnet einen univalenten Rest abgeleitet von einem linearen oder verzweigten Alkylrest, insbesondere umfassend 1 bis 20 Kohlenstoffatome, bevorzugt 2 bis 18 Kohlenstoffatome, besonders bevorzugt 2 bis 12 Kohlenstoffatome, durch den Austausch eines oder mehrerer Wasserstoffatome durch eine Arylgruppe, wobei die Arylgruppe eine substituierte oder unsubstituierte aromatische Kohlenwasserstoff-Gruppe, insbesondere umfassend 6 bis 14 Kohlenstoffatome, ist. Beispielsweise kann es sich bei der aromatische Kohlenwasserstoff-Gruppe um Phenyl handeln; beispielsweise kann es sich bei dem Arylalkyl-Rest um einen Benzyl-Rest handeln.

Alkyloxy bezeichnet einen univalenten Rest -O-R^{Alkyl} wobei R^{Alkyl} ein linearen oder verzweigten Alkylrest, insbesondere umfassend 2 bis 20 Kohlenstoffatome, bevorzugt 2 bis 18 Kohlenstoffatome, besonders bevorzugt 2 bis 12 Kohlenstoffatome, ist. Cycloalkoxy bezeichnet einen univalenten Rest -O-R^{Cycloalkyl} wobei R^{Cycloalkyl} ein gesättigte cyclische Kohlenwasserstoffgruppe, insbesondere umfassend 4 bis 8 Kohlenstoffatome, ist.

Aminoalkyl bezeichnet einen univalenten Rest abgeleitet von einem linearen oder verzweigten Alkylrest, insbesondere umfassend 1 bis 20 Kohlenstoffatome, bevorzugt 2 bis 18 Kohlenstoffatome, besonders bevorzugt 2 bis 12 Kohlenstoffatome, durch den Austausch eines oder mehrerer Wasserstoffatome durch eine Aminogruppe wobei es sich bei der Aminogruppe um eine primäre, sekundäre oder tertiäre Aminogruppe handeln kann. Beispielsweise kann es sich bei der Aminogruppe um eine Gruppe ausgewählt aus -NH₂; -NH(CH₃)₂ und -N(CH₃)₂ handeln.

Cyanoalkyl bezeichnet einen univalenter Rest abgeleitet von einem linearen oder verzweigten Alkylrest, insbesondere umfassend 2 bis 20 Kohlenstoffatome, bevorzugt 2 bis 18 Kohlenstoffatome, besonders bevorzugt 2 bis 12 Kohlenstoffatome, durch den Austausch eines oder mehrerer Wasserstoffatome durch eine Cyanogruppe (-CN).

Sulfoalkyl bezeichnet einen univalenten Rest abgeleitet von einem linearen oder verzweigten Alkylrest, insbesondere umfassend 1 bis 20 Kohlenstoffatome, bevorzugt 2 bis 18 Kohlenstoffatome, besonders bevorzugt 2 bis 12 Kohlenstoffatome, durch den Austausch eines oder mehrerer Wasserstoffatome durch Sulfonsäuregruppen (-SO₃H) und/oder deren Salze (SO₃⁻) und/oder deren Ester (-S(=O)₂ ORⁱ mit Rⁱ=Alkyl, Alkenyl, Aryl oder Arylalkyl. Insbesondere bezeichnet Sulfoalkyl eine Gruppe -A-S(=O)₂-O-Rⁱⁱ, wobei A eine lineare oder verzweigte C₁₋₁₀ Alkylengruppe ist und Rⁱⁱ = Wasserstoff, ein Metallsalz, C₁₋₁₈-Alkyl, C₂₋₁₈-Alkenyl, C₆₋₂₀-Aryl oder C₇₋₃₂-Arylalkyl, insbesondere C₁₋₁₈-Alkyl, bevorzugt C₁₋₁₀-Alkyl.

Phosphonoalkyl bezeichnet einen univalenten Rest abgeleitet von einem linearen oder verzweigten Alkylrest, insbesondere umfassend 1 bis 20 Kohlenstoffatome, bevorzugt 2 bis 18 Kohlenstoffatome, besonders bevorzugt 2 bis 12 Kohlenstoffatome, durch den Austausch eines oder mehrerer Wasserstoffatome durch Phosphonsäuregruppen (-PO(OH)₂) und/oder deren Salze (-PO(O⁻)₂) und/oder deren Ester (-PO(ORⁱ)₂ mit Rⁱ=Alkyl, Alkenyl, Aryl oder Arylalkyl. Insbesondere bezeichnet Phosphonoalkyl eine Gruppe -A-P(=O)(ORⁱⁱ)₂, wobei A eine lineare oder verzweigte C₁₋₁₀ Alkylengruppe ist und Rⁱⁱ = Wasserstoff, ein Metallsalz, C₁₋₁₈-Alkyl, C₂₋₁₈-Alkenyl, C₆₋₂₀-Aryl oder C₇₋₃₂-Arylalkyl, insbesondere C₁₋₁₈-Alkyl, bevorzugt C₁₋₁₀-Alkyl.

Haloalkyl bezeichnet einen univalenten Rest abgeleitet von einem linearen oder verzweigten Alkylrest, insbesondere umfassend 2 bis 20 Kohlenstoffatome, bevorzugt 2 bis 18 Kohlenstoffatome, besonders bevorzugt 2 bis 12 Kohlenstoffatome, durch den Austausch eines oder mehrerer Wasserstoffatome durch eine Halogenatom (-F, -Cl, -Br, -I, insbesondere Cl). Halogen bezeichnet einen Substituenten ausgewählt aus Fluorid, Chlorid, Bromid oder lodid, insbesondere Chlorid.

Hydroxyalkyl bezeichnet einen univalenten Rest abgeleitet von einem von einem linearen oder verzweigten Alkylrest, insbesondere umfassend 2 bis 20 Kohlenstoffatome, bevorzugt 2 bis 18 Kohlenstoffatome, besonders bevorzugt 2 bis 12 Kohlenstoffatome, durch den Austausch eines oder mehrerer Wasserstoffatome durch eine Hydroxygruppe (-OH). Bevorzugt kann es sich bei der Hydroxyalkl-Gruppe um eine Gruppe -CH₂-CH(R^{a})-OH, mit R^{a}=H oder C₁₋₁₂-Alkyl handeln.

### Acrylamid-Polymer:

Ein Acrylamid-Polymer im Sinne der vorliegenden Erfindung ist ein Polymer (Homopolymer oder Copolymer) umfassend mindestens ein (Meth)acrylamid. Im Sinne der vorliegenden Anmeldung soll die Schreibweise (Meth)acrylamid Acrylamid und/oder Methacrylamid umfassen. Insbesondere bezeichnet "Acrylamid-Polymer" bzw. "Acrylamid-Polymer P" im Sinne der vorliegenden Erfindung ein Polymer umfassend mindestens 10 Gew.-%, bevorzugt mindestens 15 Gew.-% und insbesondere bevorzugt mehr als 45 Gew.-%, besonders bevorzugt mehr als 60 Gew.-% (Meth)acrylamid, bezogen auf die Gesamtmenge aller Monomere in Acrylamid-Polymer P. Im Sinne der vorliegenden Erfindung ist unter einem Polymer umfassend oder enthaltend ein Monomer ein Polymer zu verstehen, welches eine Monomereinheit (einpolymerisiert in der Polymerkette) basierend auf dem besagten Monomer umfasst oder enthält. Dem Fachmann ist bewusst, dass im Sinne der Erfindung mit dieser Formulierung nicht ein Anteil an nicht reagierten Restmonomer beschrieben wird.

In einer Ausführungsform der Erfindung kann als Acrylamid-Polymer P ein Polymer enthaltend (oder bestehend im Wesentlichen aus) (Meth)acrylamid eingesetzt werden.

Weiterhin kann als Acrylamid-Polymer P ein Copolymer enthaltend (oder bestehend aus) (Meth)acrylamid und mindestens ein weiteres Monomers eingesetzt werden. Insbesondere handelt es sich bei dem Acrylamid-Polymer P um ein Copolymer, welches neben (Meth)acrylamid als weiteres Monomer ein anionisches Monomer (saures Monomer) enthält, insbesondere ausgewählt aus Acrylsäure, Vinylsulfonsäure und Acrylamidomethylpropansulfonsäure. Als weitere Monomere können auch Dimethylacrylamid oder Monomere umfassend kationische Gruppen eingesetzt werden.

In einer bevorzugten Ausführungsform handelt es sich bei dem Acrylamid-Polymer P um ein Copolymer umfassend (Meth)acrylamid und mindestens ein anionisches, monoethylenisch ungesättigtes, hydrophiles Monomer (Monomer (b)). Insbesondere handelt es sich bei dem Acrylamid-Polymer P um ein Copolymer, welches (Meth)acrylamid und mindestens ein anionisches, monoethylenisch ungesättigtes, hydrophiles Monomer (Monomer (b)) umfassend mindestens eine saure Gruppe ausgewählt aus der Gruppe von -COOH, -SO₃H oder -PO₃H₂ bzw. deren Salze umfasst. Insbesondere bevorzugt handelt es sich bei dem Acrylamid-Polymer P um ein Copolymer umfassend (oder bestehend im Wesentlichen aus) (Meth)acrylamid und Acrylsäure und/oder AMPS (2-Acrylamido-2-methylpropan-1-sulfonsäure, H₂C=CH-CO-NH-C(CH₃)₂-CH₂-S0₃H)

Typischerweise handelt es sich bei dem Acrylamid-Polymer P um ein Copolymer umfassend neben (Meth)acrylamid mindestens eines der folgenden Monomere:
(a) mindestens ein monoethylenisch ungesättigtes, hydrophob assoziierendes Monomer (Monomer (a));
(b) mindestens ein monoethylenisch ungesättigtes, hydrophiles Monomer (Monomer (b)); ausgewählt aus
(b1) neutralen, monethylenisch ungesättigten, hydrophilen Monomeren (b1), insbesondere ausgewählt aus der Gruppe von N-Methyl(meth)acrylamid, N,N'-Dimethyl(meth)acrylamid oder N-Methylol(meth)acrylamid;
(b2) anionischen, monoethylenisch ungesättigten, hydrophilen Monomeren (b2), welche mindestens eine saure Gruppe ausgewählt aus -COOH, -SO₃H und -PO₃H₂ bzw. deren Salze umfassen;
(b3) kationischen, monoethylenisch ungesättigten, hydrophilen Monomeren (b3) welche Ammoniumionen umfassen; beispielsweise Ammoniumderivate von N-(ω-Aminoalkyl)(meth)acryl-amiden oder ω-Aminoalkyl(meth)acrylestern, z.B. 3-Trimethylammoniumpropylacrylamidchlorid (DIMAPAQUAT), 2-Trimethylammoniumethylmethacrylatchlorid (MADAME-QUAT) und quaternisiertes Dimethylaminoethylacrylat, (H₂C=CH-CO-0-CH₂CH₂N(CH₃)₃⁺ Cl), (DMA3Q);
(b4) monethylenisch ungesättigten, hydrophilen Monomeren (b4), welche Hydroxy- und/oder Ethergruppen umfassen, beispielsweise Hydroxyethyl(meth)acrylat, Hydroxypropyl(meth)acrylat, Allylalkohol, Hydroxyvinylethylether, Hydroxyvinylpropylether oder Hydroxyvinylbutylether;
(c) mindestens ein monoethylenisch ungesättigtes, hydrophobes Monomer (Monomer (c)); insbesondere ausgewählt aus N-Alkyl- und N,N,'-Dialkyl(meth)acrylamide, wobei die Anzahl der Kohlenstoffatome in den Alkylresten zusammen mindestens 3, bevorzugt mindestens 4 beträgt, beispielsweise N-Butyl(meth)acrylamid, N-Cyclohexyl(meth)acrylamid oder N-Benzyl(meth)acrylamid;
(d) mindestens ein Monomer (d), welches einen Stabilisator S der Formel (I) darstellt, welcher mindestens eine ungesättigte Bindung (C-C-Doppelbindung und/oder C-C-Dreifachbindung) umfasst.

Die Monomere (a), (b1), (b2), (b3), (b4), (c) und (d) werden im Folgenden näher beschrieben.

Bevorzugt handelt es sich bei dem Acrylamid-Polymer P um hydrophob assoziierende Acrylamid-Copolymere wie in WO 2010/133527 und WO 2012/069478 beschrieben. Bevorzugt können auch Acrylamid-Copolymere umfassend kationische Gruppen wie in US 7,700,702 beschrieben eingesetzt werden.

### Monomer (a):

Das Acrylamid-Polymer P (bzw. Acrylamid-Copolymer) kann bevorzugt ein hydrophob assoziierendes Copolymer sein, welches neben (Meth)acrylamid mindestens ein monoethylenisch ungesättigtes Monomer (a) umfasst, welches dem Acrylamid-Copolymer hydrophob assoziierende Eigenschaften verleiht und daher im Folgenden als hydrophob assoziierendes Monomer bezeichnet wird. Bei den hydrophob assoziierenden Acrylamid-Copolymeren handelt es sich um wasserlösliche Copolymere, welche hydrophobe Gruppen aufweisen. In wässriger Lösung können die hydrophoben Gruppen mit sich selbst oder mit anderen hydrophobe Gruppen aufweisenden Stoffen assoziieren und verdicken durch diese Wechselwirkung das wässrige Medium.

Dem Fachmann ist bekannt, dass die Löslichkeit hydrophob assoziierender Copolymere in Wasser je nach der Art der verwendeten Monomere mehr oder weniger stark vom pH-Wert abhängig sein kann. Bezugspunkt für die Beurteilung der Wasserlöslichkeit soll daher jeweils der für den jeweiligen Einsatzzweck des Copolymers gewünschte pH-Wert sein. Im Idealfalle sollten die hydrophob assoziierenden Copolymere in beliebigem Verhältnis mit Wasser mischbar sein. Typischerweise ist es aber ausreichend, wenn die Copolymere zumindest bei der gewünschten Einsatzkonzentration und beim gewünschten pH wasserlöslich sind. Im Regelfalle sollte die Löslichkeit in Wasser bei Raumtemperatur mindestens 20 g/l, bevorzugt mindestens 50 g/l und besonders bevorzugt mindestens 100 g/l betragen. Der Begriff "wasserlöslich" umfasst insbesondere auch alkalilösliche Dispersionen von Polymeren, d.h. Polymere, welche im sauren pH-Bereich als Dispersionen vorliegen und sich erst im alkalischen pH-Bereich in Wasser lösen und ihre verdickende Wirkung entfalten.

Geeignete Monomere (a) weisen insbesondere die allgemeine Formel H₂C=C(R^{P1})-Y^{P}-Z^{P} auf, wobei R^{1P} für H oder Methyl, Z^{P} für eine terminale hydrophobe Gruppe und Y^{P} für eine verknüpfende hydrophile Gruppe steht. In einer bevorzugten Ausführungsform der Erfindung handelt es sich bei der hydrophoben Gruppe Z^{P} um aliphatische und/oder aromatische, geradkettige oder verzweigte C₈₋₃₂-Kohlenwasserstoffreste, bevorzugt C₁₂₋₃₀-Kohlenwasserstoffreste. In einer weiteren bevorzugten Ausführungsform kann es sich bei der Gruppe Z^{P} um eine Gruppe aus Alkylenoxideinheiten mit mindestens 3 Kohlenstoffatomen, bevorzugt mindestens 4 und besonders bevorzugt mindestens 5 Kohlenstoffatomen, handeln. Bei der Gruppe Y^{P} handelt es sich bevorzugt um eine Alkylenoxideinheiten umfassende Gruppe, beispielsweise eine 5 bis 150 Alkylenoxideinheiten umfassende Gruppe, welche auf geeignete Art und Weise, beispielsweise mittels einer Einfachbindung oder einer geeigneten verknüpfenden Gruppe mit der H₂C=C(R^{P1})-Gruppe verbunden ist, wobei zumindest 50 mol %, bevorzugt mindestens 90 mol % Ethylenoxideinheiten eingesetzt werden.

Bevorzugt handelt es sich bei mindestens einem der monoethylenisch ungesättigten wasserlöslichen Monomere (a) um mindestens eines ausgewählt aus der Gruppe von

H₂C=C(R^{1P})-R^{2P}-O-(-CH₂-CH(R^{3P})-O-)ₖ-(-CH₂-CH(R^{4P})-O-)ₗ-R^{5P} (IP),

H₂C=C(R^{1P})-O-(-CH₂-CH(R^{3P})-O-)ₖ-R^{6P} (IIP),

H₂C=C(R^{1P})-(C=O)-O-(-CH₂-CH(R^{3P})-O-)ₖ-R^{6P} (IIIP).

### Monomer (a) der Formel (IP):

Bevorzugt handelt es sich bei dem Monomer (a) um ein Monomer der allgemeinen Formel (IP).

Bei den Monomeren (a) der Formel (IP) ist eine ethylenische Gruppe H₂C=C(R^{1P})- über eine zweiwertige, verknüpfende Gruppe -R^{2P}-O- mit einem Polyoxyalkylenrest mit Blockstruktur -(-CH₂-CH(R^{3P})-O-)ₖ-(-CH₂-CH(R^{4P})-_{O}-)ₗ-R^{5P} verbunden, wobei die beiden Blöcke -(-CH₂-CH(R^{3P})-O-)ₖ und -(-CH₂-CH(R^{4P})-O-)ₗ in der in Formel (I) dargestellten Reihenfolge angeordnet sind. Der Polyoxyalkylenrest weist entweder eine terminale OH-Gruppe oder eine terminale Ethergruppe -OR^{5P} auf.

In der oben genannten Formel steht R^{1P} für H oder eine Methylgruppe.

R^{2P} steht für eine Einfachbindung oder eine zweiwertige, verknüpfende Gruppe, ausgewählt aus der Gruppe bestehend aus -(CₙH₂ₙ)-[Gruppe R^{2aP}], -O-(C_{n'}H_{2n'})-[Gruppe R^{2bP}]- und -C(O)-O-(C_{n"}H_{2n'}')-[Gruppe R^{2cP}]. In den genannten Formeln steht n jeweils für eine natürliche Zahl von 1 bis 6, n' und n" jeweils für eine natürliche Zahl von 2 bis 6. Mit anderen Worten gesagt handelt es sich bei der verknüpfenden Gruppe um geradkettige oder verzweigte aliphatische Kohlenwasserstoffgruppen mit 1 bis 6 bzw. 2 bis 6 Kohlenwasserstoffatomen, welche entweder direkt, über eine Ethergruppe -O- oder über eine Esterguppe -C(O)-O- mit der ethylenischen Gruppe H₂C=C(R^{1P})- verknüpft sind. Bevorzugt handelt es sich bei den Gruppen -(CₙH₂ₙ)-,-(C_{n'}H_{2n'})- und -(C_{n"}H_{2n"})- um lineare aliphatische Kohlenwasserstoffgruppen.

Bevorzugt handelt es sich bei der Gruppe R^{2aP} um eine Gruppe ausgewählt aus -CH₂-, -CH₂-CH₂- und -CH₂-CH₂-CH₂-, besonders bevorzugt ist eine Methylengruppe -CH₂-.

Bevorzugt handelt es sich bei der Gruppe R^{2bP} um eine Gruppe ausgewählt aus -O-CH₂-CH₂-,-O-CH₂-CH₂-CH₂- und -O-CH₂-CH₂-CH₂-CH₂-, besonders bevorzugt ist -O-CH₂-CH₂-CH₂-CH₂-.

Bevorzugt handelt es sich bei der Gruppe R^{2cP} um eine Gruppe ausgewählt aus -C(O)-O-CH₂-CH₂-, -C(O)O-CH(CH₃)-CH₂-, -C(O)O-CH₂-CH(CH₃)-, -C(O)O-CH₂-CH₂-CH₂-CH₂- und -C(O)O-CH₂-CH₂-CH₂-CH₂-CH₂-CH₂-, besonders bevorzugt sind -C(O)-O-CH₂-CH₂- und-C(O)O-CH₂-CH₂-CH₂-CH₂- und ganz besonders bevorzugt ist -C(O)-O-CH₂-CH₂-.

Besonders bevorzugt handelt es sich bei der Gruppe R^{2P} um eine Gruppe R^{2aP} oder R^{2bP}, besonders bevorzugt um eine Gruppe R^{2bP}.

Weiterhin besonders bevorzugt handelt es sich bei R^{2P} um eine Gruppe ausgewählt aus -CH₂- oder -O-CH₂-CH₂-CH₂-CH₂-, ganz besonders bevorzugt ist -O-CH₂-CH₂-CH₂-CH₂-.

Die Monomere (I) weisen weiterhin einen Polyoxyalkylenrest auf, der aus den Einheiten -(-CH₂-CH(R^{3P})-O-)ₖ und -(-CH₂-CH(R^{4P})-O-)ₗ besteht, wobei die Einheiten in Blockstruktur in der in Formel (I) dargestellten Reihenfolge angeordnet sind. Der Übergang zwischen den beiden Blöcken kann abrupt oder auch kontinuierlich erfolgen.

Im Block -(-CH₂-CH(R^{3P})-O-)ₖ stehen die Reste R^{3P} unabhängig voneinander für H, Methyl oder Ethyl, bevorzugt H oder Methyl mit der Maßgabe, dass es sich bei mindestens 50 mol % der Reste R^{3P} um H handelt. Bevorzugt handelt es sich bei mindestens 75 mol % der Reste R^{3P} um H, besonders bevorzugt bei mindestens 90 mol % und ganz besonders bevorzugt ausschließlich um H. Bei dem genannten Block handelt es sich also um einen Polyoxyethylenblock, der optional noch gewisse Anteile Propylenoxid- und/oder Butylenoxideinheiten aufweisen kann, bevorzugt um einen reinen Polyoxyethylenblock.

Bei der Anzahl der Alkylenoxideinheiten k handelt es sich um eine Zahl von 10 bis 150, bevorzugt 12 bis 100, besonders bevorzugt 15 bis 80, ganz besonders bevorzugt 20 bis 30 und beispielsweise ca. 22 bis 25. Für den Fachmann auf dem Gebiet der Polyalkylenoxide ist klar, dass es sich bei den genannten Zahlen um Mittelwerte von Verteilungen handelt.

Beim dem zweiten, terminalen Block -(-CH₂-CH(R^{4P})-O-)_{I}- stehen die Reste R^{4P} unabhängig voneinander für Kohlenwasserstoffstoffreste von mindestens 2 Kohlenstoffatomen steht, bevorzugt mindestens 3 und besonders bevorzugt 3 bis 10 Kohlenstoffatomen. Es kann sich hierbei um einen aliphatischen und/oder aromatischen, linearen oder verzweigten Kohlenwasserstoffrest handeln. Bevorzugt handelt es sich um aliphatische Reste.

Beispiele geeigneter Reste R^{4P} umfassen Ethyl, n-Propyl, n-Butyl, n-Pentyl, n-Hexyl, n-Heptyl, n-Octyl, n-Nonyl oder n-Decyl sowie Phenyl. Beispiele bevorzugter Reste umfassen n-Propyl, n-Butyl, n-Pentyl und besonders bevorzugt ist ein n-Propylrest.

Bei den Resten R^{4P} kann es sich weiterhin um Ethergruppen der allgemeinen Formel -CH₂-O-R^{4P'} handeln, wobei es sich bei R^{4P'} um einen aliphatischen und/oder aromatischen, linearen oder verzweigten Kohlenwasserstoffrest mit mindestens 2 Kohlenstoffatomen, bevorzugt mindestens 3 und besonders bevorzugt 3 bis 10 Kohlenstoffatomen handelt. Beispiele für Reste R^{4P'} umfassen n-Propyl, n-Butyl, n-Pentyl, n-Hexyl, 2-Ethylhexyl, n-Heptyl, n-Octyl, n-Nonyl, n-Decyl oder Phenyl.

Bei dem Block -(-CH₂-CH(R^{4P})-O-)_{I}- handelt es sich also um einen Block, der aus Alkylenoxideinheiten mit mindestens 4 Kohlenstoffatomen, bevorzugt mindestens 5 Kohlenstoffatomen und/oder Glycidylethern mit einer Ethergruppe von mindestens 2, bevorzugt mindestens 3 Kohlenstoffatomen besteht. Bevorzugt als Reste R^{4P} sind die genannten Kohlenwasserstoffreste; bei den Bausteinen des zweiten terminalen Block handelt es sich besonders bevorzugt um mindestens 5 Kohlenstoffatome umfassende Alkylenoxideinheiten, wie Pentenoxideinheiten oder Einheiten höherer Alkylenoxide.

Bei der Anzahl der Alkylenoxideinheiten I handelt es sich um eine Zahl von 5 bis 25, bevorzugt 6 bis 20, besonders bevorzugt 8 bis 18, ganz besonders bevorzugt 10 bis 15 und beispielsweise ungefähr 12.

Bei dem Rest R^{5P} handelt es sich um H oder einen bevorzugt aliphatischen Kohlenwasserstoffrest mit 1 bis 30 C-Atomen, bevorzugt 1 bis 10 und besonders bevorzugt 1 bis 5 C-Atomen. Bevorzugt handelt es sich bei R^{5P} um H, Methyl oder Ethyl, besonders bevorzugt um H oder Methyl und ganz besonders bevorzugt um H.

Bei den Monomeren der Formel (I) ist also eine terminale, monoethylenische Gruppe mit einer Polyoxyalkylengruppe mit Blockstruktur verknüpft, und zwar zunächst mit einem hydrophilen, Polyethylenoxideinheiten aufweisenden Block und dieser wiederum mit einem zweiten terminalen, hydrophoben Block, welcher mindestens aus Butenoxideinheiten, bevorzugt mindestens Pentenoxideinheiten oder Einheiten höherer Alkylenoxide wie beispielsweise Dodecenoxid aufgebaut ist. Der zweite Block weist eine terminale -OR^{5P}-Guppe, insbesondere eine OH-Gruppe auf. Die Endgruppe muss nicht mit einem Kohlenwasserstoffrest zum hydrophoben Assoziieren verethert sein, sondern der terminale Block -(-CH₂-CH(R^{4P})-O-)ₗ selbst mit den Resten R^{4P} ist für das hydrophobe Assoziieren der unter Verwendung der Monomere (a) hergestellten Copolymere verantwortlich. Das Verethern ist nur eine Option, welche vom Fachmann je nach den gewünschten Eigenschaften des Copolymers ausgewählt werden kann.

Für den Fachmann auf dem Gebiet von Polyalkylenoxid-Blockcopolymeren ist klar, dass der Übergang zwischen den beiden Blöcken je nach der Art der Herstellung abrupt oder auch kontinuierlich erfolgen kann. Bei einem kontinuierlichen Übergang befindet sich zwischen den beiden Blöcken noch eine Übergangzone, welche Monomere beider Blöcke umfasst. Wenn man die Blockgrenze auf die Mitte der Übergangzone festlegt, kann dem entsprechend der erste Block-(-CH₂-CH(R^{3P})-O-)ₖ noch geringe Mengen an Einheiten -CH₂-CH(R^{4P})-O- und der zweite Block-(-CH₂-CH(R^{4P})-O-)ₗ-geringe Mengen an Einheiten -CH₂-CH(R^{P3})-O- aufweisen, wobei diese Einheiten aber nicht statistisch über den Block verteilt sind, sondern in der genannten Übergangszone angeordnet sind.

Bevorzugt betrifft die Erfindung eine Zusammensetzung wie oben beschrieben, wobei es sich bei dem mindestens einen Acrylamid-Polymer P um ein Copolymer handelt, welches (Meth)acrylamid und mindestens ein monoethylenisch ungesättigtes, hydrophob assoziierendes Monomer (a) umfasst, wobei das Monomer (a) die folgende Struktur (IP) aufweist

H₂C=C(R^{1P})-R^{2P}-O-(-CH₂-CH(R^{3P})-O-)ₖ-(-CH₂-CH(R^{4P})-O-)ₗ-R^{5P} (IP),

mit
R^{1P} ist H oder eine Methylgruppe;
R^{2P} ist eine Einfachbindung oder eine zweiwertige, verknüpfende Gruppe, ausgewählt aus der Gruppe bestehend aus -(CₙH₂ₙ)-, -O-(C_{n'}H_{2n'})- und -C(O)-O-(C_{n"}H_{2n"})-, wobei n eine natürliche Zahl von 1 bis 6 ist und n' und n" jeweils eine natürliche Zahl von 2 bis 6 sind;
R^{3P} ist unabhängig voneinander H, Methyl oder Ethyl;
R^{4P} ist unabhängig voneinander ein Kohlenwasserstoffstoffrest von mindestens 2 Kohlenstoffatomen;
R^{5P} ist H oder einen Kohlenwasserstoffrest mit 1 bis 30 C-Atomen;
k ist eine Zahl von 10 bis 150;
I ist eine Zahl von 5 bis 25.

Für die Reste und Indices gelten die oben genannten bevorzugten Ausführungsformen.

Die hydrophob assoziierenden Monomere (a) der Formeln (I), Acrylamid-Copolymere umfassend diese Monomere (a) und deren Herstellung sind dem Fachmann prinzipiell bekannt, beispielsweise aus WO2010/133527 und WO2012/069478.

### Monomere (a) der Formeln (IIP) und (IIIP):

Bei den Monomeren der Formeln (IIP) und (IIIP) haben R^{1P}, R^{3P} und k die bereits geschilderte Bedeutungen.

R^{6P} steht für einen aliphatischen und/oder aromatischen, geradkettigen oder verzweigten Kohlenwasserstoffrest mit 8 bis 40 Kohlenstoffatomen, bevorzugt 12 bis 32 C-Atomen. Beispielsweise kann es sich um n-Alkylgruppen wie n-Octyl-, n-Decyl- oder n-Dodecylgruppen, Phenylgruppen sowie insbesondere substituierte Phenylgruppen handeln. Bei Substituenten an den Phenylgruppen kann es sich um Alkylgruppen, beispielsweise C1- bis C6-Alkylgruppen handeln, bevorzugt um Styrylgruppen. Besonders bevorzugt ist eine Tristyrylphenylgruppe.

Die hydrophob assoziierende Monomere der Formeln (IIP) bzw. (IIIP) und deren Herstellung sind dem Fachmann prinzipiell bekannt, beispielsweise aus EP 705 854 A1.

### Mengen der Monomere (a):

Die Menge der monoethylenisch ungesättigten, hydrophob assoziierenden Monomere (a) beträgt bevorzugt 0,1 bis 15 Gew.-% bezogen auf die Gesamtmenge aller Monomere im Acrylamid-Copolymer, insbesondere bevorzugt 0,1 bis 10 Gew.-%, besonders bevorzugt 0,2 bis 5 Gew.-% und oftmals 0,5 bis 2 Gew.-%.

In der Regel handelt es sich bei zumindest 50 Gew. %, bevorzugt mindestens 80 Gew. % der Monomere (a) um Monomere (a) der allgemeinen Formel (IP), (IIP) und/oder (IIIP) und bevorzugt werden nur Monomere (a) der allgemeinen Formel (IP), (IIP) und/oder (IIIP) eingesetzt. Besonders bevorzugt werden nur Monomere (a) der allgemeinen Formel (IP) bei der Herstellung der erfindungsgemäßen Acrylamid-Copolymere eingesetzt, ganz besonders bevorzugt Monomere (a) der allgemeinen Formel (I), bei denen R^{2P} für einen Rest R^{2bP} steht.

Weiterhin bevorzugt kann es sich bei dem Acrylamid-Polymer P um ein Copolymer wie in WO 2010/133527 beschrieben handeln. Bevorzugt handelt es sich bei dem mindestens einen Acrylamid-Polymer P um ein wasserlösliches, hydrophob assoziierendes Copolymer umfassend:
(a) 0,1 bis 20 Gew.-% mindestens eines monoethylenisch ungesättigten, hydrophob assoziierenden Monomers (a) wie oben beschrieben, sowie
(b) 25 Gew.-% bis 99,9 Gew.-% mindestens eines davon verschiedenen, monoethylenisch ungesättigten, hydrophilen Monomers (b), mit der Maßgabe, dass mindestens 10 Gew.-%, bevorzugt mindestens 15 Gew.-% und insbesondere bevorzugt mehr als 45 Gew.-%, besonders bevorzugt mehr als 60 Gew.-% (Meth)acrylamid, bezogen auf die Gesamtmenge aller Monomere im Acrylamid-Polymer P, enthalten sind;
wobei die Mengenangaben, wenn nichts anderes angegeben ist, jeweils auf die Gesamtmenge aller Monomere im Copolymer bezogen sind und wobei es sich bei mindestens einem der Monomere (a) um ein Monomer der allgemeinen Formel (IP)

H₂C=C(R^{1P})-R^{2P}-O-(-CH₂-CH(R^{3P})-O-)ₖ-(-CH₂-CH(R^{4P})-O-)ₗ-R⁵ (IP)

handelt, wobei die Einheiten -(-CH₂-CH(R^{3P}-O-)ₖ und -(-CH₂-CH(R^{4P})-O-)ₗ in Blockstruktur in der in Formel (IP) dargestellten Reihenfolge angeordnet sind und die Reste und Indices die folgende Bedeutung haben:
- k:: eine Zahl von 10 bis 150,
- I:: eine Zahl von 5 bis 25,
- R^{1P}:: H oder Methyl,
- R^{2P}:: eine Einfachbindung oder eine zweiwertige, verknüpfende Gruppe, ausgewählt aus der Gruppe von -(CₙH₂ₙ)-[R^{4aP}], -O-(C_{n'}H_{2n'})-[R^{4bP}] und -C(O)-O-(C_{n"}H_{2n"})-[R^{4cP}], wobei n, n' und n" jeweils für eine natürliche Zahl von 1 bis 6 steht,
- R^{3P}:: unabhängig voneinander H, Methyl oder Ethyl, mit der Maßgabe, dass es sich bei mindestens 50 mol % der Reste R² um H handelt,
- R^{4P}:: unabhängig voneinander ein Kohlenwasserstoffrest mit mindestens 2 Kohlenstoffatomen oder eine Ethergruppe der allgemeinen Formel -CH₂-O-R^{4P'}, wobei R^{4P'} für einen Kohlenwasserstoffrest mit mindestens 2 Kohlenstoffatomen steht,
- R^{5P}:: H oder ein Kohlenwasserstoffrest mit 1 bis 30 C-Atomen.

Weiterhin bevorzugt kann es sich bei dem Acrylamid-Polymer P um ein Copolymer wie in WO 2012/069478 beschrieben handeln. Bevorzugt handelt es sich bei dem mindestens einen Acrylamid-Polymer P um ein wasserlösliches, hydrophob assoziierendes Copolymer umfassend neben Acrylamid:
(a) 0,1 bis 15 Gew.-% mindestens eines monoethylenisch ungesättigten, hydrophob assoziierenden Monomers (a), sowie
(b) 85 bis 99,9 Gew. % mindestens zweier, davon verschiedener, monoethylenisch ungesättigter, hydrophiler Monomere (b), wobei es sich bei den Monomeren (b) mindestens um
   (b1) mindestens ein neutrales, monethylenisch ungesättigtes, hydrophiles Monomer (b1), ausgewählt aus der Gruppe von (Meth)acrylamid, N-Methyl(meth)acrylamid, N,N'-Dimethyl(meth)acrylamid und N-Methylol(meth)acrylamid, mit der Maßgabe, dass mindestens 10 Gew.-%, bevorzugt mindestens 15 Gew.-% und insbesondere bevorzugt mehr als 45 Gew.-%, besonders bevorzugt mehr als 60 Gew.-% (Meth)acrylamid, bezogen auf die Gesamtmenge aller Monomere im Acrylamid-Polymer P, enthalten sind;
   (b2) mindestens ein anionisches, monoethylenisch ungesättigtes, hydrophiles Monomer (b2) welches mindestens eine saure Gruppe ausgewählt aus der Gruppe von -COOH, -SO₃H und -PO₃H₂ bzw. deren Salze umfasst,
wobei die Mengenangaben, wenn nichts anderes angegeben ist, jeweils auf die Gesamtmenge aller Monomere im Copolymer bezogen sind.

### Monomere (b):

Das Acrylamid-Copolymer kann bevorzugt mindestens ein monoethylenisch ungesättigtes, hydrophiles Monomer (b) umfassen, mit der Maßgabe, dass mindestens 10 Gew.-%, bevorzugt mindestens 15 Gew.-% und insbesondere bevorzugt mehr als 45 Gew.-%, besonders bevorzugt mehr als 60 Gew.-% (Meth)acrylamid, bezogen auf die Gesamtmenge aller Monomere im Acrylamid-Polymer P, enthalten sind

Bevorzugt weisen die hydrophilen Monomere (b) funktionelle Gruppen auf ausgewählt aus der Gruppe bestehend aus Carbonylgruppen >C=O, Ethergruppen -O-, insbesondere Polyethylenoxidgruppen -(CH₂-CH₂-O-)ₙ-, wobei n bevorzugt für eine Zahl von 1 bis 200 steht, Hydroxygruppen -OH, primäre, sekundäre oder tertiäre Aminogruppen, Ammoniumgruppen, Amidgruppen -C(O)-NH-, Carboxamidgruppen -C(O)-NH₂ oder saure Gruppen wie Carboxylgruppen -COOH, Sulfonsäuregruppen -SO₃H, Phosphonsäuregruppen -PO₃H₂ oder Phosphorsäuregruppen -OP(OH)₃. Beispiele bevorzugter funktioneller Gruppen umfassen Hydroxygruppen-OH, Carboxylgruppen -COOH, Sulfonsäuregruppen -SO₃H, Carboxamidgruppen -C(O)-NH₂, Amidgruppen -C(O)-NH- sowie Polyethylenoxidgruppen -(CH₂-CH₂-O-)ₙ-H, wobei n bevorzugt für eine Zahl von 1 bis 200 steht.

Die funktionellen Gruppen können direkt an die ethylenische Gruppe angebunden sein, oder aber über eine oder mehrere verknüpfende Kohlenwasserstoffgruppen mit der ethylenischen Gruppe verbunden sein.

Besonders bevorzugt sind die eingesetzten, monoethylenisch ungesättigten hydrophilen Monomere (b) in beliebigem Verhältnis mit Wasser mischbar, zur Ausführung der Erfindung ist es jedoch ausreichend, dass das Acrylamid-Copolymer die eingangs erwähnte Wasserlöslichkeit besitzt. Im Regelfalle sollte die Löslichkeit der Monomere (b) in Wasser bei Raumtemperatur mindestens 50 g/l, bevorzugt mindestens 150 g/l und besonders bevorzugt mindestens 250 g/l betragen.

Die Menge aller hydrophilen Monomere (b) im Acrylamid-Copolymer beträgt typischerweise 85 bis 99,9 Gew.-% bezogen auf die Gesamtmenge aller Monomere im Copolymer, bevorzugt 90 bis 99,8 Gew.-%, mit der Maßgabe, dass mindestens 10 Gew.-%, bevorzugt mindestens 15 Gew.-% und insbesondere bevorzugt mehr als 45 Gew.-%, besonders bevorzugt mehr als 60 Gew.-% (Meth)acrylamid, bezogen auf die Gesamtmenge aller Monomere im Acrylamid-Polymer P, enthalten sind.

Die Menge der neutralen, hydrophilen Monomere (b1) beträgt hierbei in der Regel 10 bis 95 Gew.-%, bevorzugt 30 bis 95 Gew. %, bevorzugt 30 bis 85 Gew. % und besonders bevorzugt 30 bis 70 Gew. % bezüglich der Gesamtmenge aller eingesetzten Monomere, mit der Maßgabe, dass mindestens 10 Gew.-%, bevorzugt mindestens 15 Gew.-% und insbesondere bevorzugt mehr als 45 Gew.-%, besonders bevorzugt mehr als 60 Gew.-% (Meth)acrylamid, bezogen auf die Gesamtmenge aller Monomere im Acrylamid-Polymer P, enthalten sind.

Sofern das Acrylamid-Copolymer P nur neutrale Monomere (b1) und anionische Monomere (b2) umfasst, hat es sich bewährt, die neutralen Monomere (b1) einschließlich (Meth)acrylamid in einer Menge 30 bis 95 Gew. % und die anionischen Monomere (b2) in einer Menge von 4,9 bis 69,9 Gew. % einzusetzen, wobei die Menge jeweils auf die Gesamtmenge aller eingesetzten Monomere bezogen ist. Bevorzugt werden bei dieser Ausführungsform die Monomere (b1) in einer Menge 30 bis 80 Gew. % und die anionischen Monomere (b2) in einer Menge von 19,9 bis 69,9 Gew. % eingesetzt, und besonders bevorzugt werden die Monomere (b1) in einer Menge 40 bis 70 Gew. % und die anionischen Monomere (b2) in einer Menge von 29,9 bis 59,9 Gew. % eingesetzt

Sofern das Copolymer neutrale Monomere (b1), anionische Monomere (b2) und kationische Monomere (b3) umfasst, hat es sich bewährt, die neutralen Monomere (b1) einschließlich (Meth)acrylamid in einer Menge von 30 bis 95 Gew. % und die anionischen (b2) und kationischen Monomere (b3) zusammen in einer Menge von 4,9 bis 69,9 Gew. % einzusetzen, mit der Maßgabe, dass das molare Verhältnis (b2) / (b3) 0,7 bis 1,3 beträgt. Bevorzugt beträgt das molare Verhältnis (b2) / (b3) 0,8 bis 1,2 und beispielsweise 0,9 bis 1,1. Durch diese Maßnahme lassen sich Copolymere erhalten, welche besonders unempfindlich auf Salzfracht reagieren.

Bevorzugt werden bei dieser Ausführungsform die Monomere (b1) in einer Menge 30 bis 80 Gew. % und die anionischen und kationischen Monomere (b2) + (b3) zusammen in einer Menge von 19,9 bis 69,9 Gew. % eingesetzt, und besonders bevorzugt werden die Monomere (b1) in einer Menge 40 bis 70 Gew. % und die anionischen und kationischen Monomere (b2) + (b3) zusammen in einer Menge von 29,9 bis 59,9 Gew. % eingesetzt, wobei jeweils das bereits genannte molare Verhältnis eingehalten werden sollte.

### Monomere (b1):

Das Acrylamid-Copolymer kann typischerweise neben (Meth)acrylamid mindestens ein anderes neutrales, monethylenisch ungesättigtes, hydrophiles Monomer (b1), ausgewählt aus der Gruppe von N-Methyl(meth)acrylamid, N,N'-Dimethyl(meth)acrylamid oder N-Methylol(meth)-acrylamid umfassen mit der Maßgabe, dass mindestens 10 Gew.-%, bevorzugt mindestens 15 Gew.-% und insbesondere bevorzugt mehr als 45 Gew.-%, besonders bevorzugt mehr als 60 Gew.-% (Meth)acrylamid, bezogen auf die Gesamtmenge aller Monomere im Acrylamid-Polymer P, enthalten sind.

Es ist weiterhin möglich als Monomer (b1) ausschließlich (Meth)acrylamid, insbesondere Acrylamid, einzusetzen.

### Monomere (b2):

In einer bevorzugten Ausführungsform umfasst das verwendete Acrylamid-Copolymer neben (Meth)acrylamid weiterhin mindestens ein hydrophiles, monoethylenisch ungesättigtes anionisches Monomer (b2), welches mindestens eine saure Gruppe ausgewählt aus der Gruppe von -COOH, -SO₃H oder -PO₃H₂ bzw. deren Salze umfasst. Bevorzugt sind COOH-Gruppen und/oder -SO₃H-Gruppen umfassende Monomere, besonders bevorzugt -SO₃H-Gruppen umfassende Monomere. Selbstverständlich kann es sich auch um die Salze der sauren Monomere handeln. Geeignete Gegenionen umfassen insbesondere Alkalimetallionen wie Li⁺, Na⁺ oder K⁺ sowie Ammoniumionen wie NH₄⁺ oder Ammoniumionen mit organischen Resten.

Beispiele COOH-Gruppen umfassender Monomere umfassen Acrylsäure, Methacrylsäure, Crotonsäure, Itaconsäure, Maleinsäure oder Fumarsäure. Bevorzugt ist Acrylsäure.

Beispiele Sulfonsäuregruppen umfassender Monomere (b2) umfassen Vinylsulfonsäure, Allylsulfonsäure, 2-Acrylamido-2-methylpropansulfonsäure, 2-Methacrylamido-2-methylpropansulfonsäure, 2-Acrylamidobutansulfonsäure, 3-Acrylamido-3-methylbutansulfonsäure oder 2-Acrylamido-2,4,4-trimethylpentansulfonsäure. Bevorzugt sind Vinylsulfonsäure, Allylsulfonsäure oder 2-Acrylamido-2-methylpropansulfonsäure und besonders bevorzugt sind 2-Acrylamido-2-methylpropansulfonsäure (APMS) bzw. deren Salze.

Beispiele Phosphonsäuregruppen umfassender Monomere (b2) umfassen Vinylphosphonsäure, Allylphosphonsäure, N-(Meth)acrylamidoalkylphosphonsäuren oder (Meth)acryloyloxyalkylphosphonsäuren, bevorzugt ist Vinylphosphonsäure.

Bevorzugt kann Monomer (b2) ausgewählt werden aus der Gruppe bestehend aus Acrylsäure, Methacrylsäure, Crotonsäure, Itaconsäure, Maleinsäure, Fumarsäure, Vinylsulfonsäure, Allylsulfonsäure, 2-Acrylamido-2-methylpropansulfonsäure (AMPS), 2-Methacrylamido-2-methylpropansulfonsäure, 2-Acrylamidobutansulfonsäure, 3-Acrylamido-3-methylbutansulfonsäure, 2-Acrylamido-2,4,4-trimethylpentansulfonsäure, Vinylphosphonsäure, Allylphosphonsäure, N-(Meth)acrylamidoalkylphosphonsäuren und (Meth)acryloyloxyalkylphosphonsäuren, besonders bevorzugt aus Acrylsäure und/oder APMS bzw. deren Salze.

Weiterhin bevorzugt handelt es sich bei dem Acrylamid-Polymer P um ein Copolymer, welches (Meth)acrylamid und mindestens zwei weitere verschiedene saure Gruppen umfassende Monomere (b2) umfasst. Insbesondere bevorzugt handelt es sich um ein Copolymer, welches (Meth)acrylamid und als saure Gruppen umfassende Monomere (b2) ein Monomer umfassend die Gruppe -SO₃H (z.B. 2-Acrylamido-2-methylpropansulfonsäure (AMPS)) und ein Monomer umfassend die Gruppe -COOH (z.B. Acrylsäure) umfasst. Insbesondere bevorzugt handelt es sich bei dem Acrylamid-Polymer P um ein Copolymer, welches (Meth)acrylamid, 2-Acrylamido-2-methylpropansulfonsäure (AMPS) und Acrylsäure umfasst.

Der Vollständigkeit halber sei erwähnt, dass die Monomere (b1) im Zuge der Herstellung und Verwendung unter Umständen zumindest teilweise zu (Meth)acrylsäure hydrolysieren können. Die erfindungsgemäß verwendeten Copolymere können dementsprechend (Meth)acrylsäureeinheiten umfassen, auch wenn zur Synthese gar keine (Meth)acrylsäureeeinheiten eingesetzt wurden. Die Tendenz zur Hydrolyse der Monomere (b1) nimmt mit zunehmendem Gehalt an Sulfonsäuregruppen ab. Dementsprechend ist die Anwesenheit von Sulfonsäuregruppe im verwendeten Acrylamid-Copolymer empfehlenswert.

### Monomere (b3):

Das Acrylamid-Polymer P kann optional neben (Meth)acrylamid mindestens ein monoethylenisch ungesättigtes, kationisches, Ammoniumionen aufweisendes Monomer (b3) umfassen.

Geeignete kationische Monomere (b3) umfassen insbesondere Ammoniumgruppen aufweisende Monomere, insbesondere Ammoniumderivate von N-(ω-Aminoalkyl)(meth)acryl-amiden oder ω-Aminoalkyl(meth)acrylestern.

Insbesondere kann es sich bei Ammoniumgruppen aufweisenden Monomeren (b3) um Verbindungen der allgemeinen Formeln H₂C=C(R^{8P})-CO-NR^{9P}-R^{10P}-N(R^{11P})₃⁺ M⁻ (Va) und/oder H₂C=C(R^{8P})-COO-R^{10P}-N(R^{11P})₃⁺ X⁻ (Vb) handeln. Hierbei steht R^{8P} für H oder Methyl, R^{9P} für H oder eine C₁- bis C₄-Alkylgruppe, bevorzugt H oder Methyl und R^{10P} für eine bevorzugt lineare C₁- bis C₄-Alkylengruppe, beispielsweise eine 1,2-Ethylengruppe -CH₂-CH₂- oder eine 1,3-Proplyengruppe -CH₂-CH₂-CH₂-.

Bei den Resten R^{11P} handelt es sich unabhängig voneinander um C₁- bis C₄-Alkylreste, bevorzugt Methyl oder eine Gruppe der allgemeinen Formel -R^{12P}-SO₃H, wobei R^{12P} für eine bevorzugt lineare C₁- bis C₄-Alkylengruppe oder eine Phenylgruppe steht, mit der Maßgabe, dass es sich im Regelfalle bei nicht mehr als einem der Substituenten R^{11P} um einen Sulfonsäuregruppen aufweisenden Substituenten handelt. Besonders bevorzugt handelt es sich bei den drei Substituenten R^{11P} um Methylgruppen, d.h. das Monomer weist eine Gruppe -N(CH₃)₃⁺ auf. M-steht in obiger Formel für ein einwertiges Anion, beispielsweise Cl⁻. Selbstverständlich kann M-auch für einen entsprechenden Bruchteil eines mehrwertigen Anions stehen, obwohl dies nicht bevorzugt ist. Beispiele bevorzugter Monomere (b3) der allgemeinen Formel (Va) bzw. (Vb) umfassen Salze von 3-Trimethylammonium-propyl(meth)-acrylamiden oder 2-Trimethylammoniumethyl(meth)acrylaten, beispielsweise die entsprechenden Chloride wie 3-Trimethylammoniumpropylacrylamidchlorid (DIMAPAQUAT) und 2-Trimethylammoniumethylmethacrylatchlorid (MADAME-QUAT).

In einer bevorzugten Ausführungsform umfasst das Acrylamid-Polymer P mindestens ein (Meth)acrylamid und mindestens ein kationisch modifiziertes Polyacrylamid, insbesondere DMA3Q, quaternisiertes Dimethylaminoethylacrylat, (H₂C=CH-CO-O-CH₂CH₂N(CH₃)₃⁺ Cl), allgemein-N(CH₃)₂-R (R= langkettiges Alkyl)

In einer Ausführungsform der Erfindung kann es sich bei dem Acrylamid-Copolymer um ein in US 2007/0287815 beschriebenes Acrylamid-Copolymer handeln. Insbesondere handelt es sich bei dem mindestens einen Acrylamid-Polymer P um ein Copolymer, welches (Meth)acrylamid und mindestens ein kationisches Monomer der Struktur (KI) umfasst: 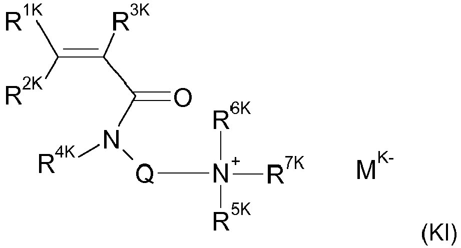 wobei die Reste und Indizes die folgenden Bedeutungen haben:
R^{1K}, R^{2K}, R^{3K}, R^{4K}, R^{5K}, R^{6K}
   sind unabhängig voneinander H oder C₁₋₄ Alkyl;
Q: ist C₁₋₈-Alkylen;
R^{7K}: ist ein C₈₋₃₀ Alkyl oder C₈₋₃₀-Arylalkyl;
M^{K}: ist ein Halogen ausgewählt aus Brom, Chlor, lod, Fluor oder ein Gegenion mit negativer Ladung.

Insbesondere kann das Acrylamid-Copolymer als kationisches Acryl-basiertes Monomer (Monomer b3) mindestens ein Monomer ausgewählt aus N-acrylamidopropyl-N,N-dimethyl-N-dodecyl ammonium chloride (DMAPA C1(C12)), N-methacrylamidopropyl-N,N-dimethyl-N-dodecyl ammonium chloride (DMAPMA C1(C12)), N-acrylamidopropyl-N,N-dimethyl-N-dodecyl ammonium bromide (DMAPA Br(C12)), N-methacrylamidopropyl-N,N-dimethyl-N-dodecyl ammonium bromide (DMAPMA Br(C12)), N-acrylamidopropyl-N,N-dimethyl-N-octadecyl ammonium chloride (DMAPA C1(C18)), N-methacrylamidopropyl-N,N-dimethyl-N-octadecyl ammonium chloride (DMAPMA C1(C18)), N-acrylamidopropyl-N,N-dimethyl-N-octadecyl ammonium bromide (DMAPA Br(C₁₈)), N-methacrylamidopropyl-N,N-dimethyl-N-octadecyl ammonium bromide (DMAPMA Br(C₁₈)) umfassen.

In einer weiteren Ausführungsform der Erfindung können die in US 2007/0287815 beschriebenen Copolymere eingesetzt werden. Insbesondere kann als Acrylamid-Polymer P ein Copolymer mit einem Molekulargewicht größer als 50.000 g/mol eingesetzt werden umfassend:
0.005 bis 10 Gew.-%
   mindestens eines oben beschriebenen kationischen Monomers der Formel (KI);
5 bis 89 Gew.-%
   mindestens eines anionischen Monomers, welches eine Acryl-, Vinyl-, Maleinsäure-, Fumarsäure- oder Allyl- Funktionalität aufweist und eine Carboxyl-Gruppe, PhosphonatGruppe oder Sulfonat-Gruppe enthält, wobei es sich bei dem anionischen Monomer um ein oben beschriebenes Monomer (b2) handeln kann, bevorzugt ist das anionische Monomer ausgewählt aus Acrylsäure, Methacrylsäure, 2-Acrylamido-2-methylpropansulfonsäure und deren Salze; und
10 bis 90 Gew.-%
   mindestens eines nicht ionischen Monomers, wobei es sich bei dem nicht ionischen Monomer um ein oben beschriebenes Monomer (b1) handeln kann, bevorzugt ist das nicht ionische Monomer ausgewählt aus Acrylamid, Methacrylamid, N-isopropylacrylamid, N-N-Dimethylacrylamid, N-Vinylformamid, N-Vinylacetamid und N-Vinylpyrrolidon,
mit der Maßgabe, dass mindestens 10 Gew.-%, bevorzugt mindestens 15 Gew.-% und insbesondere bevorzugt mehr als 45 Gew.-%, besonders bevorzugt mehr als 60 Gew.-% (Meth)acrylamid, bezogen auf die Gesamtmenge aller Monomere im Acrylamid-Polymer P, enthalten sind.

Als Acrylamid-Polymer P kann auch eben beschriebene Copolymer mit einem Molekulargewicht größer als 50.000 g/mol eingesetzt werden, wobei sich die Mengenangaben auf mol-% beziehen. Ein Verfahren zur Herstellung solcher Acrylamid-Copolymere umfassend kationische Monomere ist in US 2007/0287815 beschrieben.

Bei dem anionischen Monomer kann es sich insbesondere um Acrylsäure, Methacrylsäure, Itaconsäure, Crotonsäure, Maleinsäure, Fumarsäure, 2-Acrylamido-2-methylpropane sulfonic acid, vinylsulfonsäure, Vinylphosphonsäure, Allylsulfonsäure, Allylphosphonsäure, Styrolsulfonsäure und deren wasserlöslichen Salze mit Alkalimetall, Erdalkalimetall und Ammonium handeln.

Bei dem nicht ionischen Monomer kann es sich insbesondere um (Meth)acrylamid, Isopropylacrylamid, N-N-dimethylacrylamid, N-Methylolacrylamid, N-Vinylformamid, N-Vinylacetamid, N-vinylpyridin und/oder N-Vinylpyrrolidon handeln, mit der Maßgabe, dass mindestens 10 Gew.-%, bevorzugt mindestens 15 Gew.-% und insbesondere bevorzugt mehr als 45 Gew.-%, besonders bevorzugt mehr als 60 Gew.-% (Meth)acrylamid, bezogen auf die Gesamtmenge aller Monomere im Acrylamid-Polymer P, enthalten sind.

### Monomere (b4)

Die erfindungsgemäß verwendeten Acrylamid-Copolymere können darüber hinaus noch weitere, von den hydrophilen Monomeren (b1), (b2) und (b3) verschiedene monoethylenisch ungesättigte hydrophile Monomere (b4) umfassen. Beispiele derartiger Monomere umfassen Hydroxy- und/oder Ethergruppen umfassende Monomere, wie beispielsweise Hydroxyethyl(meth)acrylat, Hydroxypropyl(meth)acrylat, Allylalkohol, Hydroxyvinylethylether, Hydroxyvinylpropylether, Hydroxyvinylbutylether oder Verbindungen der Formel H₂C=C(R^{1P})-COO-(-CH₂-CH(R^{13P})-O-)_{b}-R^{14P} (VIa) bzw. H₂C=C(R^{1P})-O-(-CH₂-CH(R^{13P})-O-)_{b}-R^{14P} (Vlb) wobei R^{1P} wie oben definiert ist und b für eine Zahl von 2 bis 200, bevorzugt 2 bis 100 steht. Bei den Resten R^{13P} handelt es sich unabhängig voneinander um H, Methyl oder Ethyl, bevorzugt H oder Methyl, mit der Maßgabe, dass es sich bei mindestens 50 mol % der Reste R^{13P} um H handelt. Bevorzugt handelt es sich bei mindestens 75 mol % der Reste R^{13P} um H, besonders bevorzugt bei mindestens 90 mol % und ganz besonders bevorzugt ausschließlich um H. Bei dem Rest R^{14P} handelt es sich um H, Methyl oder Ethyl, bevorzugt H oder Methyl. Weitere Beispiele von Monomeren (b4) umfassen N-Vinylderivate wie beispielsweise N-Vinylformamid, N-Vinylacetamid, N-Vinylpyrrolidon oder N-Vinylcaprolactam sowie Vinylester, wie beispielsweise Vinylformiat oder Vinylacetat. N-Vinylderivate können nach Polymerisation zu Vinylamin-Einheiten, Vinylester zu Vinylalkohol-Einheiten hydrolysiert werden.

### Monomere (c)

Neben den oben beschriebenen Monomeren kann das Acrylamid-Polymer P weitere monoethylenisch ungesättigte Monomere (c) umfassen. Selbstverständlich können auch Gemische mehrerer verschiedener Monomere (c) eingesetzt werden.

Derartige Monomere können zur Feinsteuerung der Eigenschaften des Acrylamid-Copolymers verwendet werden. Falls überhaupt vorhanden, kann die Menge derartiger optional vorhandener Monomere (c) bis zu 14,9 Gew. % betragen, bevorzugt bis zu 9,9 Gew. %, besonders bevorzugt bis zu 4,9 Gew. %, jeweils bezogen auf die Gesamtmenge aller Monomere. Ganz besonders bevorzugt sind keine Monomere (c) vorhanden.

Bei den Monomeren (c) kann es sich beispielsweise um monoethylenisch ungesättigte Monomere handeln, welche einen hydrophoberen Charakter haben als die hydrophilen Monomere (b) und die dementsprechend nur in geringem Maße wasserlöslich sind. Im Regelfalle beträgt die Löslichkeit der Monomere (c) in Wasser bei Raumtemperatur weniger als 50 g/l, insbesondere weniger als 30 g/l. Beispiele derartiger Monomere umfassen N-Alkyl- und N,N,'-Dialkyl(meth)-acrylamide, wobei die Anzahl der Kohlenstoffatome in den Alkylresten zusammen mindestens 3, bevorzugt mindestens 4 beträgt. Beispiele derartiger Monomere umfassen N-Butyl(meth)acrylamid, N-Cyclohexyl(meth)acrylamid oder N-Benzyl(meth)acrylamid.

### Monomere (d)

Neben den oben beschriebenen Monomeren kann das Acrylamid-Polymer P optional mindestens ein Monomer (d) umfassen, welches einen Stabilisator S der Formel (I) darstellt, welcher mindestens eine ungesättigte Bindung (C-C-Doppelbindung und/oder C-C-Dreifachbindung) umfasst. Bevorzugt enthält das Monomer (d) genau eine C-C-Doppelbindung oder C-C-Dreifachbindung. Bevorzugt enthält das Monomer (d) genau eine endständige C-C-Doppelbindung oder C-C-Dreifachbindung. Bevorzugt enthält das Monomer genau eine endständige C-C-Doppelbindung. Beispielsweise können eine oder mehrere der folgenden Monomere (d) eingesetzt werden: 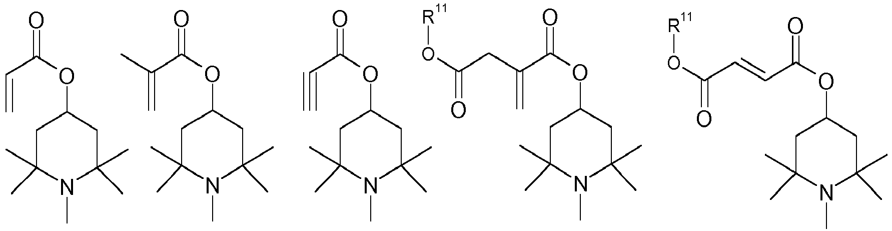 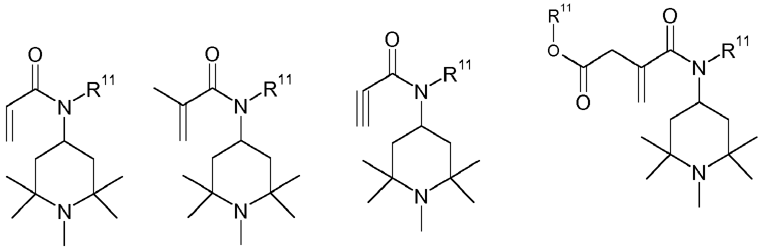 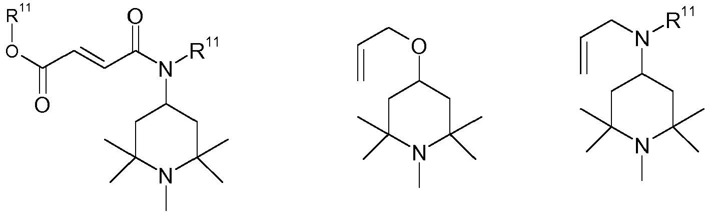 mit R¹¹ = H; C₁₋₈-Alkyl oder 1,2,2,6,6-Pentamethyl-piperidin-4-yl.

Wenn vorhanden, kann die Menge der optionalen Monomere (d) bis zu 14,9 Gew. % betragen, bevorzugt bis zu 9,9 Gew. %, besonders bevorzugt bis zu 4,9 Gew. %, jeweils bezogen auf die Gesamtmenge aller Monomere. Bevorzugt kann die Menge der Monomere (d) von 0,01 bis 14,9 Gew.-%, bevorzugt 0,1 bis 4,9 Gew.-% betragen. Es können auch Gemische mehrerer verschiedener Monomere (d) eingesetzt werden.

In einer bevorzugten Ausführungsform weist das Acrylamid-Polymer P ein gewichtsmittleres Molekulargewicht Mw von mindestens von 1*10⁶ g/mol, bevorzugt von 1*10⁶ g/mol bis 30*10⁶ g/mol, typischerweise etwa 20*10⁶ g/mol, auf.

Bevorzugt weist das Acrylamid-Polymer P eine Anionizität im Bereich von 10 bis 60 %, bevorzugt von 20 bis 40 %, besonders bevorzugt von 20 bis 30 % auf. Als Anionizität wird der molare Anteil der saure Gruppen umfassenden Monomere bezogen auf die Gesamtmenge an Acrylamid-Polymer P verstanden.

Die erfindungsgemäß verwendeten Acrylamid-Polymere P bzw. Acrylamid-Copolymere können nach dem Fachmann prinzipiell bekannten Methoden hergestellt werden, beispielsweise durch Lösungs- oder Gelpolymerisation in wässriger Phase. Zur Polymerisation werden (Meth)acrylamid und optional ein oder mehrere der oben beschriebenen Monomere (a), (b) und (c), Initiator und optional weitere Hilfsstoffe in einem wässrigen Medium eingesetzt. Das Verfahren zur Herstellung der Acrylamid-Polymere P und Acrylamid-Copolymere ist beispielsweise in WO 2012/069478 und WO 2010/133527 beschrieben.

### Stabilisator S

Erfindungsgemäß enthält die Zusammensetzung mindestens einen Stabilisator S der Formel (I) 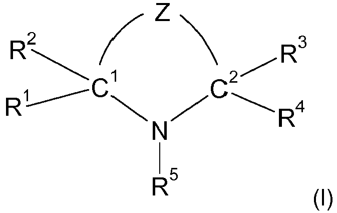 wobei die Reste R¹, R², R³, R⁴ und R⁵ und die bivalente Gruppe Z wie oben definiert sind. C¹ und C² bezeichnen Kohlenstoffatome.

Bevorzugt ist Z eine bivalente Gruppe umfassend 2 bis 5, bevorzugt 2 bis 4, Gruppen ausgewählt aus C(R⁶)₂, N-R' und C=O, wobei die Gruppe Z mit den Kohlenstoffatomen C¹, C² sowie dem Stickstoffatom N einen 5 bis 8 (bevorzugt 5 bis 7) gliedrigen Ring bildet, wobei R' ausgewählt ist aus H, C₁₋₂₀-Alkyl und C₁₋₂₀-Hydroxyalkyl, bevorzugt ist R'=H. Besonders bevorzugt ist Z eine bivalente Gruppe umfassend 3 Atome und/oder Gruppen ausgewählt aus C(R⁶)₂, N-R' und C=O, wobei ein 6 gliedriger Ring gebildet wird, welcher in einer bevorzugten Ausführungsform genau durch eine Gruppe R⁶ (wobei R⁶ nicht H ist) in Position 4 (bezogen auf das N-Atom) substituiert ist, besonders bevorzugt ist R⁶ = OH. In einer weiteren Ausführungsform kann es sich um einen unsubstituierten 5 bis 7 gliedrigen Ring handeln.

In einer weiteren Ausführungsform umfasst Z 2 bis 4, bevorzugt 3, C(R⁶)₂-Gruppen, wobei die Gruppe Z mit den Kohlenstoffatomen C¹, C² sowie dem Stickstoffatom N einen 5 bis 7, bevorzugt einen 6, gliedrigen Ring bildet. Bevorzugt ist dieser Ring durch genau eine Gruppe R⁶ in 4-Position (bezogen auf das N-Atom) substituiert. Weiterhin bevorzugt ist der Ring unsubstituiert, d.h. Z umfasst bevorzugt 3 CH₂-Gruppen.

Bevorzugt sind R¹, R², R³ und R⁴ unabhängig voneinander ausgewählt aus C₁₋₂₀-Alkyl, C₂₋₂₀-Alkenyl und C₇₋₃₂-Arylalkyl; insbesondere bevorzugt aus C₁₋₂₀-Alkyl; besonders bevorzugt aus C₁₋₁₂-Alkyl, ganz besonders bevorzugt C₁₋₆-Alkyl und insbesondere bevorzugt aus Methyl, Ethyl, n-Propyl oder iso-Propyl. Insbesondere bevorzugt ist R¹=R² und R³ = R⁴, insbesondere bevorzugt ist R¹=R²=R³=R⁴. Besonders bevorzugt ist R¹=R²=R³=R⁴ = Methyl, Ethyl, n-Propyl oder iso-Propyl, insbesondere bevorzugt ist R¹=R²=R³=R⁴ = Methyl.

Bevorzugt ist R⁵ ausgewählt aus H; C₁₋₂₀-Alkyl; C₂₋₂₀-Alkenyl; C₇₋₃₂-Arylalkyl; C₁₋₂₀-Hydroxyalkyl; C₁₋₂₀-Cyanoalkyl; C₁₋₂₀-Sulfoalkyl; C₁₋₂₀-Phosphonoalkyl; -(CH₂-CH(R^{a})-O)_{q}-H mit q=1-20 und R^{a}=H oder C₁₋₆-Alkyl; -(O-CH₂-CH(R^{e})-(CH₂)ᵢ)ₚ-O-R^{e'} mit p=1-20, i=0 oder 1, R^{e}=H, OH oder C₁₋₆-Alkyl und R^{e'}=H oder C₁₋₈-Alkyl; -C(=O)-R^{e} mit R^{e}= H, C₁₋₁₈-Alkyl, C₂₋₁₈-Alkenyl, C₆₋₂₀-Aryl oder C₇₋₂₀-Arylalkyl; 2,2,6,6-Tetramethyl-4-piperidinol-1yl-alkyl und 4-(2,2,6,6-Tetramethyl-4-piperidinol-1yl-alkyl)benzyl. Insbesondere bevorzugt ist R⁵ ausgewählt aus H; C₁₋₂₀-Alkyl; C₂₋₂₀-Alkenyl; C₇₋₃₂-Arylalkyl; C₁₋₂₀-Hydroxyalkyl; C₁₋₂₀-Cyanoalkyl; C₁₋₂₀-Sulfoalkyl; C₁₋₂₀-Phosphonoalkyl; 2,2,6,6-Tetramethyl-4-piperidinol-1yl-alkyl und 4-(2,2,6,6-Tetramethyl-4-piperidinol-1yl-alkyl)benzyl. Insbesondere ist R⁵ ausgewählt aus C₁₋₁₂-Alkyl (beispielsweise Methyl, Ethyl, n-Propyl oder Iso-Propyl); C₂₋₁₂-Alkenyl (beispielsweise Allyl); C₇₋₂₀-Arylalkyl (beispielsweise Benzyl); C₁₋₁₂-Cyanoalkyl (beispielsweise Cyanomethyl); C₁₋₁₂-Sulfoalkyl (beispielsweise 3-Sulfopropyl); C₁₋₁₂-Phosphonoalkyl (beispielsweise Phosphonatomethyl); -(CH₂-CH(R^{a})-O)_{q}-H mit q=1-10, bevorzugt 1-5, insbesondere bevorzugt 1 und R^{a}=H oder C₁₋₆-Alkyl; -C(=O)-R^{e} mit R^{e}= C₁₋₁₂-Alkyl; 2,2,6,6-Tetramethyl-4-piperidinol-1-yl-alkyl und 4-(2,2,6,6-Tetramethyl-4-piperidinol-1-yl-alkyl)benzyl.

Insbesondere ist 4-(2,2,6,6-Tetramethyl-4-piperidinol-1-yl-alkyl)benzyl ausgewählt aus 4-(2,2,6,6-Tetramethyl-4-piperidinol-1-yl-methyl)benzyl) und 4-(2,2,6,6-Tetramethyl-4-piperidinol-1-yl-ethyl)benzyl), bevorzugt 4-(2,2,6,6-Tetramethyl-4-piperidinol-1-yl-methyl)benzyl).

In einer bevorzugten Ausführungsform ist R⁵ ausgewählt aus H, C₁₋₂₀-Alkyl, C₂₋₂₀-Alkenyl, C₁₋₂₀-Hydroxyalkyl oder -(CH₂-CH(R^{a})-O)_{q}-H mit q=1-20 und R^{a}=H oder C₁₋₆-Alkyl, bevorzugt ist q=1 und R^{a}=H oder C₁₋₄-Alkyl. Oftmals bevorzugt ist R⁵ ausgewählt aus C₁₋₁₂-Alkyl; C₂₋₁₂-Alkenyl, C₁₋₁₂-Hydroxyalkyl oder -(CH₂-CH(R^{a})-O)_{q}-H mit q=1 und R^{a}=H oder C₁₋₆-Alkyl. Insbesondere bevorzugt ist R⁵ ausgewählt aus H, C₁₋₆-Alkyl (bevorzugt C₁₋₁₆-Alkyl, beispielsweise Methyl, Ethyl, n-Propyl oder iso-Propyl), C₁₋₆-Hydroxyalkyl oder C₃₋₆-Alkenyl (bevorzugt Allyl).

In einer bevorzugten Ausführungsform ist R⁵ ausgewählt aus H, C₁₋₂₀-Alkyl, C₁₋₂₀-Hydroxyalkyl oder -(CH₂-CH(R^{a})-O)_{q}-H mit q=1-20 und R^{a}=H oder C₁₋₆-Alkyl, bevorzugt ist q=1 und R^{a}=H oder C₁₋₄-Alkyl. Oftmals bevorzugt ist R⁵ ausgewählt aus C₁₋₁₂-Alkyl; C₁₋₁₂-Hydroxyalkyl oder -(CH₂-CH(R^{a})-O)_{q}-H mit q=1 und R^{a}=H oder C₁₋₆-Alkyl. Insbesondere bevorzugt ist R⁵ ausgewählt aus H oder C₁₋₁₂-Alkyl (bevorzugt C₁₋₁₆-Alkyl, beispielsweise Methyl, Ethyl, n-Propyl oder iso-Propyl).

### In einer besonders bevorzugten Ausführungsform ist R⁵ = Methyl.

Bevorzugt ist R⁶ ausgewählt ist aus H; OH; C₁₋₂₀-Alkyl; C₁₋₂₀-Hydroxyalkyl; -O-C(=O)R^{b} mit R^{b}= H, C₁₋₂₀-Alkyl, C₂₋₂₀-Alkenyl, C₂₋₂₀-Alkinyl, C₆₋₂₀-Aryl oder C₇₋₃₂-Arylalkyl; -O-C(=O)-(CH₂)ₘ-C(=O)-O-R^{c}; -O-C(=O)-Y-C(=O)-O-R^{c}, wobei m=1-10, R^{c}= H, C₁₋₂₀-Alkyl, C₂₋₂₀-Alkenyl, C₂₋₂₀-Alkinyl, C₆₋₂₀-Aryl, C₇₋₃₂-Arylalkyl oder 1,2,2,6,6-Pentamethyl-piperidin-4-yl und Y eine C₂₋₁₀-Alkenylengruppe ist; -O-R^{d} mit R^{d} = C₂₋₂₀-Alkenyl, C₂₋₂₀-Alkinyl, C₆₋₂₀-Aryl, C₇₋₃₂-Arylalkyl oder 1,2,2,6,6-Pentamethyl-piperidin-4-yl; -NR^{x}R^{y}, -N(R^{x})-C(=O)R^{y}; -N(R^{x})-C(=O)-Y-C(=O)-O-R^{y}; -N(R^{x})-(CH₂)ᵣ-NR^{y}R^{z}, wobei R^{x}, R^{y} und R^{z} unabhängig voneinander H, C₁₋₂₀-Alkyl, C₂₋₂₀-Alkenyl, C₂₋₂₀-Alkinyl, C₆₋₂₀-Aryl, C₇₋₃₂-Arylalkyl, C₁₋₂₀-Hydroxyalkyl, C₁₋₂₀-Aminoalkyl oder 1,2,2,6,6-Pentamethyl-piperidin-4-yl sind, r=1-10 und Y eine C₂₋₁₀-Alkenylengruppe ist; -(O-CH₂-CH(R^{e})-(CH₂)ᵢ)ₚ-O-R^{e'} mit p=1-20, i=0 oder 1, R^{e}=H, OH oder C₁₋₆-Alkyl und R^{e'}=H oder C₁₋₈-Alkyl; -S-R^{f}; -S-S-R^{f} mit R^{f}= H, C₁₋₂₀-Alkyl, C₂₋₂₀-Alkenyl, C₆₋₂₀-Aryl oder C₇₋₃₂-Arylalkyl;
oder zwei Reste R⁶ bilden zusammen mit dem Kohlenstoffatom, an das sie gebunden sind, einen Ring -C-(O-CH₂-CH₂-O)-, -C-(O-CH₂-CH₂-CH₂-O)-, -C-(O-C(CH₃)₂-C(CH₃)₂-O)- oder -C-(NH-C(=O)-NH-C(=O))-.

Insbesondere bevorzugt ist R⁶ ausgewählt aus H, OH; -O-C(=O)R^{b} mit R^{b}= H oder C₁₋₂₀-Alkyl; -O-C(=O)-(CH₂)ₙ-C(=O)-O-R^{c} mit n=1-3, bevorzugt n=1 und R^{c}= H, C₁₋₁₈-Alkyl oder 1,2,2,6,6-Pentamethyl-piperidin-4-yl; -O-R^{d} mit R^{d} = C₂₋₁₈-Alkenyl; -NR^{x}R^{y}, wobei R^{x} und R^{y} unabhängig voneinander H, C₁₋₁₈-Alkyl, C₁₋₁₈-Hydroxyalkyl oder C₁₋₁₈-Aminoalkyl sind.

Insbesondere können R⁵ und/oder R⁶ -(O-CH₂-CH(R^{e})-(CH₂)ᵢ)ₚ-O-R^{e'} mit p=1-20, i=0 oder 1, R^{e}=H, OH oder C₁₋₆-Alkyl und R^{e'}=H oder C₁₋₈-Alkyl sein. Insbesondere können R⁵ und/oder R⁶ ausgewählt sein aus der Gruppe bestehend aus -O-(CH₂-CH₂-O)ₚ-R^{e'}, -O-(CH₂-CH(CH₃)-O)ₚ-R^{e'} und -O-(CH₂-CHOH-CH₂-O)ₚ-R^{e'} mit p=1-20, R^{e'}=H oder C₁₋₈-Alkyl.

Bevorzugt kann die Gruppe -NR^{x}R^{y} oder -N(R^{x})-(CH₂)ᵣ-NR^{y}R^{z} ausgewählt sein aus einer der folgenden Gruppen: 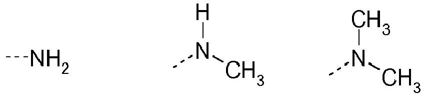 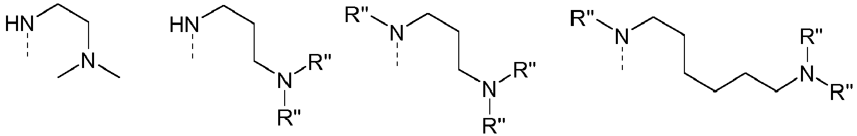 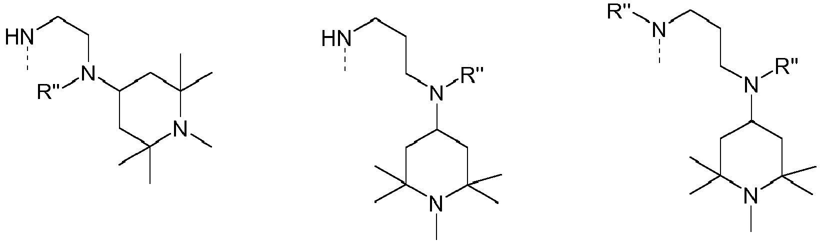 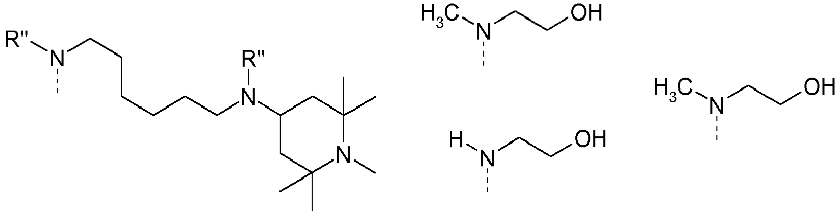 mit R" = H oder C₁₋₄-Alkyl, bevorzugt H oder Methyl.

Bevorzugt weisen die Ringe -C-(O-CH₂-CH₂-O)- oder -C-(NH-C(=O)-NH-C(=O))- , welche aus zwei Reste R⁶ und dem Kohlenstoffatom, an das die Reste R⁶ gebunden sind, gebildet werden, die folgende Struktur auf:

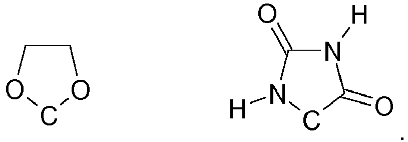

In einer besonders bevorzugten Ausführungsform ist R⁶=OH.

In einer bevorzugten Ausführungsform der Erfindung enthält die Zusammensetzung mindestens einen Stabilisator S der Formel (I), wobei die Reste die folgenden Bedeutungen haben:
- Z: ist ein bivalente Gruppe umfassend 2 bis 5 Gruppen ausgewählt aus C(R⁶)₂, N-R' und C=O, wobei die Gruppe Z mit den Kohlenstoffatomen C¹, C² sowie dem Stickstoffatom N einen 5 bis 8 gliedrigen Ring bildet, wobei R' ausgewählt ist aus H, C₁₋₁₈-Alkyl und C₁₋₁₈-Hydroxyalkyl;
wobei R⁶ ausgewählt ist aus H; OH; CN; C₁₋₂₀-Alkyl; C₁₋₂₀-Hydroxyalkyl; -O-C(=O)R^{b} mit R^{b}= H, C₁₋₂₀-Alkyl, C₂₋₂₀-Alkenyl, C₂₋₂₀-Alkinyl, C₆₋₂₀-Aryl oder C₇₋₃₂-Arylalkyl; -O-C(=O)-(CH₂)ₘ-C(=O)-O-R^{c}, wobei m=1-10, R^{c}= H, C₁₋₂₀-Alkyl, C₂₋₂₀-Alkenyl, C₂₋₂₀-Alkinyl, C₆₋₂₀-Aryl, C₇₋₃₂-Arylalkyl oder 1,2,2,6,6-Pentamethyl-piperidin-4-yl ist; -O-R^{d} mit R^{d} = C₂₋₂₀-Alkenyl, C₂₋₂₀-Alkinyl, C₆₋₂₀-Aryl, C₇₋₃₂-Arylalkyl oder 1,2,2,6,6-Pentamethyl-piperidin-4-yl; -NR^{x}R^{y}, wobei R^{x} und R^{y} unabhängig voneinander H, C₁₋₂₀-Alkyl, C₂₋₂₀-Alkenyl, C₆₋₂₀-Aryl, C₇₋₃₂-Arylalkyl, C₁₋₂₀-Hydroxyalkyl oder C₁₋₂₀-Aminoalkyl sind;
oder wobei zwei Reste R⁶ zusammen mit dem Kohlenstoffatom, an das sie gebunden sind, einen Ring -C-(O-CH₂-CH₂-O)-, -C-(O-CH₂-CH₂-CH₂-O)-, -C-(O-C(CH₃)₂-C(CH₃)₂-O)- oder -C-(NH-C(=O)-NH-C(=O))- bilden;
- R¹, R², R³ und R⁴: sind unabhängig voneinander ausgewählt aus C₁₋₂₀-Alkyl, C₂₋₂₀-Alkenyl und C₇₋₃₂-Arylalkyl; bevorzugt C₁₋₂₀-Alkyl;
- R⁵: ist H; C₁₋₂₀-Alkyl; C₂₋₂₀-Alkenyl; C₇₋₃₂-Arylalkyl; C₁₋₂₀-Hydroxyalkyl; C₁₋₂₀-Cyanoalkyl; C₁₋₂₀-Sulfoalkyl; C₁₋₂₀-Phosphonoalkyl; -(CH₂-CH(R^{a})-O)_{q}-H mit q=1-20 und R^{a}=H oder C₁₋₆-Alkyl; -C(=O)-R^{h} mit R^{h}= H, C₁₋₂₀-Alkyl, C₂₋₂₀-Alkenyl, C₆₋₂₀-Aryl oder C₇₋₂₀-Arylalkyl; 2,2,6,6-Tetramethyl-4-piperidinol-1-yl-alkyl oder 4-(2,2,6,6-Tetramethyl-4-piperidinol-1-yl-alkyl)benzyl.

Bevorzugt bezieht sich die Erfindung auf Zusammensetzungen, wobei mindestens ein Stabilisator S ausgewählt aus Verbindungen der Formeln (II) bis (IV) enthalten ist: 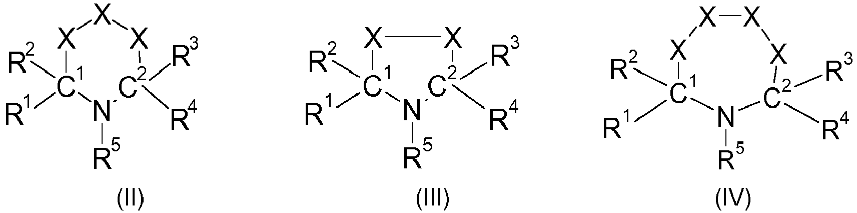 wobei X unabhängig voneinander eine Gruppe ausgewählt aus C(R⁶)₂, N-R' und C=O ist, und wobei die Reste R¹, R², R³, R⁴, R⁵, R⁶ und R' die oben definierten Bedeutungen haben.

Für den Stabilisator S ausgewählt aus Verbindungen der Formeln (II) bis (IV) gelten die oben beschriebenen bevorzugten Ausführungsformen der Reste R¹, R², R³, R⁴, R⁵, R⁶ und R'.

Bevorzugt bezieht sich die Erfindung auf Zusammensetzungen, wobei mindestens ein Stabilisator S ausgewählt aus Verbindungen der Formeln (X1) bis (X5) enthalten ist: 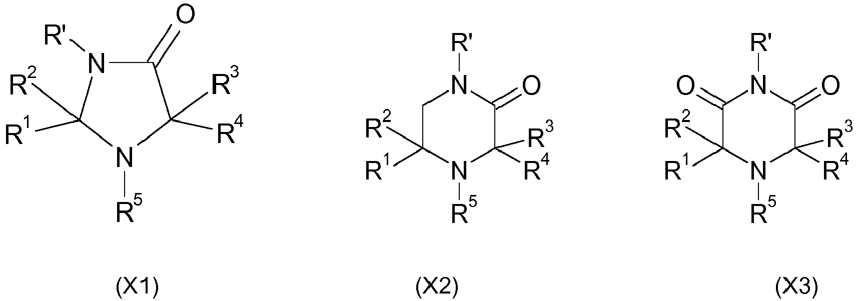 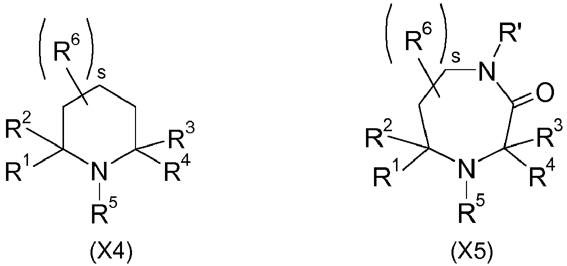 wobei die Reste R¹, R², R³, R⁴, R⁵ R⁶ und R' die oben definierten Bedeutungen haben und s eine Zahl von 0 bis 6, bevorzugt von 1 bis 3, insbesondere bevorzugt 1 ist.

Für den Stabilisator S ausgewählt aus Verbindungen der Formeln (X1) bis (X5) gelten die oben beschriebenen bevorzugten Ausführungsformen der Reste R¹, R², R³, R⁴, R⁵, R⁶ und R'.

Insbesondere bevorzugt sind Verbindungen der Formel (X4). Insbesondere bevorzugt sind Verbindungen der Formel (X4), die genau einen Rest R⁶ in 4-Position enthalten, wobei R⁶ nicht H ist.

Bevorzugt ist in Verbindungen der Formeln (X1) bis (X5) R¹=R² und R³ = R⁴, insbesondere bevorzugt ist R¹=R²=R³=R⁴. Bevorzugt handelt es sich bei um R¹=R² und R³ = R⁴ um Methyl, Ethyl, n-Propyl oder iso-Propyl, insbesondere bevorzugt um Methyl.

Bevorzugt ist in Verbindungen der Formeln (X1) bis (X5) R⁵ ausgewählt aus C₁₋₁₂-Alkyl (beispielsweise Methyl, Ethyl, n-Propyl oder Iso-Propyl); C₂₋₁₂-Alkenyl (beispielsweise Allyl); C₇₋₂₀-Arylalkyl (beispielsweise Benzyl); C₁₋₁₂-Cyanoalkyl (beispielsweise Cyanomethyl); C₁₋₁₂-Sulfo-alkyl (beispielsweise 3-Sulfopropyl); C₁₋₁₂-Phosphonoalkyl (beispielsweise Phosphonatomethyl); -(CH₂-CH(R^{a})-O)_{q}-H mit q=1-10, bevorzugt 1-5, insbesondere bevorzugt 1 und R^{a}=H oder C₁₋₆-Alkyl; -C(=O)-R^{h} mit R^{h}= C₁₋₁₂-Alkyl; 2,2,6,6-Tetramethyl-4-piperidinol-1yl-alkyl oder 4-(2,2,6,6-Tetramethyl-4-piperidinol-1yl-alkyl)benzyl.

Bevorzugt ist in Verbindungen der Formeln (X1) bis (X5) R⁶ ausgewählt aus H; OH; -O-C(=O)R^{b} mit R^{b}= H oder C₁₋₂₀-Alkyl; -O-C(=O)-(CH₂)ₘ-C(=O)-O-R^{c} mit m=1-3, bevorzugt m=1 und R^{c}= H, C₁₋₂₀-Alkyl oder 1,2,2,6,6-Pentamethyl-piperidin-4-yl; -O-R^{d} mit R^{d} = C₂₋₂₀-Alkenyl; -NR^{x}R^{y} mit R^{x} und R^{y} sind unanbhängig voneinander H, C₁₋₂₀-Alkyl, C₁₋₂₀-Hydroxyalkyl oder C₁₋₂₀-Aminoalkyl;
oder zwei Reste R⁶ bilden zusammen mit dem Kohlenstoffatom, an das sie gebunden sind, einen Ring -C-(O-CH₂-CH₂-O)- oder -C-NH-C(=O)-NH-C(=O))-. Bevorzugt ist in Verbindungen der Formeln (X1) bis (X5) R⁶ = -OH.

Bevorzugt ist in Verbindungen der Formeln (X1) bis (X5) R' ausgewählt aus H, C₁₋₂₀-Alkyl und C₁₋₂₀-Hydroxyalkyl, bevorzugt ist R'=H.

Bevorzugt wird ein Stabilisator S ausgewählt aus Verbindungen der Formel (V) eingesetzt: 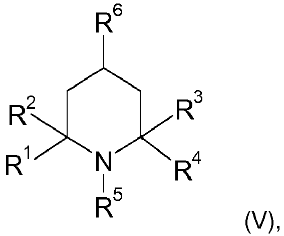 wobei die Reste R¹, R², R³, R⁴, R⁵ und R⁶ die oben beschriebenen Bedeutungen haben.

Für den Stabilisator S gemäß Formel (V) gelten die oben beschriebenen bevorzugten Ausführungsformen der Reste R¹, R², R³, R⁴, R⁵ und R⁶.

Besonders bevorzugt sind Verbindungen der Formel (V), wobei die Reste die folgenden Bedeutungen haben:
- R¹, R², R³ und R⁴: sind unabhängig voneinander ausgewählt aus C₁₋₆-Alkyl, bevorzugt ausgewählt aus Methyl, Ethyl, n-Propyl oder iso-Propyl, besonders bevorzugt Methyl;
- R⁵: ist ausgewählt aus H; C₁₋₂₀-Alkyl; C₂₋₂₀-Alkenyl; C₇₋₃₂-Arylalkyl; C₁₋₂₀-Hydroxyalkyl; C₁₋₂₀-Cyanoalkyl; C₁₋₂₀-Sulfoalkyl; C₁₋₂₀-Phosphonoalkyl; -(CH₂-CH(R^{a})-O)_{q}-H mit q=1-20 und R^{a}=H oder C₁₋₆-Alkyl; -C(=O)-R^{h} mit R^{h}= H, C₁₋₂₀-Alkyl, C₂₋₂₀-Alkenyl, C₆₋₂₀-Aryl oder C₇₋₂₀-Arylalkyl; 2,2,6,6-Tetramethyl-4-piperidinol-1yl-alkyl oder 4-(2,2,6,6-Tetramethyl-4-piperidinol-1yl-alkyl)benzyl; besonders bevorzugt ist R⁵ ausgewählt aus H, C₁₋₁₂-Alkyl oder -(CH₂-CH(R^{a})-O)_{q}-H mit q=1 und R^{a}=H oder C₁₋₆-Alkyl; insbesondere bevorzugt aus C₁₋₁₂-Alkyl oder -(CH₂-CH(R^{a})-O)_{q}-H mit q=1 und R^{a}=H oder C₁₋₆-Alkyl;
- R⁶: ist ausgewählt aus H; OH; C₁₋₂₀-Alkyl; C₁₋₂₀-Hydroxyalkyl; -O-C(=O)R^{b} mit R^{b}= H, C₁₋₂₀-Alkyl, C₂₋₂₀-Alkenyl, C₆₋₂₀-Aryl, oder C₇₋₃₂-Arylalkyl; -O-C(=O)-(CH₂)ₘ-C(=O)-O-R^{c} mit m=1-10 und R^{c}= H, C₁₋₂₀-Alkyl, C₂₋₂₀-Alkenyl, C₆₋₂₀-Aryl, C₇₋₃₂-Arylalkyl oder 1,2,2,6,6-Pentamethyl-piperidin-4-yl; -O-R^{d} mit R^{d} = C₂₋₂₀-Alkenyl, C₆₋₂₀-Aryl, C₇₋₃₂-Arylalkyl oder 1,2,2,6,6-Pentamethyl-piperidin-4-yl; -NR^{x}R^{y}, wobei R^{x} und R^{y} unabhängig voneinander H, C₁₋₂₀-Alkyl, C₂₋₂₀-Alkenyl, C₆₋₂₀-Aryl, C₇₋₃₂-Arylalkyl, C₁₋₂₀-Hydroxyalkyl oder C₁₋₂₀-Aminoalkyl sind.

Besonders bevorzugt sind Verbindungen der Formel (V), wobei die Reste die folgenden Bedeutungen haben:
R¹=R² und R³ = R⁴ ausgewählt aus Methyl, Ethyl, n-Propyl oder iso-Propyl, insbesondere bevorzugt R¹=R²=R³=R⁴=Methyl.
- R⁵: ist ausgewählt aus H, C₁₋₁₂-Alkyl (beispielsweise Methyl, Ethyl, n-Propyl oder Iso-Propyl) oder -(CH₂-CH(R^{a})-O)_{q}-H mit q=1 und R^{a}=H oder C₁₋₆-Alkyl; insbesondere bevorzugt aus C₁₋₁₂-Alkyl oder -(CH₂-CH(R^{a})-O)_{q}-H mit q=1 und R^{a}=H oder C₁₋₆-Alkyl;
- R⁶: ist ausgewählt aus H, OH; -O-C(=O)R^{b} mit R^{b}= H oder C₁₋₂₀-Alkyl; -O-C(=O)-(CH₂)ₘ-C(=O)-O-R^{c} mit m=1-3 (bevorzugt m=1) und R^{c}= H, C₁₋₁₈-Alkyl oder 1,2,2,6,6-Pentamethyl-piperidin-4-yl; -O-R^{d} mit R^{d} = C₂₋₂₀-Alkenyl; -NR^{x}R^{y}, wobei R^{x} und R^{y} unabhängig vonainander H, C₁₋₂₀-Alkyl, C₁₋₂₀-Hydroxyalkyl oder C₁₋₂₀-Aminoalkyl sind.

Besonders bevorzugt sind Verbindungen der Formel (V) mit R⁶=OH.

Insbesondere bevorzugt sind Stabilisatoren der Formel (VI): 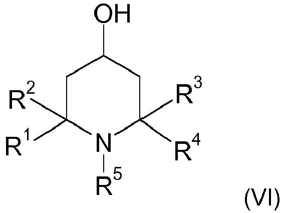 wobei die Reste R¹, R², R³, R⁴ und R⁵ die oben beschriebenen Bedeutungen haben.

Für den Stabilisator S gemäß Formel (VI) gelten die oben beschriebenen bevorzugten Ausführungsformen der Reste R¹, R², R³, R⁴ und R⁵.

Besonders bevorzugt sind Verbindungen der Formel (VI), wobei die Reste die folgenden Bedeutungen haben:
- R¹, R², R³ und R⁴: sind unabhängig voneinander ausgewählt aus C₁₋₆-Alkyl, bevorzugt ausgewählt aus Methyl, Ethyl, n-Propyl oder iso-Propyl, besonders bevorzugt Methyl;
- R⁵: ist H; C₁₋₂₀-Alkyl; C₂₋₂₀-Alkenyl; C₇₋₃₂-Arylalkyl; C₁₋₂₀-Hydroxyalkyl; C₁₋₂₀-Cyanoalkyl; C₁₋₂₀-Sulfoalkyl; C₁₋₂₀-Phosphonoalkyl; -(CH₂-CH(R^{a})-O)_{q}-H mit q=1-20 (bevorzugt q=1-5) und R^{a}=H oder C₁₋₆-Alkyl; -C(=O)-R^{h} mit R^{h}= H, C₁₋₂₀-Alkyl, C₂₋₂₀-Alkenyl, C₆₋₂₀-Aryl oder C₇₋₂₀-Arylalkyl; 2,2,6,6-Tetramethyl-4-piperidinol-1-yl-alkyl oder 4-(2,2,6,6-Tetramethyl-4-piperidinol-1-yl-alkyl)benzyl;
besonders bevorzugt ist R⁵ ausgewählt aus H, C₁₋₁₂-Alkyl oder -(CH₂-CH(R^{a})-O)_{q}-H mit q=1 und R^{a}=H oder C₁₋₆-Alkyl; insbesondere bevorzugt aus C₁₋₁₂-Alkyl oder -(CH₂-CH(R^{a})-O)_{q}-H mit q=1 und R^{a}=H oder C₁₋₆-Alkyl;

Besonders bevorzugt sind Verbindungen der Formel (VI), wobei die Reste die folgenden Bedeutungen haben:
- R¹, R², R³ und R⁴: sind unabhängig voneinander ausgewählt aus C₁₋₆-Alkyl, bevorzugt ausgewählt aus Methyl, Ethyl, n-Propyl oder iso-Propyl, besonders bevorzugt Methyl;
- R⁵: ist H; C₁₋₁₂-Alkyl; C₂₋₁₂-Alkenyl; C₁₋₆-Hydroxyalkyl oder -(CH₂-CH(R^{a})-O)_{q}-H mit q=1 und R^{a}=H oder C₁₋₆-Alkyl.

Besonders bevorzugt sind Verbindungen der Formel (VI), wobei die Reste die folgenden Bedeutungen haben:
R¹, R², R³ und R⁴ sind Methyl;
R⁵ ist C₁₋₁₂-Alkyl; -CH₂-CH(R^{a})-O-H mit R^{a}=H oder C₁₋₆-Alkyl.

Insbesondere können eine oder mehrere der folgenden Verbindungen V1 bis V56 als Stabilisator S eingesetzt werden: 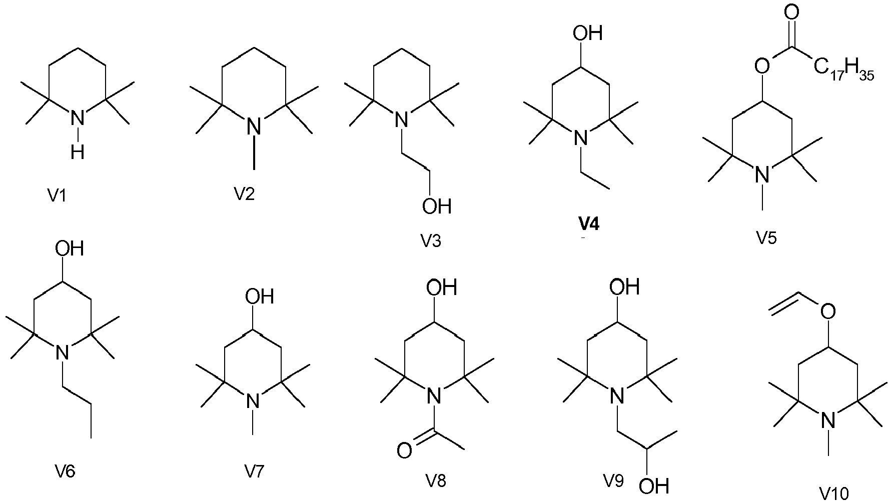 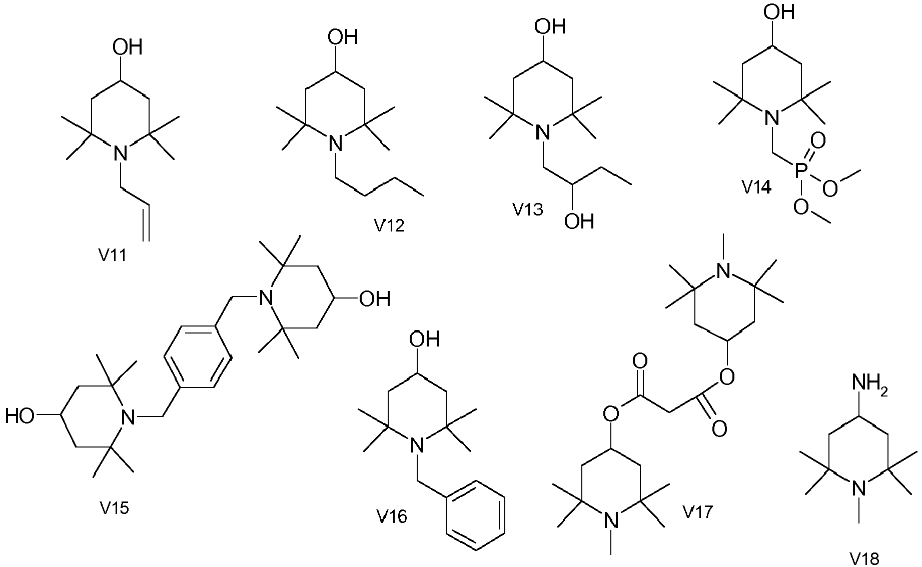 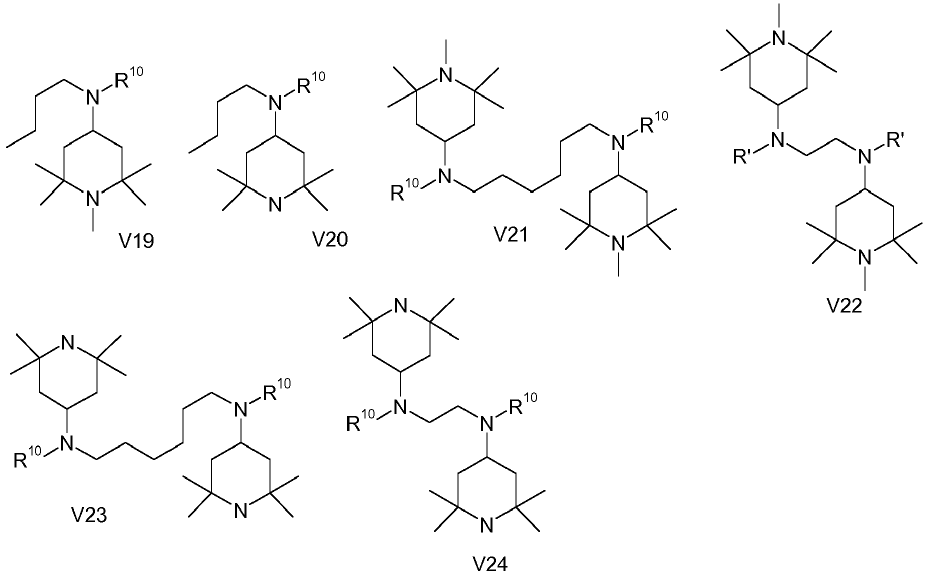 mit R10=H oder C1-C8-Alkyl 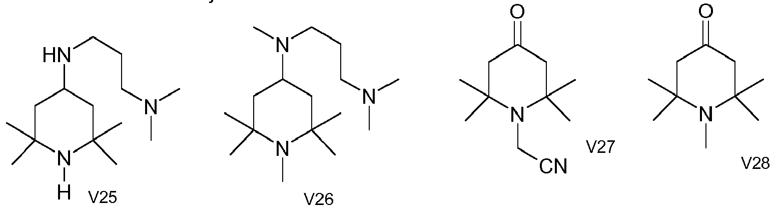 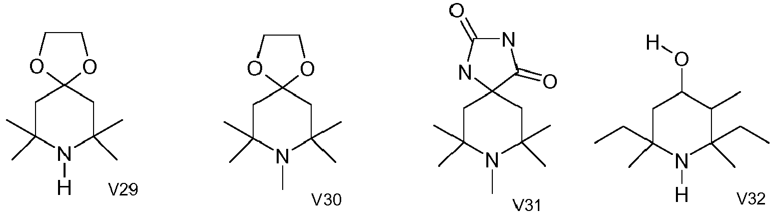 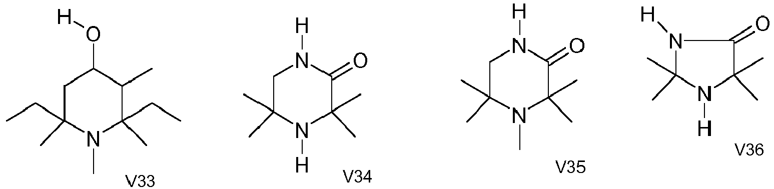 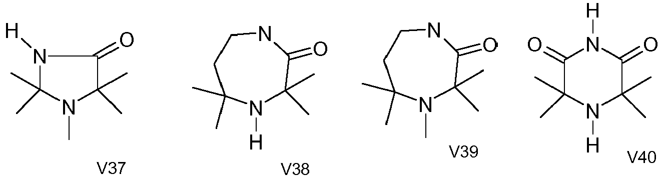 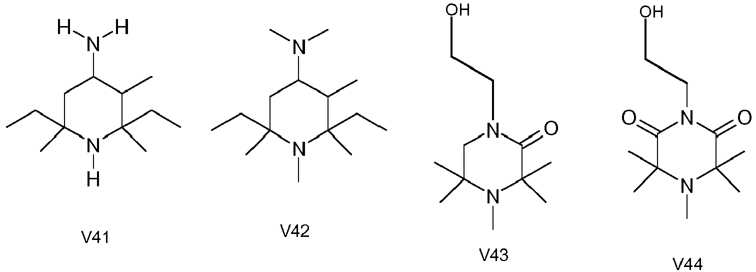 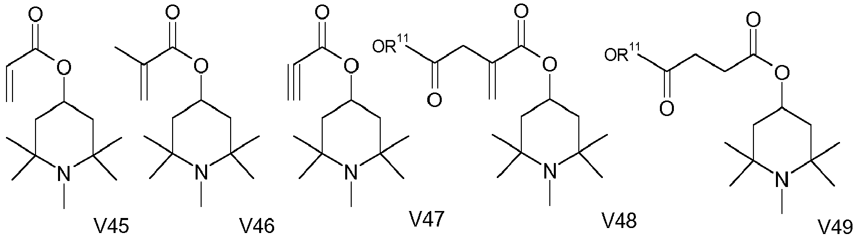 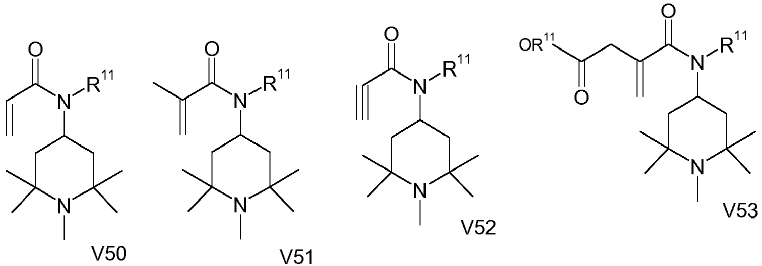 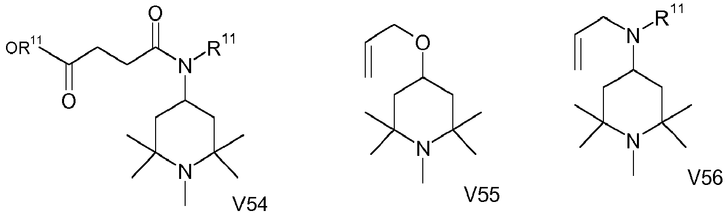 mit R11=H,C1-C8-Alkyl oder 1,2,2,6,6-Pentamethyl-piperidin-4yl

Bevorzugt ist die Verwendung mindestens einer Verbindung ausgewählt aus V4, V7, V8, V9, V11 und V13 als Stabilisator S.

Besonders bevorzugt ist die Verwendung von 1,2,2,6,6-Pentamethyl-4-piperidinol (V7) als Stabilisator S

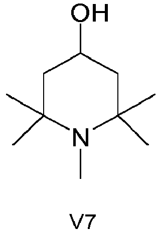

1,2,2,6,6-Pentamethyl-4-piperidinol kann alleine oder in Kombination mit einer oder mehreren Verbindungen der Formeln (I) bis (V) und (X1) bis (X5), insbesondere mit einer oder mehreren Verbindungen V1 bis V6 und V8 bis V56, wie oben beschrieben, als Stabilisator S eingesetzt werden.

Bevorzugt wird als Stabilisator ausschließlich einer oder mehrere der oben beschrieben Stabilisatoren S verwendet. Es ist aber auch möglich den oben beschriebenen Stabilisator S mit anderen bekannten Stabilisatoren zu kombinieren, z.B. Opferreagenzien (wie Alkoholen) oder anderen HALS-Verbindungen (z.B. Tinuvin 292, Sabostab UV 119, Hostavin PR 31, ADK STAB LA-52, Tinuvin 765, Cyasorb UV3529, Cyasorb UV3641, Hostavin N30, Goodrite UV3159).

Bevorzugt betrifft die Erfindung eine oben beschriebene Zusammensetzung enthaltend (insbesondere bestehend aus):
0,01 bis 99 Gew.-%, bevorzugt 0,05 bis 99,9 Gew.-%, mindestens eines oben beschriebenen Acrylamid-Polymers P;
1 bis 10.000 ppm, bevorzugt 10 bis 1.000 ppm mindestens eines oben beschriebenen Stabilisators S;
optional 0 bis 99,99 Gew.-%, bevorzugt 0 bis 99,95 Gew.-% mindestens einer weiteren Komponente, beispielsweise eines Lösungsmittels.

Bevorzugt betrifft die Erfindung eine oben beschriebene Zusammensetzung enthaltend (insbesondere bestehend aus):
98 bis 99,9999 Gew.-%, bevorzugt 99 bis 99,9 Gew.-% mindestens eines oben beschriebenen Acrylamid-Polymers P;
1 bis 20.000 ppm, bevorzugt 1.000 bis 10.000 ppm mindestens eines oben beschriebenen Stabilisators S.

### Wässrige Zusammensetzung

In einer besonders bevorzugten Ausführungsform betrifft die Erfindung eine wässrige Zusammensetzung enthaltend mindestens ein Acrylamid-Polymer P und mindestens einen Stabilisator S der Formel (I) 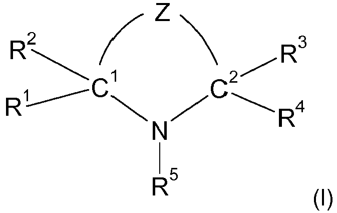 wobei die Reste die oben beschriebenen Bedeutungen haben. Die oben beschriebenen bevorzugten Ausführungsformen des Acrylamid-Polymers P und des Stabilisators S gelten für die erfindungsgemäße wässrige Zusammensetzung entsprechend.

Insbesondere kann die Zusammensetzung 70 bis 99,95 Gew.-% Wasser, bevorzugt 90 bis 99,95 Gew.-%, insbesondere bevorzugt 99,5 bis 99,95 Gew.-% Wasser enthalten. Bei dem Wasser kann es sich insbesondere um Leitungswasser, Grundwasser, Salzwasser (wie Meerwasser), Formationswasser oder Mischungen hiervon handeln.

Bevorzugt enthält die erfindungsgemäße wässrige Formulierung 0,01 bis 10 Gew.-% mindestens eines Acrylamid-Polymers P, bevorzugt 0,05 bis 0,5 Gew. %, bezogen auf die gesamte wässrige Formulierung.

Bevorzugt enthält die erfindungsgemäße wässrige Formulierung 1 bis 1.000 ppm mindestens eines oben beschriebenen Stabilisators S, bevorzugt 10 bis 100 ppm, bezogen auf die gesamte wässrige Formulierung.

Im Sinne der vorliegenden Erfindung bedeutet ppm mg/kg.

Insbesondere bevorzugt betrifft die Erfindung eine wässrige Zusammensetzung enthaltend 0,01 bis 10 Gew.-% mindestens eines oben beschriebenen Acrylamid-Polymers P und 1 bis 1.000 ppm mindestens eines oben beschriebenen Stabilisators S.

In einer Ausführungsform der Erfindung kann die wässrige Zusammensetzung einen oder mehrere weitere bekannte Stabilisatoren (Licht-, UV- und/oder Wärmestabilisatoren) enthalten, beispielsweise Reduktionsmittel (wie Sulphite, Bisulfite, Metabisulöfite, Dithionit, Hydrazin), Fällungsmittel (wie Phosphate, Hydrogenphosphate, Phytinsäure), Radikalfänger (wie Thioharnstoffe, Alkylthioharnstoffe, Mercaptobenzoimidazole (MBI), Mercaptobenzothiazole (MBT), Thiocyanate, Butylhydroxyanisole, Paremethoxyphenol, Chinolin), "Opferreagenzien" (primäre und sekundäre Mono-, Di und Polyalkohole, wie Glycerol, Propylenglycol, Trimethylenglycol, Isopropanol, 1,2-Butandiol, 1,3-Butandiol, 1,4-Butandiol, 2,3-Butandiol, 1,2,4-Butantriol, Pentaerythritol (PETA), Trimethylolethan, Neopentylglycol, 1,2-Pentandiol, 2,4-Pentandiol, 2,3-Pentandiol, Trimethylolpropan, 1,5-Pentandiol, teilweise oder vollständig hydrolisierter Polyvinylalkohol), Komplexierungsmittel (Polymere, wie Polyacrylate, Polyacetate, Polycarboxylate, Polyaspartate, Polyphosphate, Polysuccinate oder kleinere anionische Verbindungen, wie Ascorbinsäure, Zitrobnensäure, Dicarboxymethylglutamatsäure, Ethylendiaminedibernsteinsäure (EDDS), Ethylendiamintetraessigsäure (EDTA), Diethylentriaminpenta-methylenphosphonsäure (DTPMP), Maleinsäure, Nitrilotriessigsäure, Oxalsäure, Aminosäuren, Bernsteinsäure, Diethylenetriaminpentaessigsäure, Dinatrium-Malonsäure etc.) und anderen HALS-Verbindungen (z.B. Tinuvin 292, Sabostab UV 119, Hostavin PR 31, ADK STAB LA-52, Tinuvin 765, Cyasorb UV3529, Cyasorb UV3641, Hostavin N30, Goodrite UV3159). Übliche Stabilistoren sind beispielsweise in WO 2010/133258 beschrieben. Insbesondere bevorzugt enthält die Zusammensetzung, insbesondere die wässrige Zusammensetzung mindestens ein oben genanntes "Opferreagenzien". Insbesondere bevorzugt ist der Einsatz von sekundären Monoalkoholen, z.B. Isopropanol (2-Propanol).

Eine bevorzugte Ausführungsform der Erfindung betrifft eine wässrige Zusammensetzung enthaltend:
70 bis 99,99 Gew.-%, bevorzugt 90 bis 99,95 Gew.-%, insbesondere bevorzugt 99,5 bis 99,98 Gew.-%
   Wasser;
0,01 bis 10 Gew.-%, bevorzugt 0,01 bis 2 Gew. %, insbesondere bevorzugt 0,05 bis
0,5 Gew.-%, besonders bevorzugt 0,06 bis 0,2 Gew.-%
   mindestens eines oben beschriebenen Acrylamid-Polymers P;
0,1 bis 10.000 ppm, bevorzugt 1 bis 1.000 ppm, insbesondere bevorzugt 10 bis 100 ppm
   mindestens eines oben beschriebenen Stabilisators S;
optional 0 bis 30 Gew.-%, bevorzugt 0 bis 1 Gew.-%, insbesondere bevorzugt 0 bis 0,1 Gew.-%, besonders bevorzugt 10 bis 500 ppm
   mindestens eines weiteren Additives, insbesondere ausgewählt aus Licht-, UV- und Wärmestabilisatoren, bevorzugt ausgewählt aus Mono-, Di- und Polyalkoholen, insbesondere ausgewählt aus sekundären Mono-Alkoholen, z.B. Isopropanol;
wobei sich alle Angaben in Gew.-% oder ppm auf die gesamte wässrige Zusammensetzung beziehen.

Eine bevorzugte Ausführungsform betrifft eine oben beschriebene Zusammensetzung, wobei die Anteile der beschriebenen Komponenten (in Gew.-% und/oder ppm) 100 % ergeben.

Eine bevorzugte Ausführungsform betrifft eine oben beschriebene Zusammensetzung, wobei die Gewichtsprozente 100 % ergeben. Insbesondere betrifft die Erfindung eine Zusammensetzung bestehend aus den oben genannten Komponenten.

### Verfahren zur Herstellung

Weiterhin betrifft die vorliegende Erfindung ein Verfahren zur Herstellung einer oben beschriebenen erfindungsgemäßen Zusammensetzung, wobei mindestens ein Acrylamid-Polymer P und mindestens ein Stabilisator S vermischt werden und/oder mindestens ein Stabilisator S vor oder während der Polymerisation des mindestens einen Acrylamid-Polymers P zugegeben wird.

Das Vermischen des Acrylamid-Polymers P und des Stabilisators S kann insbesondere durch Vermischen der trockenen Komponenten (Acrylamid-Polymer P, Stabilisators S und optional weiterer Additive) erfolgen. In einer anderen Ausführung kann eine Lösung aus mindestens einem Stabilisator S in einem Lösungsmittel auf das Acrylamid-Polymer P aufgebracht werden (z.B. aufgesprüht werden), optional kann ein Trocknungsschritt zum Entfernen des Lösungsmittels folgen.

In einer bevorzugten Ausführungsform wird der mindestens ein Stabilisator S oder eine Lösung des mindestens einen Stabilisators S in einem Lösungsmittel, bevorzugt Wasser, auf das Acrylamid-Polymer P aufgebracht, wobei das Acrylamid-Polymer P in Form eines Gels vorliegt, beispielsweise als Produkt der unten beschriebenen Gelpolymerisation. Bevorzugt umfasst diese Ausführungsform die anschließende Trocknung des Gels.

Es ist auch möglich das Acrylamid-Polymer P und den Stabilisator S gemeinsam zu extrudieren, dazu können entweder beide Komponenten getrennt in den Extruder gegeben werden oder aber es wird zunächst eine Trockenmischung hergestellt, die dann extrudiert wird.

Weiterhin besteht die Möglichkeit den mindestens einen Stabilisator S vor oder während der Polymerisation des Acrylamid-Polymers P zuzugeben. Die Polymerisation des Acrylamid-Polymers P kann beispielsweise durch Lösungs- oder Gelpolymerisation in wässriger Phase erfolgen. Die Polymerisation des Acrylamid-Polymers P kann beispielsweise wie in WO 2012/069478 und WO 2010/133527 beschrieben erfolgen.

In einer besonders bevorzugten Ausführungsform betrifft die Erfindung ein Verfahren zur Herstellung einer oben beschriebenen erfindungsgemäßen Zusammensetzung, wobei der mindestens ein Stabilisator S vor oder während der Polymerisation des mindestens einen Acrylamid-Polymers P, d.h. bei der Herstellung des mindestens einen Acrylamid-Polymers P aus den entsprechenden Monomeren, zugegeben wird.

Es hat sich zudem gezeigt, dass die oben beschriebenen Stabilisatoren S schon vor oder während der Polymerisation des Acrylamid-Polymers P zugegeben werden können, ohne dass sie einen störenden Einfluss auf die Polymerisation haben. Es wurde vielmehr überraschenderweise gefunden, dass das resultierende Acrylamid-Polymer P weitere vorteilhafte Eigenschaften aufweist, wenn ein oben beschriebener Stabilisator S, insbesondere Hydroxypentamethylpiperidin PMP, vor oder während der Herstellung des Polymers in die Monomer-Lösung, enthaltend Acrylamid und ggf. weitere Monomere (Co-Monomere), gegeben wird. Neben der Stabilisierung der Acrylamid-Polymere P gegen radikalischen Abbau (Lagerstabilität) können überraschenderweise die folgenden weiteren Vorteile erhalten werden:
- Optimierung der Filtrierbarkeit (z.B. Millipore filtration ratio, MPFR) des Acrylamid-Polymers P;
- Verringerung der unlöslichen Gelanteile im Acrylamid-Polymer P;
- Erhöhung der Viskosität der resultierenden Polymerlösung des Acrylamid-Polymers P.

Bevorzugt betrifft die Erfindung ein Verfahren zur Herstellung einer oben beschriebenen erfindungsgemäßen Zusammensetzung, wobei der mindestens ein Stabilisator S vor der Polymerisation des mindestens einen Acrylamid-Polymers P zugegeben wird, und wobei eine Monomer-Lösung, bevorzugt eine wässrige Monomer-Lösung, welche Acrylamid, optional ein oder mehrere weitere Monomere, insbesondere mindestens ein Monomer ausgewählt aus den oben beschriebenen Monomeren a) bis d), insbesondere ausgewählt aus den Monomeren a) und b), mindestens einen oben beschriebenen Stabilisator S und mindestens ein Lösungsmittel, insbesondere Wasser, enthält, polymerisiert wird.

Im Zusammenhang mit den optionalen weiteren Monomeren, d.h. den Monomeren (a) bis (d), gelten die oben genannten bevorzugten Ausführungsformen entsprechend.

Insbesondere weist die Monomer-Lösung eine Konzentration an Monomeren im Bereich von 10 bis 50 Gew.-%, bevorzugt 20 bis 40 Gew.-%, bezogen auf die gesamte Monomer-Lösung, auf. Die Konzentration aller Komponenten der Monomer-Lösung mit Ausnahme des Lösungsmittels, insbesondere Wasser, beträgt üblicherweise 10 bis 60 Gew.-%, bevorzugt 20 bis 50 Gew.-%, besonders bevorzugt 25 bis 40 Gew.-%.

Insbesondere weist die Monomer-Lösung eine Konzentration an Stabilisator S im Bereich von 0,1 bis 2 Gew.-%, bevorzugt von 0,2 bis 1 Gew.-%, besonders bevorzugt von 0,2 bis 0,8 Gew.-%, insbesondere bevorzugt von 0,3 bis 0,8 Gew.-%, bezogen auf die Gesamtmenge der Monomere in der Monomer-Lösung, auf.

Insbesondere weist die Monomer-Lösung eine Konzentration an Stabilisator S im Bereich von 0,01 bis 1 Gew.-%, bevorzugt von 0,02 bis 0,5 Gew.-%, besonders bevorzugt von 0,02 bis 0,4 Gew.-%, insbesondere bevorzugt von 0,03 bis 0,4 Gew.-%, bezogen auf die gesamte Monomer-Lösung, auf.

Bevorzugt enthält die oben beschriebene Monomer-Lösung einen gängigen Initiatoren für die radikalische Polymerisation, insbesondere ausgewählt aus Peroxid-Initiatoren, Azo-Initiatoren und Redox-Initiatoren. Typische Peroxid-Initiatoren sind beispielsweise Dibenzoylperoxid (DBPO), Cyclohexylsulfonylacetylperoxid (SPO), Diisopropylperoxydicarbonat (DIPP), Butylperoxypivalat, Dilaurylperoxid (DLPO), tert-Butylhydroperoxid (t-BHP) und Cumolhydroperoxid. Typische Azo-Initiatoren sind beispielsweise 4,4'-Azobis-4-cyanovaleriansäure (ACVA), 2,2'-Azobis(2-methylpropionamidin)-dihydrochlorid, 2,2'-Azobis(2-methylpropionitril), 2,2'-Azobis(2-methylbutannitril), 2,2'-Azobis(2,4-dimethylvaleronitril), 1,1'-Azobis(cyanocyclohexan), 1,1'-Azobis(N,N-dimethylformamide), 2,2'-Azobis(2-methylbutyronitril), 2,2'-Azobis(4-methoxy-2,4-dimethylvaleronitril), 2,2'-Azobis(2,4,4-trimethylpentane). Typische Redox-Initatoren sind beispielsweise Mischungen aus einem Oxidationsmittel, wie Wasserstoffperoxid, Peroxodisulfaten oder oben genannten Peroxid-Verbindungen, und einem Reduktionsmittel, wie Eisen(II)-Salzen, Silber(I)-Salzen, Cobalt(II)-Salzen, Sulfiten, Hydrogensulfiten oder Thiosulfaten. Insbesondere enthält die Monomer-Lösung 0,01 bis 5 ppm, bevorzugt 0,01 bis 1 ppm, bezogen auf die gesamte Monomer-Lösung, mindestens eines Initiators, insbesondere ausgewählt aus 4,4'-Azobis(4-cyanovaleriansäure) (ACVA), Azo-bis-(isobutyronitril) (AIBN), Dibenzoylperoxid (DBPO), tert-Butylhydroperoxid (t-BHP) und Redox-Initiatoren enthaltend mindestens eine Peroxidverbindung und mindestens ein Sulfit.

Als Lösungsmittel enthält die Monomer-Lösung bevorzugt Wasser, oder eine Mischung aus Wasser und einem oder mehreren geeigneten mit Wasser mischbaren organischen Lösungsmitteln, wobei der Anteil von Wasser im Regelfalle mindestens 50 Gew.-%, bevorzugt mindestens 80 Gew.-% und besonders bevorzugt mindestens 90 Gew.-%, bezogen auf das gesamte Lösungsmittel, beträgt. Als organische Lösungsmittel können bekannte polare, mit Wasser mischbare Lösungsmittel, wie Alkohole oder Dimethylsulfoxid (DMSO) eingesetzt werden. Als organische Lösungsmittel können insbesondere mit Wasser mischbare Alkohole wie Methanol, Ethanol oder Propanol eingesetzt werden.

Saure oder basische Monomere können vor der Polymerisation ganz oder teilweise neutralisiert werden. Bevorzugt liegt der pH-Wert der Monomer-Lösung im Bereich von 4 bis 9, bevorzugt im Bereich von 5 bis 8.

Bevorzugt wird eine Monomer-Lösung eingesetzt, welche 10 bis 50 Gew.-%, bevorzugt 20 bis 40 Gew.-%, Monomere, insbesondere ausgewählt aus Acrylamid und den oben beschriebenen Monomeren a) bis d); 0,01 bis 1 Gew.-%, bevorzugt von 0,02 bis 0,5 Gew.-%, mindestens eines Stabilisator S; 0,01 bis 5 ppm, bevorzugt 0,01 bis 1 ppm eines oben genannten radikalischen Initiators und mindestens ein Lösungsmittel, bevorzugt Wasser enthält, wobei sich alle Angaben auf die gesamte Monomer-Lösung beziehen. In einer bevorzugten Ausführungsform ergeben die genannten Komponenten 100 Gew.-%. Das mindestens eine Lösungsmittel, bevorzugt

Wasser, ist typischerweise in einer Menge von 49 bis 89,99 Gew.-%, bevorzugt 59,5 bis 79,98 Gew.-%, bezogen auf die gesamte Monomer-Lösung, enthalten.

Bevorzugt erfolgt die Polymerisation der Monomer-Lösung mittels Gelpolymerisation, bevorzugt mittels adiabatischer Gelpolymerisation. Bevorzugt betrifft die Erfindung ein Verfahren, wobei mindestens ein Stabilisator S vor oder während der Polymerisation des mindestens einen Acrylamid-Polymers P zugegeben wird, und wobei die Polymerisation mittels adiabatischer Gelpolymerisation einer wässrigen Monomer-Lösung erfolgt, welche Acrylamid, optional ein oder mehrere weitere Monomere (insbesondere mindestens ein Monomer ausgewählt aus den oben beschriebenen Monomeren a) und d), bevorzugt aus a) und b)), mindestens einen oben beschriebenen Stabilisator S und mindestens ein Lösungsmittel enthält. Typischerweise wird bei der Gelpolymerisation eine konzentrierte Monomer-Lösung, insbesondere eine wässrige Monomer-Lösung eingesetzt. Typischerweise wird die Monomer-Lösung auf -5 °C bis 0°C, bevorzugt auf etwa 0°C, gekühlt und dann fotochemisch und/oder thermisch polymerisiert. Bevorzugt erfolgt die Polymerisation durch Zugabe geeigneter Initiatoren für die radikalische Polymerisation, z.B. Peroxide (wie tert-Butylhydroperoxid), Azoverbindungen (wie Azo-bis-(isobutyronitril)) oder Redox-Initiatoren. Die fotochemische Polymerisation wird üblicherweise bei Temperaturen von -5 bis 10° C gestartet, die thermische Polymerisation wird üblicherweise bei Temperaturen von -5 bis 50° C gestartet. Bevorzugt können fotochemische und thermische Polymerisation miteinander kombiniert werden.

Typischerweise wird die Monomer-Lösung bzw. die Reaktionsmischung während der Polymerisation nicht gerührt.

Während der Polymerisation steigt die Temperatur in der Regel aufgrund der Reaktionswärme auf etwa 80 bis 95°C. Es wird typischerweise ein Polymergel erhalten, welches anschließend zerkleinert, getrocknet und/oder gemahlen werden kann. Die Trocknung sollte bevorzugt bei Temperaturen unterhalb von 100 °C erfolgen. Zum Vermeiden von Zusammenkleben kann man für diesen Schritt ein geeignetes Trennmittel verwenden. Man erhält das Acrylamid-Polymer P als Pulver.

Bevorzugt betrifft die Erfindung ein Verfahren wie beschrieben, wobei der mindestens ein Stabilisator S vor oder während der Polymerisation des mindestens einen Acrylamid-Polymers P zugegeben wird, und wobei die Polymerisation mittels adiabatischer Gelpolymerisation einer wässrigen Monomer-Lösung erfolgt, welche Acrylamid; optional ein oder mehrere weitere Monomere; 0,1 bis 2 Gew.-%, bevorzugt von 0,2 bis 1 Gew.-%, besonders bevorzugt von 0,2 bis 0,8 Gew.-%, insbesondere bevorzugt von 0,3 bis 0,8 Gew.-%, bezogen auf die Gesamtmenge der Monomere in der Monomer-Lösung, mindestens einen Stabilisators S, und mindestens ein Lösungsmittel, enthaltend mindestens 50 Gew.-% Wasser, bezogen auf das gesamte Lösungsmittel, enthält.

Weitere Einzelheiten zur Durchführung einer Gelpolymerisation sind beispielsweise in WO 2010/133527 (Seiten 18 und 19) und DE 10 2004 032 304 A1 (Abschnitte [0037] bis [0041]) beschrieben.

Es ist zudem möglich, dass die Polymerisation der Monomer-Lösung mittels Emulsionspolymerisation erfolgt. Die Durchführung einer Emulsionspolymerisation zur Herstellung von Acrylamid-Polymeren ist beispielsweise von WO 2009/019225, Seite 5, Zeile 16 bis Seite 8, Zeile 13 offenbart.

In einer Ausführungsform ist es möglich den Stabilisator S, ggf. in Form einer Lösung, auf das Acrylamid-Polymer-Rohprodukt direkt nach der Polymerisation, insbesondere vor der Aufarbeitung und/oder Trocknung des Acrylamid-Polymers P, zuzugeben. Beispielsweise kann der Stabilisator S auf ein nach der Gelpolymerisation erhaltenes Acrylamid-Polymer-Gel P (Acrylamid-Polymer-Rohprodukt) aufgebracht werden, z.B. aufgesprüht werden. Insbesondere kann der Stabilisator S, ggf. in Form einer Lösung, auf zerkleinerte Gelpartikel nach der Gelpolymerisation des Acrylamid-Polymers P aufgebracht werden, z.B. aufgesprüht werden.

Weiterhin ist es möglich den Stabilisator S, ggf. in Form einer Lösung, während der Aufarbeitung des Acrylamid-Polymers, z.B. während der Trocknung nach der Gel-Polymerisation, zuzugeben.

Der Stabilisator kann insbesondere in Form einer Lösung auf das Acrylamid-Polymer P aufgebracht werden, wobei als Lösungsmittel bevorzugt Wasser, oder eine Mischung aus Wasser und einem oder mehreren geeigneten mit Wasser mischbaren organischen Lösungsmitteln verwendet wird, wobei der Anteil von Wasser im Regelfalle mindestens 50 Gew.-%, bevorzugt mindestens 80 Gew.-% und besonders bevorzugt mindestens 90 Gew.-%, bezogen auf das gesamte Lösungsmittel, beträgt. Als organische Lösungsmittel können bekannte polare, mit Wasser mischbare Lösungsmittel, wie Alkohole oder Dimethylsulfoxid (DMSO) eingesetzt werden. Als organische Lösungsmittel können insbesondere mit Wasser mischbare Alkohole wie Methanol, Ethanol oder Propanol eingesetzt werden. Der Stabilisator S kann insbesondere in Form einer Lösung auf das Acrylamid-Polymer P aufgebracht werden, wobei der Stabilisators S in dieser Lösung typischerweise im Bereich von 1 bis 50 Gew.-%, bevorzugt von 2 bis 30 Gew.-%, insbesondere bevorzugt von 2 bis 15 Gew.-%, bezogen auf die Gesamtmenge der Lösung, enthalten ist.

Insbesondere betrifft die Erfindung ein Verfahren zur Herstellung der oben beschriebenen erfindungsgemäßen Zusammensetzung, wobei mindestens einer der folgenden Schritte umfasst ist: Vermischen des Stabilisators S mit dem Acrylamid-Polymer P; Extrudieren einer Mischung aus Acrylamid-Polymer P und Stabilisator S; Aufbringen, z.B. Aussprühen, einer Lösung des Stabilisators S in einem Lösungsmittel auf ein Acrylamid-Polymer P; Zugabe des Stabilisator S vor oder während der Polymerisation des Acrylamid-Polymers P. Bei dem Acrylamid-Polymer P kann es sich beispielsweise um ein festes Acrylamid-Polymer P und/oder um ein Acrylamid-Polymer-Gel P handeln. Insbesondere ist, wie oben beschrieben, unter festem Acrylamid-Polymer P das aufgearbeitete und getrocknete Produkt der oben beschriebenen Gelpolymerisation zu verstehen, bevorzugt handelt es sich bei dem festen Acrylamid-Polymer P um ein Pulver. Insbesondere ist, wie oben beschrieben, unter Acrylamid-Polymer-Gel P (Acrylamid-Polymer-Rohprodukt) das Rohprodukt einer Gelpolymerisation zu verstehen. Der Stabilisator S kann beispielsweise als Feststoff, Flüssigkeit oder Lösung vorliegen.

Insbesondere betrifft die Erfindung ein Verfahren zur Herstellung der oben beschriebenen erfindungsgemäßen Zusammensetzung, wobei mindestens einer der folgenden Schritte umfasst ist: Vermischen des Stabilisators S mit einem festen Acrylamid-Polymer P; Extrudieren einer Mischung aus einem festen Acrylamid-Polymer P und Stabilisator S; Aufbringen, z.B. Aussprühen, einer Lösung des Stabilisators S in einem Lösungsmittel auf ein festes Acrylamid-Polymer P; Aufbringen (z.B. Aussprühen) einer Lösung des Stabilisators S in einem Lösungsmittel auf ein Acrylamid-Polymer-Gel P, Zugabe des Stabilisators S, insbesondere in fester Form oder in Form einer Lösung, während der Trocknung eines Acrylamid-Polymer-Gels P, insbesondere nach einer Gelpolymerisation und ggf. nach Zerkleinern des erhaltenen Gels, Zugabe des Stabilisator S vor oder während der Polymerisation des Acrylamid-Polymers P.

Es besteht zudem die Möglichkeit optional ein oder mehrere oben genannte Additive, z.B. Licht-, UV- und/oder Wärmestabilisatoren, wie Reduktionsmittel, Sauerstofffänger, Fällungsmittel, "Opferreagenzien", insbesondere primäre oder sekundäre Mono-, Di und Polyalkohole, bei dem oben beschriebenen Verfahren zur Herstellung der Zusammensetzung zuzugeben. Die Zugabe der optionalen Additive kann beispielsweise zusammen mit dem Stabilisator S erfolgen.

Die erfindungsgemäße wässrige Zusammensetzung wird bevorzugt durch Lösen des mindestens einen Acrylamid-Polymers P und des mindestens einen Stabilisators S und optional weiterer Additive in Wasser hergestellt.

Zudem bezieht sich die vorliegende Erfindung auf die Verwendung einer oben beschriebenen erfindungsgemäßen Zusammensetzung bei der tertiären Erdölförderung, insbesondere beim Polymerfluten.

Die oben beschriebenen Ausführungsformen des Acrylamid-Polymers P, des Stabilisators S und der optional weiteren Additive gelten für das Verfahren zur Herstellung der Zusammensetzung und die Verwendung der Zusammensetzung entsprechend.

Die vorliegende Erfindung betrifft zudem die Verwendung eines oben beschriebenen Stabilisators S zur Stabilisierung einer wässrigen Zusammensetzung enthaltend mindestens ein Acrylamid-Polymer P. Die oben beschriebenen Ausführungsformen des Acrylamid-Polymers P, des Stabilisators S und der optional weiteren Additive der wässrigen Zusammensetzung gelten für die Verwendung des Stabilisators S entsprechend. Insbesondere betrifft die Erfindung die Verwendung des oben beschriebenen Stabilisators S zur Stabilisierung einer wässrigen Zusammensetzung enthaltend mindestens ein Acrylamid-Polymer P gegen Wärme, Licht und Sauerstoff.

Insbesondere ist es durch die Verwendung des oben beschriebenen Stabilisators S möglich, auf den Ausschluss von Sauerstoff ganz oder teilweise zu verzichten, d.h. es kann eine gute Stabilisierung der Acrylamid-Polymer-Lösung auch in Anwesenheit von Sauerstoff erreicht werden. Somit ist es beispielsweise nicht notwendig, die wässrige Zusammensetzung vor der Verwendung bei der Erdölförderung (z.B. Polymerfluten) mit einem Inertgas, z.B. Stickstoff N₂, zu behandeln (inertisieren) und/oder einen Sauerstofffänger zuzugeben. In einer bevorzugten Ausführungsform bezieht sich die Erfindung auf die Verwendung eines oben beschriebenen Stabilisators S zur Stabilisierung einer wässrigen Zusammensetzung enthaltend mindestens ein Acrylamid-Polymer P in Anwesenheit von Sauerstoff.

In einem weiteren Aspekt bezieht sich die Erfindung auf ein Verfahren zur Erdölförderung (insbesondere zur tertiären Erdölförderung), bei dem man eine wässrige Formulierung umfassend mindestens ein Acrylamid-Polymer P und mindestens einen Stabilisator S der Formel (I) 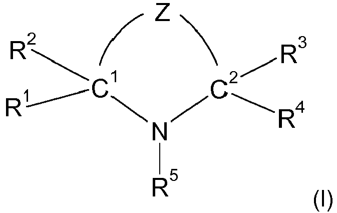 wobei die Reste die folgenden Bedeutungen haben:
- Z: ist ein bivalente Gruppe umfassend 2 bis 5 Atome und/oder Gruppen ausgewählt aus C(R⁶)₂, O, S, N-R' und C=O, wobei die Gruppe Z mit den Kohlenstoffatomen C¹, C² sowie dem Stickstoffatom N einen 5 bis 8-gliedrigen Ring bildet, wobei R' ausgewählt ist aus H, C₁₋₂₀-Alkyl, C₂₋₂₀-Alkenyl, C₆₋₂₀-Aryl, C₇₋₃₂-Arylalkyl, C₁₋₂₀-Hydroxyalkyl, C₁₋₂₀-Aminoaikyi, C₁₋₂₀-Cyanoalkyl, C₁₋₂₀-Haloalkyl, C₁₋₂₀-Sulfoalkyl und C₁₋₂₀-Phosphonoalkyl;
wobei R⁶ unabhängig voneinander ausgewählt ist aus H; OH; CN; C₁₋₂₀-Alkyl; C₂₋₂₀-Alkenyl; C₂₋₂₀-Alkinyl; C₆₋₂₀-Aryl; C₇₋₃₂-Arylalkyl; C₁₋₂₀-Alkoxy; C₁₋₂₀-Hydroxyalkyl; C₁₋₂₀-Aminoalkyl; C₁₋₂₀-Cyanoalkyl; C₁₋₂₀-Haloalkyl; Halogen; C₁₋₂₀-Sulfoalkyl; C₁₋₂₀-Phosphonoalkyl; -(CH₂-CH(R^{a})-O)_{q}-H mit q=1-20 und R^{a}=H oder C₁₋₆-Alkyl; -O-C(=O)R^{b} mit R^{b}= H, C₁₋₂₀-Alkyl, C₂₋₂₀-Alkenyl, C₂₋₂₀-Alkinyl, C₆₋₂₀-Aryl oder C₇₋₃₂-Arylalkyl; -O-C(=O)-(CH₂)ₘ-C(=O)-O-R^{c}; -O-C(=O)-Y-C(=O)-O-R^{c}, wobei m=1-10, R^{c}= H, C₁₋₂₀-Alkyl, C₂₋₂₀-Alkenyl, C₂₋₂₀-Alkinyl, C₆₋₂₀-Aryl, C₇₋₃₂-Arylalkyl oder 1,2,2,6,6-Pentamethyl-piperidin-4-yl und Y eine C₂₋₁₀-Alkenylengruppe ist; -O-R^{d} mit R^{d} = C₂₋₂₀-Alkenyl, C₂₋₂₀-Alkinyl, C₆₋₂₀-Aryl, C₇₋₃₂-Arylalkyl oder 1,2,2,6,6-Pentamethyl-piperidin-4-yl; -NR^{x}R^{y}, -N(R^{x})-C(=O)R^{y}; -N(R^{x})-C(=O)-Y- C(=O)-O-R^{y}; -N(R^{x})-(CH₂)ᵣ-NR^{y}R^{z}, wobei R^{x}, R^{y} und R^{z} unabhängig voneinander H, C₁₋₂₀-Alkyl, C₂₋₂₀-Alkenyl, C₂₋₂₀-Alkinyl, C₆₋₂₀-Aryl, C₇₋₃₂-Arylalkyl, C₁₋₂₀-Hydroxyalkyl, C₁₋₂₀-Aminoalkyl oder 1,2,2,6,6-Pentamethyl-piperidin-4-yl sind, r=1-10 und Y eine C₂₋₁₀-Alkenylengruppe ist; -(O-CH₂-CH(R^{e})-(CH₂)ᵢ)ₚ-O-R^{e'} mit p=1-20, i=0 oder 1, R^{e}=H, OH oder C₁₋₆-Alkyl und R^{e'}=H oder C₁₋₈-Alkyl; -S-R^{f}; -S-S-R^{f} mit R^{f}= H, C₁₋₂₀-Alkyl, C₂₋₂₀-Alkenyl, C₆₋₂₀-Aryl oder C₇₋₃₂-Arylalkyl;
oder wobei zwei Reste R⁶ zusammen mit dem Kohlenstoffatom, an das sie gebunden sind, einen Ring -C-(O-CH₂-CH₂-O)-, -C-(O-CH₂-CH₂-CH₂-O)-, -C-(O-C(CH₃)₂-C(CH₃)₂-O)- oder -C-(NH-C(=O)-NH-C(=O))- bilden;
- R¹, R², R³ und R⁴: sind unabhängig voneinander ausgewählt aus C₁₋₂₀-Alkyl, C₂₋₂₀-Alkenyl, C₆₋₂₀-Aryl, C₇₋₃₂-Arylalkyl, C₁₋₂₀-Aikoxy, C₁₋₂₀-Hydroxyalkyl, C₁₋₂₀-Aminoalkyl oder C₁₋₂₀-Haloalkyl;
oder die Reste R¹ und R² zusammen mit C¹ oder die Reste R³ und R⁴ zusammen mit C² bilden einen Ring, der 5 bis 7 Kohlenstoffatome umfasst und der optional durch eine oder mehrere Gruppen R⁶ substituiert sein kann;
- R⁵: ist H; C₁₋₂₀-Alkyl; C₂₋₂₀-Alkenyl; C₂₋₂₀-Alkinyl; C₆₋₂₀-Aryl; C₇₋₃₂-Arylalkyl; C₁₋₂₀-Alkoxy; C₄₋₈-Cycloalkoxy; C₁₋₂₀-Hydroxyalkyl; C₁₋₂₀-Aminoalkyl; C₁₋₂₀-Cyanoalkyl; C₁₋₂₀-Haloalkyl; C₁₋₂₀-Sulfoalkyl; C₁₋₂₀-Phosphonoalkyl; -(CH₂-CH(R^{a})-O)_{q}-H mit q=1-20 und R^{a}=H oder C₁₋₆-Alkyl; -O-C(=O)R^{b} mit R^{b}= H, C₁₋₂₀-Alkyl, C₂₋₂₀-Alkenyl, C₂₋₂₀-Alkinyl, C₆₋₂₀-Aryl oder C₇₋₃₂-Arylalkyl; -O-C(=O)-(CH₂)ₘ-C(=O)-O-R^{c}; -O-C(=O)-Y-C(=O)-O-R^{c}, wobei m=1-10, R^{c}= H, C₁₋₂₀-Alkyl, C₂₋₂₀-Alkenyl, C₂₋₂₀-Alkinyl, C₆₋₂₀-Aryl, C₇₋₃₂-Arylalkyl oder 1,2,2,6,6-Pentamethyl-piperidin-4-yl und Y eine C₂₋₁₀-Alkenylengruppe ist; -O-R^{d} mit R^{d} = C₂₋₂₀-Alkenyl, C₂₋₂₀-Alkinyl, C₆₋₂₀-Aryl, C₇₋₃₂-Arylalkyl oder 1,2,2,6,6-Pentamethyl-piperidin-4-yl; -(O-CH₂-CH(R^{e})-(CH₂)ᵢ)ₚ-O-R^{e'} mit p=1-20, i=0 oder 1, R^{e}=H, OH oder C₁₋₆-Alkyl und R^{e'}=H oder C₁₋₈-Alkyl; -C(=O)-R^{h} mit R^{h}= H, C₁₋₂₀-Alkyl, C₂₋₂₀-Alkenyl, C₆₋₂₀-Aryl oder C₇₋₂₀-Arylalkyl; 2,2,6,6-Tetramethyl-4-piperidinol-1-yl-alkyl oder 4-(2,2,6,6-Tetramethyl-4-piperidinol-1-yl-alkyl)benzyl;
durch mindestens eine Injektionsbohrung in eine unterirdische Formation einpresst und der unterirdische Formation durch mindestens eine Produktionsbohrung Rohöl entnimmt.

Für das erfindungsgemäße Verfahren zur Erdölförderung gelten entsprechend die oben im Zusammenhang mit der Zusammensetzung beschriebenen Ausführungsformen betreffend das Acrylamid-Polymer P und den Stabilisator S sowie optional weitere Additive.

Im Sinne der vorliegenden Erfindung bezeichnet "unterirdische Formation" eine unterirdische Gesteinsformation umfassend eine Lagerstätte enthaltend Rohöl.

Insbesondere betrifft die Erfindung ein Verfahren zur Erdölförderung wie oben beschrieben, wobei es sich bei dem mindestens einen Acrylamid-Polymer P um ein Copolymer handelt, welches (Meth)acrylamid und mindestens ein anionisches, monoethylenisch ungesättigtes, hydrophiles Monomer (b) umfassend mindestens eine saure Gruppe ausgewählt aus der Gruppe von -COOH, -SO₃H oder -PO₃H₂ bzw. deren Salze umfasst.

Insbesondere ist es möglich in dem erfindungsgemäßen Verfahren zur Erdölförderung unter Verwendung des Stabilisators S auf den Ausschluss von Sauerstoff ganz oder teilweise zu verzichten, d.h. es kann eine gute Stabilisierung der Acrylamid-Polymer-Lösung auch in Anwesenheit von Sauerstoff erreicht werden. Somit entfällt bei dem erfindungsgemäßen Verfahren zur Erdölförderung insbesondere der Verfahrensschritt betreffend die Behandlung der wässrigen Zusammensetzung mit einem Inertgas (Inertisierung) und/oder es kann bei dem erfindungsgemäßen Verfahren auf den Einsatz von Sauerstofffängern weitestgehend verzichtet werden. Bevorzugt betrifft die vorliegende Erfindung ein oben beschriebene Verfahren zur Erdölförderung, wobei das Verfahren in Anwesenheit von Sauerstoff (bzw. ohne einen Verfahrensschritt zum Ausschluss von Sauerstoff und/oder ohne Zugabe von Sauerstofffängern) durchgeführt wird. Ein Vorteil des erfindungsgemäßen Verfahrens zur Erdölförderung ist somit, dass ein aufwändiger Verfahrensschritt (Inertisieren) oder der Einsatz von zusätzlichen Additiven (Sauerstofffänger) entfällt.

Insbesondere handelt es sich bei dem Verfahren zur Erdölförderung um ein Verfahren des so genannten Polymerflutens. Zum Polymerfluten wird typischerweise eine wässrige, viskose Polymerformulierung in eine Bohrung eingepresst, welche in die Erdöllagerstätte (Erdölformation) hineinragt. Diese Bohrung wird üblicherweise auch Injektionsbohrung genannt und ist in der Regel mit einzementierten Stahlrohren ausgekleidet, im Bereich der Erdölformation sind diese Rohre perforiert und erlauben somit den Austritt der Polymerformulierung aus der Injektionsbohrung in die Erdöllagerstätte. Üblicherweise wird durch eine weitere Bohrung, die so genannte Produktionsbohrung, der Lagerstätte Rohöl entnommen.

Insbesondere betrifft die Erfindung ein Verfahren zur Erdölförderung wie oben beschrieben, wobei die unterirdische Formation eine Temperatur im Bereich von 30 bis 180 °C, insbesondere von 80 bis 150 °C aufweist. Insbesondere betrifft die Erfindung ein Verfahren zur Erdölförderung wie oben beschrieben, wobei die unterirdische Formation eine Porösität von durchschnittlich 10 Milli-Darcy bis 4 Darcy aufweist.

Zur Erhöhung der Erdölausbeute kann das Polymerfluten vorteilhaft mit anderen Techniken der tertiären Erdölförderung kombiniert werden. In einer bevorzugten Ausführungsform der Erfindung kann das Polymerfluten unter Verwendung der oben beschriebenen erfindungsgemäßen Zusammensetzungen mit einem vorangehenden, sogenannten Tensidfluten kombiniert werden.

Hierbei kann insbesondere vor dem Polymerfluten zunächst eine wässrige Tensidformulierung in die Erdölformation eingepresst werden, wodurch die Grenzflächenspannung zwischen dem Formationswasser und dem Erdöl verringert und somit die Mobilität des Erdöls in der Formation erhöht wird. Durch die Kombination beider Techniken lässt sich oftmals die Erdölausbeute erhöhen. Beispiele geeigneter Tenside zum Tensidfluten umfassen Sulfatgruppen, Sulfonatgruppen, Polyoxyalkylengruppen, anionisch modifizierten Polyoxyalkylengruppen, Betaingruppen, Glucosidgruppen oder Aminoxidgruppen aufweisende Tenside, wie beispielsweise Alkylbenzolsulfonate, Olefinsulfonate oder Amidopropylbetaine. Bevorzugt können anionische und/oder betainische Tenside eingesetzt werden.

Dem Fachmann sind Einzelheiten zur technischen Durchführung des "Polymerflutens" und des "Tensidflutens" bekannt, und er wendet je nach Art der Lagerstätte eine entsprechende Technik an. Es ist selbstverständlich auch möglich die oben genannten Tenside direkt in den erfindungsgemäßen Zusammensetzungen einzusetzen.

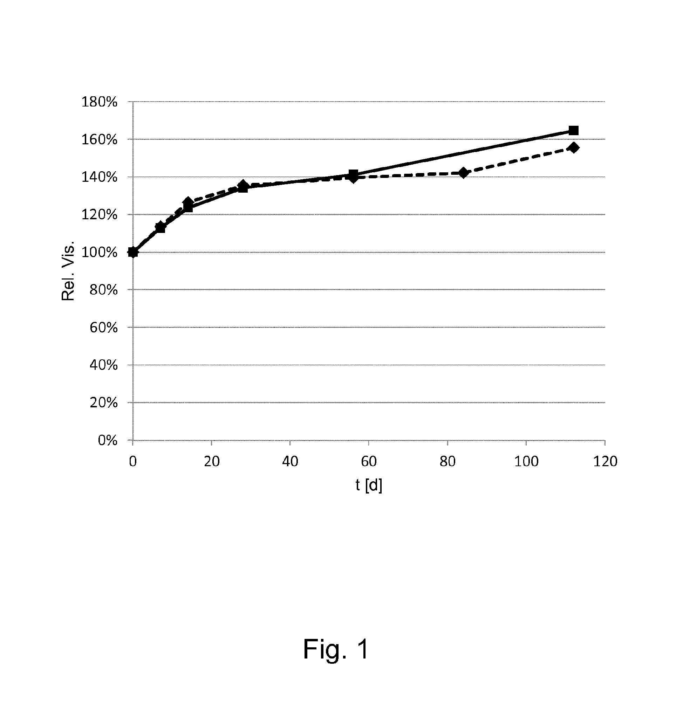

Figur 1 beschreibt die Langzeittemperaturstabilität der erfindungsgemäßen Zusammensetzungen, die wie in Beispiel 4 beschrieben bestimmt wurde. Die ausgefüllten Quadrate (■) zeigen die relative Viskosität (Rel. Vis.) einer wässrigen Lösung eines Acrylamid-Polymeren, welches mittels Zugabe des Stabilisators PMP vor der Polymerisation hergestellt wurde (Versuch 3.5 gemäß Beispiel 3), in Abhängigkeit der Lagerdauer bei 80 °C in Tagen (d). Die ausgefüllte Rauten (◆) zeigen die relative Viskosität (Rel. Vis.) einer Polymerlösung, welche durch Mischen von PMP und einem unabhängig davon produzierten Acrylamid-Polymer erhalten wurde, in Abhängigkeit der Lagerdauer bei 80 °C in Tagen (d).

Die vorliegende Erfindung wird durch die nachfolgenden Beispiele näher erläutert.

### Beispiele

### Beispiel 1: Herstellung und Testung der Zusammensetzungen mit PMP

Eine wässrige Lösung von 1000 ppm eines Acrylsäure/Acrylamid-Copolymers (Aspiro® P 4201 der Firma BASF, Acrylamid/Acrylsäure Copolymer, 20-30% Anionizität, M_{w} ∼15-20 Mio g/mol) in Leitungswasser wurde mit der entsprechenden Kombination aus Radikalfänger und Opferreagenz versetzt. Anschließend wurde die Lösung in ein Reagenzglas übergeführt. Das Reagenzglas wurde anschließend durch Abschmelzen verschlossen. Die Proben wurden in einem Ofen bei 80°C für ein bis sechs Wochen gelagert.

Als erfindungsgemäßer Stabilisator S wurde 1,2,2,6,-Pentamethyl-4-piperidinol (PMP) verwendet. Als Vergleichsbeispiele wurden Zusammensetzungen mit den bekannten Stabilisatoren Natrium-2-mercaptobenzthiazol (NaMBT) und Natriumthiocyanat (NaSCN) verwendet. Die Einsatzkonzentrationen sind in Tabelle 1 zusammengestellt. Als Opferreagenz wurden bei den Versuchen 3 bis 7 2-Propanol in einer Menge von 200 ppm zugegeben.

In den Versuchen 1 sowie 3 bis 7 wurde die Zusammensetzung weder inertisiert noch wurde ein Sauerstofffänger zugesetzt. Lediglich in Versuch 2 wurde die Polymerlösung zu Vergleichszwecken vor der Lagerung mit Stickstoff N₂ inertisiert.

Die folgende Tabelle 1 zeigt die Viskositätswerte der Polymerlösungen in mPas (gemessen mit Brookfield LV mit UL-Adapter bei 6 rpm, 25°C) nach den entsprechenden Lagerungen. Es wurden jeweils 3 Tests unter gleichen Bedingungen durchgeführt; die erhaltenen Werte wurden gemittelt. Die Ergebnisse sind in der folgenden Tabelle 1 zusammengefasst.

**Tabelle 1: Zusammensetzungen und Viskositätswerte [in mPas] nach Lagerung - PMP**

| Versuch-Nr. | 1 Vergleichsversuch | 2 Vergleichsversuch | 3 Vergleichsversuch | 4 Vergleichsversuch | 5 Vergleichsversuch | 6 Vergleichsversuch | 7 |
|---|---|---|---|---|---|---|---|
| Zusammensetzung | | inertlsiert | | | | | |
| NaMBT [ppm] | - | - | 20 | 50 | 100 | - | - |
| NaSCN [ppm] | - | - | - | - | - | 50 | - |
| PMP [ppm] | - | - | - | - | - | - | 50 |
| 2-Propanol [ppm] | - | - | 200 | 200 | 200 | 200 | 200 |
| Lagerzeit in Wochen | Viskosität [mPas] | Viskosität [mPas] | Viskosität [mPas] | Viskosität [mPas] | Viskosität [mPas] | Viskosität [mPas] | Viskosität [mPas] |
| 0 (Ausgangswert) | 30,3 | 28,6 | 30,8 | 30,7 | 30,7 | 30,9 | 30,1 |
| 1 | 15,1 | 32,3 | 33,2 | - | - | 30,3 | 35,1 |
| 2 | 10,3 | 25,6 | 33,7 | 11,4 | 11,8 | 30,2 | 36 |
| 4 | 11,3 | 22,1 | 4,9 | 7,3 | 8,1 | 11,4 | 38,1 |
| 6 | 5,1 | 13,7 | - | 5,0 | 5,3 | - | - |

Der Vergleichsversuch 1, bei dem keinerlei Stabilisatoren eingesetzt wurden, zeigt, dass die Viskosität der Polymerlösungen mit zunehmender Lagerdauer bei 80°C deutlich abnimmt. Der Viskositätsabbau lässt sich durch Inertisierung vermindern (siehe Vergleichsversuch 2).

Die aus dem Stand der Technik bekannten Stabilisatoren Mercaptobenzothiazol (MBT) und NaSCN zeigen zwar eine gewisse Verlangsamung bei kurzen Lagerzeiten, aber nach 6 Wochen ist die Viskosität ähnlich niedrig wie ohne Stabilisator. Interessanterweise lässt sich bei dem bekannten Stabilisator MBT auch durch eine Konzentrationserhöhung die stabilisierende Wirkung nicht verbessern.

In Versuch 7 unter Verwendung des erfindungsgemäßen Stabilisators S nimmt die Viskosität innerhalb des Testzeitraums nicht ab. Die leichte Zunahme der Viskosität kann durch die beginnende Hydrolyse von Acrylamideinheiten zu Acrylsäureeinheiten erklärt werden.

### Beispiel 2: Herstellung und Testung weiterer Zusammensetzungen

Analog zu Beispiel 1 wurden wässrigen Lösung eines Acrylsäure/Acrylamid-Copolymers mit den folgenden erfindungsgemäßen Stabilisatoren S (V4, V8, V9, V11, V13) bei einer Dosierung von jeweils 50 ppm hergestellt:

| | | |
|---|---|---|
| V4 | 1-Ethyl-2,2,6,6-tetramethyl-4-piperidinol | 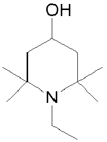 |
| V8 | 1-Acetyl-2,2,6,6-tetramethyl-4-piperidinol | 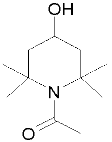 |
| V9 | 1-(2-Hydroxypropyl)-2,2,6,6-tetramethyl-4-piperidinol | 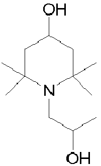 |
| V11 | 1-Allyl-2,2,6,6-tetramethyl-4-piperidinol | 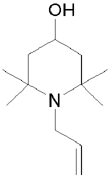 |
| V13 | 1-(2-Hydroxybutyl)-2,2,6,6-tetramethyl-4-piperidinol | 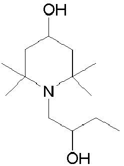 |

Die Stabilität der wässrigen Polymer-Lösungen wurde wie in Beispiel 1 beschrieben mittels Viskositätsmessungen untersucht. Die Ergebnisse sind in der folgenden Tabelle 2 zusammengefasst.

**Tabelle 2: Zusammensetzungen und Viskositätswerte [in mPas] nach Lagerung**

| Versuch-Nr. | 8 | 9 | 10 | 11 | 12 |
|---|---|---|---|---|---|
| Stabilisator | V4 | V11 | V13 | V8 | V9 |
| Lagerzeit in Wochen | Viskosität [mPas] | Viskosität [mPas] | Viskosität [mPas] | Viskosität [mPas] | Viskosität [mPas] |
| 0 Ausgangswert | 32,3 | 32,4 | 32,6 | 30,4 | 30,6 |
| 1 | 36,45 | 35,8 | 35,7 | 33,8 | 37,15 |
| 2 | 36,6 | 37,55 | 37,1 | 34,3 | 35,4 |
| 4 | 36,7 | 37,75 | 37,65 | 34,75 | 35,2 |
| 6 | 35,4 | 37,15 | 35,65 | 33,9 | 30,65 |

### Beispiel 3

### 3.1 Herstellung von Acrylamid-Copolymeren unter Zugabe von Stabilisator S

Im folgenden Beispiel wurden Acrylamid-Copolymere umfassend Acrylamid und Natriumacrylat (Monomer b2) unter Zugabe von Hydroxypentamethylpiperidin (PMP) als Stabilisators S hergestellt, wobei verschiedene Mengen an Hydroxypentamethylpiperidin (PMP) im Bereich von 0 bis 1 Gew.-% bezogen auf die Gesamtmenge der Monomere, zugegeben wurden. Die Polymerisation erfolgte jeweils mittels adiabatischer Gelpolymerisation. Die Copolymere wurden wie in Beispiel 3.2 beschrieben charakterisiert.

Im Folgenden ist die Versuchsdurchführung für die Zugabe von 1 Gew.-% Hydroxypentamethylpiperidin im Detail beschrieben:

In einem Plastikeimer mit Magnetrührer, pH-Meter und Thermometer wurden 112,8 g einer 35 %igen Lösung von Natriumacrylat vorgelegt und anschließend nacheinander 108,33 g destilliertes Wasser, 163,99 g Acrylamid (49,1 %ige Lösung), 1,2 g Trilon C (5%ige Lösung), 1,3 g Hydroxypentamethylpiperidin und 4 ml einer 4 %igen Lösung von 4,4'-Azobis(4-cyanovaleriansäure) (ACVA) zugegeben.

Nach Einstellen des pH-Wertes auf einen Wert von 6,5 mit 20 %iger bzw. 2 %iger Schwefelsäure und Zugabe des restlichen Wassers (Gesamtwassermenge abzüglich der bereits zugegebenen Wassermenge, abzüglich der benötigten Menge an Säure), wurde die Monomer-Lösung auf die Starttemperatur von 0°C eingestellt. Die Lösung wurde in eine Thermoskanne umgefüllt und es wurde ein Thermofühler für die Temperaturaufzeichnung angebracht. Die Lösung wurde 30 Minuten mit Stickstoff gespült und anschließend mit 1 ml einer 4%-igen Azo-bis-(isobutyronitril) (AIBN)-Lösung in Methanol, 0,1 ml einer 1%-igen tert-Butylhydroperoxid (t-BHP)-Lösung und 0,2 ml einer 1%igen Natriumsulfit-Lösung versetzt, um die Polymerisation zu starten.

Es wurde ein Gel-Block erhalten, der mit Hilfe eines Fleischwolfs zerkleinert wurde. Das erhaltene Gel-Granulat wurde in einen Wirbelschichttrockner bei 55 °C für zwei Stunden getrocknet. Man erhielt dabei ein weißes, hartes Granulat, welches mittels Zentrifugalmühle in einen pulverförmigen Zustand überführt wurde.

### 3.2 Charakterisierung der Acrylamid-Copolymere

Die unter 3.1 erhaltenen Acrylamid-Copolymere wurden wie nachfolgend beschrieben charakterisiert. Die Ergebnisse sind in der folgenden Tabelle 3 zusammengestellt.
i) Die Viskosität von Lösungen der Acrylamid-Copolymer in Leitungswasser mit einer Polymerkonzentration von 1.000 ppm wurde bei 25 °C gemessen. Dabei kam eine Scherrate von 7 s⁻¹ in einem Brookfield LV-DV II mit UL-Adapter oder einem Rheometer Haake RS 80 bzw. Anton Paar MCR 301 (beide Rheometer mit Doppelspaltgeometrie) zum Einsatz.
ii) Darüber hinaus wurde die Filtrierbarkeit mit Hilfe des MPFR-Wertes (Millipore filtration ratio) untersucht. Der MPFR-Wert (Millipore filtration ratio) gibt die Abweichung einer Polymerlösung von idealem Filtrationsverhalten an, wobei beim idealen Filtrationsverhalten keine Verringerung der Filtrationsgeschwindigkeit durch das Zusetzen des Filters erfolgt.
   Zur Bestimmung der MPFR-Werte wurden etwa 200 ml Polymerlösung mit einer Konzentration von 1.000 ppm bei einem Druck von 20 psi durch einen Polycarbonatfilter mit einer Porengröße von 5 µm filtriert. Dabei wurde zeitabhängig die Menge des Filtrats aufgezeichnet. Die Berechnung der MPFR-Wertes erfolgte gemäß der folgenden Formel: $MPFR = \left({t}_{180 g}-{t}_{160 g}\right) / \left({t}_{80 g}-{t}_{60 g}\right) ,$ mit t_{index} = Zeit zu der die angegebene Menge Filtrat gemessen wurde, d.h. t_{180g} ist die Zeit zu der 180 g Filtrat gemessen wurden. Gemäß API RP 63 ("Recommended Practices for Evaluation of Polymers Used in Enhanced Oil Recovery Operations", American Petroleum Institute) sind Werte kleiner 1,3 akzeptabel.
iii) Der Gelanteil der unter 3.1 erhaltenen Acrylamid-Copolymere wurde bestimmt, indem 1 l einer Polymerlösung mit einer Konzentration von 1.000 ppm über ein 200 µm Sieb gesiebt wurde und der verbliebenen Gelanteil auf dem Sieb bestimmt wurde.

**Tabelle 3: Charakterisierung der Acrylamid-Copolymere**

| Versuch-Nr. | Menge an PMP | Viskosität | MPFR | Gelanteil |
|---|---|---|---|---|
| | [Gew.-%] | [mPas] | | [ml] |
| 3.1 | 0% | 30 mPas | 1,28 | 1-2 |
| 3.2 | 1% | 30 mPas | 1,10 | 1 |
| 3.3 | 0,75% | 31 mPas | 1,16 | 1 |
| 3.4 | 0,5 % | 32 mPas | 1,11 | <1 |
| 3.5 | 0,35 % | 36 mPas | 1,07 | - |

Bei Versuch 3.1 handelt es sich um ein Vergleichsbeispiel, bei dem kein Stabilisator S (Hydroxypentamethylpiperidin (PMP)) zugegeben wurde. Die Menge an PMP in Gew.-% ist jeweils bezogen auf die Gesamtmenge der Monomeren.

Durch die Zugabe von 0,35 Gew.-% Stabilisator bei der Polymerisation wurde eine deutliche Zunahme der Viskosität des Acrylamid-Copolymers beobachtet. Bei höheren Zugabemengen an Stabilisator S blieb die Viskosität der erhaltenen Acrylamid-Copolymere in etwa gleich zu der Viskosität ohne Zugabe des Stabilisators S.

Sowohl der MPFR-Test als auch die Messung des Gelanteils zeigten, dass sich die unlöslichen Gelanteile im Acrylamid-Copolymer deutlich verringern lassen, wenn der Stabilisator S bereits vor der Polymerisation zu der Monomerlösung zugegeben wurde. Diese Variante führte also zu einer deutlichen Verbesserung der Eigenschaften des Acrylamid-Copolymers im Hinblick auf dessen Anwendung bei der tertiären Erdölförderung.

### Beispiel 4: Untersuchungen zur Langzeittemperaturstabilität

Die Langzeittemperaturstabilität des Acrylamid-Copolymers aus Versuch-Nr. 3.5 wurde im Vergleich zu einer Mischung aus Stabilisators PMP und Acrylsäure/Acrylamid-Copolymer, wobei die Mischung der beiden Komponenten nach der Herstellung des Copolymers erfolgte, evaluiert.

Es wurde eine wässrige Copolymer-Lösungen mit einer Polymerkonzentration von 1.000 ppm unter Verwendung des Acrylamid-Copolymeren aus Versuch 3.5 (Beispiel 3.1 und Tabelle 3) hergestellt. Zudem wurde eine wässrige Copolymer-Lösung mit einer Polymerkonzentration von 1.000 ppm unter Verwendung des Acrylsäure/Acrylamid-Copolymers gemäß Beispiel 1 unter Zugabe einer entsprechenden Menge an PMP hergestellt. Danach wurden die wässrige Lösung der Copolymer/Stabilisator-Mischung durch 30minütiges Spülen mit N₂ und Zugabe von 50 ppm Na₂SO₃ als Sauerstofffänger inertisiert.

Anschließend wurden die Lösungen in mehrere Reagenzgläser überführt. Die Reagenzgläser wurden anschließend durch Abschmelzen verschlossen. Die Proben wurden in einem Ofen bei 80°C für 1 bis 16 Wochen gelagert. In regelmäßigen Abständen wurden Reagenzgläser entnommen und die Viskosität mittels eines Brookfield LV mit UL-Adapter bei 6 rpm und 25°C gemessen. Es wurden jeweils 2 Tests unter gleichen Bedingungen durchgeführt; die erhaltenen Werte wurden gemittelt.

Die Ergebnisse sind in der Figur 1 dargestellt. Figur 1 zeigt die relative Viskosität (Rel. Vis.) der Polymerlösung in % (y-Achse) in Abhängigkeit zur Lagerzeit bei 80 °C in Tagen d (x-Achse). Die relative Viskosität gibt die Viskosität der Polymerlösung zur Zeit t im Verhältnis zur Viskosität zum Zeitpunkt t=0 an: $Rel . Vis . \left[%\right] = \left(Viskosität zum Zeitpunkt t/Viskosität zum Zeitpunkt t=0\right) * 100.$

Wie in der Figur 1 zu erkennen ist, ist die Langzeittemperaturstabilität des Acrylamid-Copolymers aus Versuch 3.5 (ausgefüllte Quadrate ■), welches mittels Zugabe des Stabilisators PMP vor der Polymerisation hergestellt wurde, genauso gut wie diejenige der Mischung aus PMP und dem unabhängig davon produzierten Copolymer (ausgefüllte Rauten ◆).

## Patentansprüche

1. Acrylamid-Polymer P, welches mindestens 10 Gew.-%, bezogen auf die Gesamtmenge aller Monomere im Acrylamid-Polymer P (Meth)acrylamid umfasst und mindestens ein Monomer (d) der Formel (I) 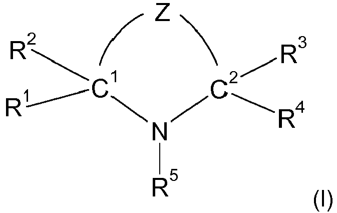 wobei die Reste die folgenden Bedeutungen haben:
Z ist ein bivalente Gruppe umfassend 2 bis 5 Atome und/oder Gruppen ausgewählt aus C(R⁶)₂, O, S, N-R' und C=O, wobei die Gruppe Z mit den Kohlenstoffatomen C¹, C² sowie dem Stickstoffatom N einen 5 bis 8-gliedrigen Ring bildet, wobei R' ausgewählt ist aus H, C₁₋₂₀-Alkyl, C₂₋₂₀-Alkenyl, C₆₋₂₀-Aryl, C₇₋₃₂-Arylalkyl, C₁₋₂₀-Hydroxyalkyl, C₁₋₂₀-Aminoalkyl, C₁₋₂₀-Cyanoalkyl, C₁₋₂₀-Haloalkyl, C₁₋₂₀-Sulfoalkyl und C₁₋₂₀-Phosphonoalkyl;
wobei R⁶ unabhängig voneinander ausgewählt ist aus H; OH; CN; C₁₋₂₀-Alkyl; C₂₋₂₀-Alkenyl; C₂₋₂₀-Alkinyl; C₆₋₂₀-Aryl; C₇₋₃₂-Arylalkyl; C₁₋₂₀-Alkoxy; C₁₋₂₀-Hydroxyalkyl; C₁₋₂₀-Aminoalkyl; C₁₋₂₀-Cyanoalkyl; C₁₋₂₀-Haloalkyl; Halogen; C₁₋₂₀-Sulfoalkyl; C₁₋₂₀-Phosphonoalkyl; -(CH₂-CH(R^{a})-O)_{q}-H mit q=1-20 und R^{a}=H oder C₁₋₆-Alkyl; -O-C(=O)R^{b} mit R^{b}= H, C₁₋₂₀-Alkyl, C₂₋₂₀-Alkenyl, C₂₋₂₀-Alkinyl, C₆₋₂₀-Aryl oder C₇₋₃₂-Arylalkyl; -O-C(=O)-(CH₂)ₘ-C(=O)-O-R^{c}; -O-C(=O)-Y-C(=O)-O-R^{c}, wobei m=1-10, R^{c}= H, C₁₋₂₀-Alkyl, C₂₋₂₀-Alkenyl, C₂₋₂₀-Alkinyl, C₆₋₂₀-Aryl, C₇₋₃₂-Arylalkyl oder 1,2,2,6,6-Pentamethyl-piperidin-4-yl und Y eine C₂₋₁₀-Alkenylengruppe ist; -O-R^{d} mit R^{d} = C₂₋₂₀-Alkenyl, C₂₋₂₀-Alkinyl, C₆₋₂₀-Aryl, C₇₋₃₂-Arylalkyl oder 1,2,2,6,6-Pentamethyl-piperidin-4-yl; -NR^{x}R^{y}, -N(R^{x})-C(=O)R^{y}; -N(R^{x})-C(=O)-Y-C(=O)-O-R^{y}; -N(R^{x})-(CH₂)ᵣ-NR^{y}R^{z}, wobei R^{x}, R^{y} und R^{z} unabhängig voneinander H, C₁₋₂₀-Alkyl, C₂₋₂₀-Alkenyl, C₂₋₂₀-Alkinyl, C₆₋₂₀-Aryl, C₇₋₃₂-Arylalkyl, C₁₋₂₀-Hydroxyalkyl, C₁₋₂₀-Aminoalkyl oder 1,2,2,6,6-Pentamethyl-piperidin-4-yl sind, r=1-10 und Y eine C₂₋₁₀-Alkenylengruppe ist; -(O-CH₂-CH(R^{e})-(CH₂)ᵢ)ₚ-O-R^{e'} mit p=1-20, i=0 oder 1, R^{e}=H, OH oder C₁₋₆-Alkyl und R^{e'}=H oder C₁₋₈-Alkyl; -S-R^{f}; -S-S-R^{f} mit R^{f}= H, C₁₋₂₀-Alkyl, C₂₋₂₀-Alkenyl, C₆₋₂₀-Aryl oder C₇₋₃₂-Arylalkyl;
oder wobei zwei Reste R⁶ zusammen mit dem Kohlenstoffatom, an das sie gebunden sind, einen Ring -C-(O-CH₂-CH₂-O)-, -C-(O-CH₂-CH₂-CH₂-O)-, -C-(O-C(CH₃)₂-C(CH₃)₂-O)- oder -C-(NH-C(=O)-NH-C(=O))- bilden;
R¹, R², R³ und R⁴ sind unabhängig voneinander ausgewählt aus C₁₋₂₀-Alkyl, C₂₋₂₀-Alkenyl, C₆₋₂₀-Aryl, C₇₋₃₂-Arylalkyl, C₁₋₂₀-Alkoxy, C₁₋₂₀-Hydroxyalkyl, C₁₋₂₀-Aminoalkyl oder C₁₋₂₀-Haloalkyl;
oder die Reste R¹ und R² zusammen mit C¹ oder die Reste R³ und R⁴ zusammen mit C² bilden einen Ring, der 5 bis 7 Kohlenstoffatome umfasst und der optional durch eine oder mehrere Gruppen R⁶ substituiert sein kann;
R⁵ ist H; C₁₋₂₀-Alkyl; C₂₋₂₀-Alkenyl; C₂₋₂₀-Alkinyl; C₆₋₂₀-Aryl; C₇₋₃₂-Arylalkyl; C₁₋₂₀-Alkoxy; C₄₋₈-Cycloalkoxy; C₁₋₂₀-Hydroxyalkyl; C₁₋₂₀-Aminoalkyl; C₁₋₂₀-Cyanoalkyl; C₁₋₂₀-Haloalkyl; C₁₋₂₀-Sulfoalkyl; C₁₋₂₀-Phosphonoalkyl; -(CH₂-CH(R^{a})-O)_{q}-H mit q=1-20 und R^{a}=H oder C₁₋₆-Alkyl; -O-C(=O)R^{b} mit R^{b}= H, C₁₋₂₀-Alkyl, C₂₋₂₀-Alkenyl, C₂₋₂₀-Alkinyl, C₆₋₂₀-Aryl oder C₇₋₃₂-Arylalkyl; -O-C(=O)-(CH₂)ₘ-C(=O)-O-R^{c}; -O-C(=O)-Y-C(=O)-O-R^{c}, wobei m=1-10, R^{c}= H, C₁₋₂₀-Alkyl, C₂₋₂₀-Alkenyl, C₂₋₂₀-Alkinyl, C₆₋₂₀-Aryl, C₇₋₃₂-Arylalkyl oder 1,2,2,6,6-Pentamethyl-piperidin-4-yl und Y eine C₂₋₁₀-Alkenylengruppe ist; -O-R^{d} mit R^{d} = C₂₋₂₀-Alkenyl, C₂₋₂₀-Alkinyl, C₆₋₂₀-Aryl, C₇₋₃₂-Arylalkyl oder 1,2,2,6,6-Pentamethyl-piperidin-4-yl; -(O-CH₂-CH(R^{e})-(CH₂)ᵢ)ₚ-O-R^{e'} mit p=1-20, i=0 oder 1, R^{e}=H, OH oder C₁₋₆-Alkyl und R^{e'}=H oder C₁₋₈-Alkyl; -C(=O)-R^{h} mit R^{h}= H, C₁₋₂₀-Alkyl, C₂₋₂₀-Alkenyl, C₆₋₂₀-Aryl oder C₇₋₂₀-Arylalkyl; 2,2,6,6-Tetramethyl-4-piperidinol-1-yl-alkyl oder 4-(2,2,6,6-Tetramethyl-4-piperidinol-1-yl-alkyl)benzyl,
wobei das Monomer (d) mindestens eine ungesättigte Bindung (C-C-Doppelbindung und/oder C-C-Dreifachbindung) umfasst.

2. Acrylamid-Polymer P gemäß Anspruch 1, **dadurch gekennzeichnet, dass** es sich bei dem Acrylamid-Polymer P um ein Copolymer handelt, welches weiterhin mindestens ein anionisches, monoethylenisch ungesättigtes, hydrophiles Monomer (b) umfassend mindestens eine saure Gruppe ausgewählt aus der Gruppe von -COOH, -SO₃H oder -PO₃H₂ bzw. deren Salze umfasst.

3. Acrylamid-Polymer P gemäß einem der Ansprüche 1 oder 2, **dadurch gekennzeichnet, dass** es sich bei dem Acrylamid-Polymer P um ein Copolymer handelt, welches zusätzlich mindestens ein monoethylenisch ungesättigtes, hydrophob assoziierendes Monomer (a) umfasst, wobei das Monomer (a) die folgende Struktur (IP) aufweist
H₂C=C(R^{1P})-R^{2P}-O-(-CH₂-CH(R^{3P})-O-)ₖ-(-CH₂-CH(R^{4P})-O-)ₗ-R^{5P} (IP),
mit
R^{1P} ist H oder eine Methylgruppe;
R^{2P} ist eine Einfachbindung oder eine zweiwertige, verknüpfende Gruppe, ausgewählt aus der Gruppe bestehend aus -(CₙH₂ₙ)-, -O-(C_{n'}H_{2n'})- und -C(O)-O-(C_{n"}H_{2n"})-, wobei n eine natürliche Zahl von 1 bis 6 ist und n' und n" jeweils eine natürliche Zahl von 2 bis 6 sind;
R^{3P} ist unabhängig voneinander H, Methyl oder Ethyl;
R^{4P} ist unabhängig voneinander ein Kohlenwasserstoffstoffrest von mindestens 2 Kohlenstoffatomen;
R^{5P} ist H oder einen Kohlenwasserstoffrest mit 1 bis 30 C-Atomen;
k ist eine Zahl von 10 bis 150;
l ist eine Zahl von 5 bis 25.

4. Acrylamid-Polymer P gemäß einem der Ansprüche 1 bis 3, **dadurch gekennzeichnet, dass** es sich bei dem Acrylamid-Polymer P um ein Copolymer handelt, welches zusätzlich mindestens ein kationisches Monomer der Struktur (KI) umfasst: 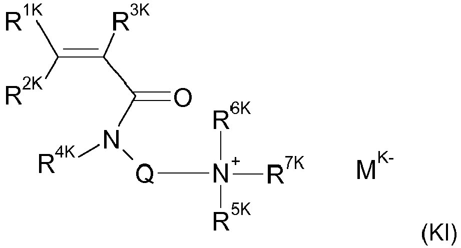 wobei die Reste und Indizes die folgenden Bedeutungen haben:
R^{1K}, R^{2K}, R^{3K}, R^{4K}, R^{5K}, R^{6K} sind unabhängig voneinander H oder C₁₋₄ Alkyl;
Q: ist C₁₋₈-Alkylen;
R^{7K}: ist ein C₈₋₃₀ Alkyl oder C₈₋₃₀-Arylalkyl;
M^{K}: ist ein Halogen ausgewählt aus Brom, Chlor, lod, Fluor oder ein Gegenion mit negativer Ladung.

5. Acrylamid-Polymer P gemäß einem der Ansprüche 1 bis 4, **dadurch gekennzeichnet, dass** in der Formel (I) die Reste die folgenden Bedeutungen haben:
Z ist ein bivalente Gruppe umfassend 2 bis 5 Gruppen ausgewählt aus C(R⁶)₂, N-R' und C=O, wobei die Gruppe Z mit den Kohlenstoffatomen C¹, C² sowie dem Stickstoffatom N einen 5 bis 8 gliedrigen Ring bildet, wobei R' ausgewählt ist aus H, C₁₋₁₈-Alkyl und C₁₋₁₈-Hydroxyalkyl;
wobei R⁶ ausgewählt ist aus H; OH; CN; C₁₋₂₀-Alkyl; C₁₋₂₀-Hydroxyalkyl; -O-C(=O)R^{b} mit R^{b}= H, C₁₋₂₀-Alkyl, C₂₋₂₀-Alkenyl, C₂₋₂₀-Alkinyl, C₆₋₂₀-Aryl oder C₇₋₃₂-Arylalkyl; -O-C(=O)-(CH₂)ₘ-C(=O)-O-R^{c}, wobei m=1-10, R^{c}= H, C₁₋₂₀-Alkyl, C₂₋₂₀-Alkenyl, C₂₋₂₀-Alkinyl, C₆₋₂₀-Aryl, C₇₋₃₂-Arylalkyl oder 1,2,2,6,6-Pentamethyl-piperidin-4-yl ist; -O-R^{d} mit R^{d} = C₂₋₂₀-Alkenyl, C₂₋₂₀-Alkinyl, C₆₋₂₀-Aryl, C₇₋₃₂-Arylalkyl oder 1,2,2,6,6-Pentamethyl-piperidin-4-yl; -NR^{x}R^{y}, wobei R^{x} und R^{y} unabhängig voneinander H, C₁₋₂₀-Alkyl, C₂₋₂₀-Alkenyl, C₆₋₂₀-Aryl, C₇₋₃₂-Arylalkyl, C₁₋₂₀-Hydroxyalkyl oder C₁₋₂₀-Aminoalkyl sind;
oder wobei zwei Reste R⁶ zusammen mit dem Kohlenstoffatom, an das sie gebunden sind, einen Ring -C-(O-CH₂-CH₂-O)-, -C-(O-CH₂-CH₂-CH₂-O)- , -C-(O-C(CH₃)₂-C(CH₃)₂-O)- oder -C-(NH-C(=O)-NH-C(=O))- bilden;
R¹, R², R³ und R⁴ sind unabhängig voneinander ausgewählt aus C₁₋₂₀-Alkyl, C₂₋₂₀-Alkenyl und C₇₋₃₂-Arylalkyl;
R⁵ ist H; C₁₋₂₀-Alkyl; C₂₋₂₀-Alkenyl; C₇₋₃₂-Arylalkyl; C₁₋₂₀-Hydroxyalkyl; C₁₋₂₀-Cyanoalkyl; C₁₋₂₀-Sulfoalkyl; C₁₋₂₀-Phosphonoalkyl; -(CH₂-CH(R^{a})-O)ₘ-H mit m=1-20 und R^{a}=H oder C₁₋₆-Alkyl; -C(=O)-R^{h} mit R^{h}= H, C₁₋₂₀-Alkyl, C₂₋₂₀-Alkenyl, C₆₋₂₀-Aryl oder C₇₋₂₀-Arylalkyl; 2,2,6,6-Tetramethyl-4-piperidinol-1-yl-alkyl oder 4-(2,2,6,6-Tetramethyl-4-piperidinol-1-yl-alkyl)benzyl.

6. Acrylamid-Polymer P gemäß einem der Ansprüche 1 bis 5, **dadurch gekennzeichnet, dass** das mindestens eine Monomer (d) ausgewählt ist aus Verbindungen der Formeln (II) bis (IV): 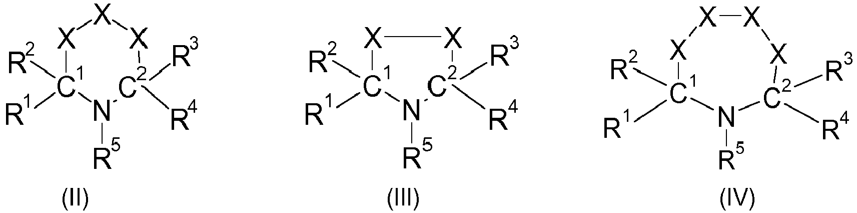 wobei X unabhängig voneinander eine Gruppe ausgewählt aus C(R⁶)₂, N-R' und C=O ist, und wobei die Reste R¹, R², R³, R⁴, R⁵, R⁶ und R' die Bedeutungen gemäß Anspruch 1 haben.

7. Acrylamid-Polymer P gemäß einem der Ansprüche 1 bis 6, **dadurch gekennzeichnet, dass** das mindestens eine Monomer (d) ausgewählt ist aus Verbindungen der Formeln (X1) bis (X5): 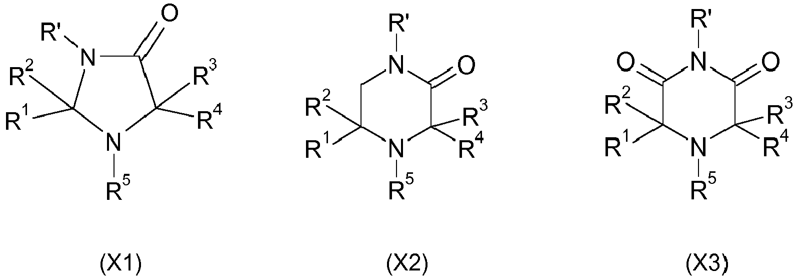 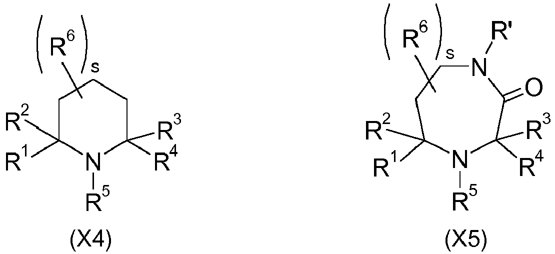 wobei die Reste R¹, R², R³, R⁴, R⁵, R⁶ und R' die Bedeutungen gemäß Anspruch 1 haben und s eine Zahl von 0 bis 6 ist.

8. Acrylamid-Polymer P gemäß einem der Ansprüche 1 bis 7, **dadurch gekennzeichnet, dass** das mindestens eine Monomer (d) genau eine C-C-Doppelbindung oder C-C-Dreifachbindung enthält.

9. Acrylamid-Polymer P gemäß einem der Ansprüche 1 bis 8, **dadurch gekennzeichnet, dass** das mindestens eine Monomer (d) genau eine endständige C-C-Doppelbindung oder C-C-Dreifachbindung enthält.

10. Acrylamid-Polymer P gemäß einem der Ansprüche 1 bis 9, **dadurch gekennzeichnet, dass** das mindestens eine Monomer (d) genau eine endständige C-C-Doppelbindung enthält.

11. Acrylamid-Polymer P gemäß einem der Ansprüche 1 bis 10, **dadurch gekennzeichnet, dass** das mindestens eine Monomer (d) ausgewählt ist aus: 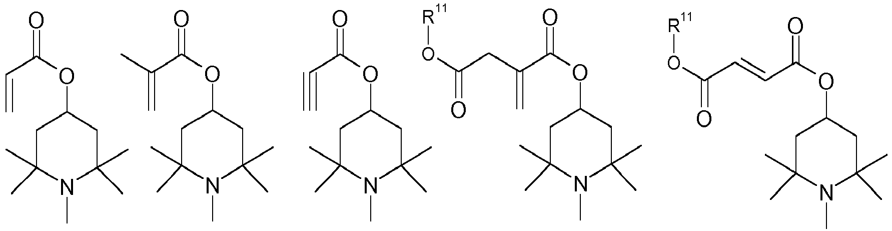 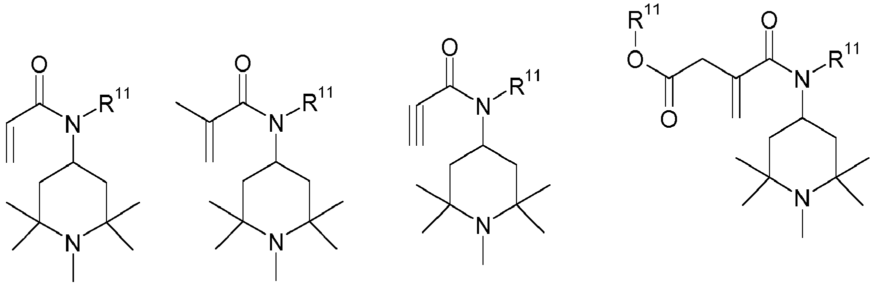 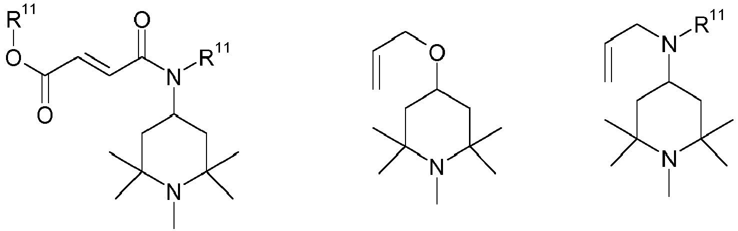 mit R¹¹ = H; Ci-s-Alkyl oder 1,2,2,6,6-Pentamethyl-piperidin-4-yl.

12. Acrylamid-Polymer P gemäß einem der Ansprüche 1 bis 11, **dadurch gekennzeichnet, dass** die Menge des mindestens einen Monomers (d) bis zu 14,9 Gew. %, bevorzugt bis zu 9,9 Gew. %, besonders bevorzugt bis zu 4,9 Gew. %, jeweils bezogen auf die Gesamtmenge aller Monomere beträgt.

13. Acrylamid-Polymer P gemäß einem der Ansprüche 1 bis 12, **dadurch gekennzeichnet, dass** die Menge des mindestens einen Monomers (d) von 0,01 bis 14,9 Gew.-%, bevorzugt 0,1 bis 4,9 Gew.-%, beträgt.

14. Verwendung eines Acrylamid-Polymers P gemäß einem der Ansprüche 1 bis 13 bei der tertiären Erdölförderung.

15. Verfahren zur Erdölförderung, bei dem man eine wässrige Formulierung umfassend mindestens ein Acrylamid-Polymer P nach einem der Ansprüche 1 bis 13 durch mindestens eine Injektionsbohrung in eine unterirdische Formation einpresst und der unterirdischen Formation durch mindestens eine Produktionsbohrung Rohöl entnimmt.
